# EUROPEAN PATENT SPECIFICATION

(11) **EP 2 761 522 B1**
(45) Date of publication and mention of the grant of the patent: **22.06.2016**
(21) Application number: 12773179.2
(22) Date of filing: 28.09.2012
(51) Int. Cl.: H04L 29/06, G06F 7/04

(54) **OAUTH FRAMEWORK**
OAUTH-RAHMEN
STRUCTURE OAUTH

(30) Priority: 29.09.2011 US 201161541026 P
(43) Date of publication of application: 06.08.2014
(73) Proprietor: Oracle International Corporation, Redwood Shores, CA 94065 (US)
(72) Inventor: SRINIVASAN, Venkataraman Uppili, Fremont, CA 94539 (US); ANGAL, Rajeev, San Jose, CA 95129 (US); SONDHI, Ajay, San Jose, CA 95136 (US); BHAT, Shivaram, Sunnyvale, CA 94087 (US)
(74) Representative: Gill Jennings & Every LLP
(86) International application number: PCT/US2012/057754
(87) International publication number: WO 2013/049461

(56) References cited:
- EP-A1- 2 257 026
- US-A1- 2006 206 931
- MORTIMORE C ET AL: "OAuth 2.0 Assertion Profile; draft-ietf-oauth-assertions-00.txt", OAUTH 2.0 ASSERTION PROFILE; DRAFT-IETF-OAUTH-ASSERTIONS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 July 2011 (2011-07-04), pages 1-14, XP015076865, [retrieved on 2011-07-04]
- NOUREDDINE M ET AL: "A provisioning model towards OAuth 2.0 performance optimization", CYBERNETIC INTELLIGENT SYSTEMS (CIS), 2011 IEEE 10TH INTERNATIONAL CONFERENCE ON, IEEE, 1 September 2011 (2011-09-01), pages 76-80, XP032328923, DOI: 10.1109/CIS.2011.6169138 ISBN: 978-1-4673-0687-4

## Description

### BACKGROUND

An identity management system is an information system, or a set of technologies that can be used for enterprise or cross-network identity management. Identity management describes the management of individual identities, their authentication, authorization, roles, and privileges within or across system and enterprise boundaries with the goal of increasing security and productivity while decreasing cost, downtime, and repetitive tasks. One aspect of identity management is "single sign-on" (SSO). One standard that is particularly useful in the field of identity management is OAuth.

SSO is a property of access control of multiple related but independent software systems. With this property, a user logs in once and gains access to all systems without being prompted to log in again at each of them. Conversely, single sign-off is the property whereby a single action of signing out terminates access to multiple software systems. As different applications and resources support different authentication mechanisms, single sign-on internally translates to and stores different credentials compared to what is used for initial authentication. SSO reduces phishing success, because users are not trained to enter passwords everywhere without thinking. SSO reduces password fatigue from different user name and password combinations. SSO reduces time spent re-entering passwords for the same identity. SSO reducing information technology (IT) costs due to a lower number of IT help desk calls about passwords. SSO provides security on all levels of entry/exit/access to systems without the inconvenience of re-prompting users. SSO also allows for centralized reporting for compliance adherence. SSO uses centralized authentication servers that all other applications and systems utilize for authentication purposes, and combines this with techniques to ensure that users do not have to actively enter their credentials more than once.

OAuth is an open standard for authorization. An indirect effect of authorization is authentication. OAuth allows users to share their private resources (e.g., photos, videos, contact lists, etc.) stored on one site with another site without having to hand out their credentials, typically supplying username and password tokens instead. Each token grants access to a specific site for specific resources and for a defined duration. This allows a user to grant a third party site access to their information stored with another service provider, without sharing their access permissions or the full extent of their data. For example, a token might grant access to a video editing site for videos from a specific album for the next two hours.

For example, in a typical scenario, a user of LinkedIn might be asked for permission to import, into LinkedIn, that user's contacts from Yahoo. LinkedIn might want to obtain these contacts in order to send e-mail messages inviting each of the user's contacts to join LinkedIn, for example. Prior to OAuth, this request for permission might have involved a request that the user provide, to LinkedIn, the user's Yahoo user identity and password. This information was requested so that LinkedIn could log-in to the user's Yahoo account as that user, and then obtain that user's contacts from that user's Yahoo account. Generally speaking, permitting LinkedIn (or any site) with the user's Yahoo (or any other site) identity and password is a bad idea because it grants the former site unlimited access to the user's account on the latter site. Such unlimited access is nearly always much more access than the former site actually requires to accomplish its goal, such as merely obtaining a contact list.

A better idea is to provide the former site with a limited authorization relative to the user's account on the latter site. The limited authorization may specify a specific set of operations that the former site can perform relative to the user's account on the latter site. For example, referring to the typical scenario above, the limited authorization might specify that LinkedIn can only access the user's contact list, but perform no other operations relative to the user's account, on Yahoo. OAuth allows for such limited authorization. OAuth provides delegation of authorization.

The technique by which OAuth delegates authorization may be understood relative to an analogy. Often, when a car owner temporarily relinquishes control of his car to a valet so that the valet can park the car for the owner, the owner does not provide a general-use master key to the valet, but instead provides a more limited-use valet key to the valet. The valet key permits the valet with sufficient access to drive the car, but does not provide the valet with access to everything that the owner possesses within the car. In the same manner, the use of OAuth may grant a first site access to a user's contact list stored by a second site, without also permitting the first site to perform other operations relative to the user's account on the second site-such as reading e-mail messages that might be stored on the second site, for example. OAuth allows the first site to be given a limited authorization to perform a specified set of operations, and no others, relative to the second site. EP2257026 discloses the possibility to delegate resource access control from the resource owner by providing a delegation token with which it can then grant access to resources to a client application.

For another example, a user might want to use a photo printing service provided by a first site, such as Snapfish, to print certain color photos that are electronically stored on a second site, such as Flickr, which is independent of the first site. More specifically, the user might want to print only the photos that are stored in a particular album on Flickr, such as an album containing photos from the user's recent visit to Alaska. Although the user might have a multitude of different albums stored on his Flickr account, the user might want to print only the photos from the Alaska album. Under such circumstances, the user probably prefers that Snapfish does not access the contents of any of his Flickr albums other than those contained within the Alaska album. In the foregoing scenario, using OAuth terminology, Snapfish is considered to be a client, and Flickr is considered to be a resource server (the photo data being the resources) as well as an OAuth authorization server. As the owner of the resources (e.g., photo data) stored by the resource server, the user is also a resource owner.

Given the example presented above, the user might first use his Internet browser application to instruct the client (e.g., Snapfish) to print the photos in the user's Alaska album on the resource server (e.g., Flickr). In response, the client (e.g., Snapfish) redirects the user to the site of the resource authorization server (e.g., Flickr). This redirection operation may indicate, to the resource server, the limited set of data (e.g., contents of the Alaska album) to which the client desires access. At that moment, the resource authorization server does not know who the user is, as the user has not yet authenticated himself to the resource authorization server. Therefore, the resource authorization server requires the user to authenticate. As is mentioned above, an indirect effect of authorization is authentication. After the user authenticates himself to the resource authorization server (e.g., by providing his username and password that are relevant to the resource authorization server), the resource authorization server sends a consent page to the user's Internet browser. The consent page asks the user to verify that the resource authorization server (e.g., Flickr) has the user's permission to provide a limited, specified set of data (e.g., contents of the Alaska album) to the client (e.g., Snapfish). Assuming that the user consents, the resource authorization server then responsively sends an authorization code to the client This authorization code may be sent through the "front channel;" or, in other words, via the user's Internet browser using a redirect.

In this scenario, the client (e.g., Snapfish) is a trusted partner of the authorization server (e.g., Flickr). The client receives the authorization code, or "grant," and stores the authorization code. The client maintains this authorization code indefinitely, until the user actively revokes that authorization code. The user may log-in to the OAuth authorization server in order to see a list of grants that the OAuth authorization server has provided on the user's behalf to various clients. In response to receiving the authorization code, the client (e.g., Snapfish) makes a "back channel" call to the authorization server (e.g., Flickr). A back channel call is a communication that does not involve the user's Internet browser. The back channel call requests an access token from the authorization server. The access token specifies the scope of the access that the client is permitted to the user's account on the authorization server. For example, the access token might indicate that the client is permitted access only to contents of the user's Alaska album. The authorization server sends the requested access token back to the client via the back channel. The client stores the access token. Thereafter, until the access token expires, or until the user revokes the grant (i.e., the authorization code), the client can present the access token to the resource server in order to access, on the resource server, the resources specified by the access token. If the user has already revoked the grant related to the access token, then the access token becomes ineffective even if the access token has not yet expired.

In addition to an access token, the authorization server may provide a "refresh token" to the client. While the access token often has a specified longevity after which it expires, a refresh token is a long-lived token. The client may store the refresh token along with the related access token. Thereafter, if the resource server objects that the client's current access token has expired, then the client may present the refresh token to the resource server in order to obtain a new access token from the resource server.

Beneficially, the approach employed by OAuth avoids the disclosure, to the client, of the user's password for the user's account on the resource server. The avoidance of this disclosure of credentials prevents the client from performing unauthorized actions relative to the user's account on the resource server. The only time that the user supplies his password is during the user's initial authentication directly with the resource server, after being redirected from the client's site.

### BRIEF SUMMARY

Embodiments of the present invention relate to identity management, authentication, and authorization frameworks. In one embodiment, a framework is provided for integrating Internet identities in enterprise identity and access management (IAM) infrastructures. According to another embodiment, a framework is provided for open authorization. There are so many different use cases for an OAuth system that a single approach does not always fit each use case. Therefore, embodiments of the invention make an OAuth system more flexible. Embodiments of the invention make an OAuth system easier for enterprise administrators of that system to customize for their own uses. Embodiments of the invention make an OAuth system more customizable by application and resource providers.

Traditionally, a resource server and an OAuth authorization server have been the same entity. According to an embodiment of the invention, a generic framework is provided that frees a resource server from the responsibilities of an OAuth authorization server. These responsibilities can include scope management, issuance of authorization tokens, issuance of refresh tokens, and issuance of access tokens. Thus, a generic OAuth authorization server can be implemented according to this generic framework. Consequently, each individual resource server does not need to implement its own proprietary OAuth authorization server. Indeed, according to an embodiment of the invention, multiple different resource servers can all concurrently make use of the functions of the same generic OAuth authorization server. For example, in an embodiment of the invention, a single OAuth authorization server can manage scopes for several different resource servers all at the same time. There can be a many-to-one relationship between resources servers and an OAuth authorization server.

In one embodiment of the invention, in order to achieve this ability to interact with multiple different resource servers, the generic OAuth authorization server maintains mapping data that indicates which tokens belong to which resource servers, who the trusted partners of each resource server are, etc. Furthermore, in an embodiment of the invention, the generic OAuth framework is constructed in such a manner that a resource server administrator can easily customize the framework to accommodate the particular use case for his resource server. Different resource server administrators can "plug-in" their specific components into the generic OAuth framework. Thus, in one embodiment of the invention, each resource server informs the generic OAuth authorization server regarding the potential scopes (i.e., limited operations relative to resources) that the resource server might use.

The foregoing, together with other features and embodiments will become more apparent upon referring to the following specification, claims, and accompanying drawings.

### BRIEF DESCRIPTION OF THE DRAWINGS

FIG. 1 is a block diagram illustrating an OAuth system architecture and logical components thereof, according to an embodiment of the invention.
FIG. 2 is a block diagram illustrating a resource server environment, according to an embodiment of the invention.
FIG. 3 is a block diagram illustrating an OAuth client environment, according to an embodiment of the invention.
FIG. 4 is a flow diagram illustrating a technique for registering a first resource server's metadata with a generic OAuth authorization server, according to an embodiment of the invention.
FIG. 5 is a flow diagram illustrating a technique for registering a second resource server's metadata with the generic OAuth authorization server, according to an embodiment of the invention.
FIG. 6 is a simplified block diagram illustrating components of a system environment that may be used in accordance with an embodiment of the present invention; and
FIG. 7 is a simplified block diagram of a computer system that may be used in accordance with embodiments of the present invention.

### DETAILED DESCRIPTION

In the following description, for the purposes of explanation, specific details are set forth in order to provide a thorough understanding of embodiments of the invention. However, it will be apparent that the invention may be practiced without these specific details.

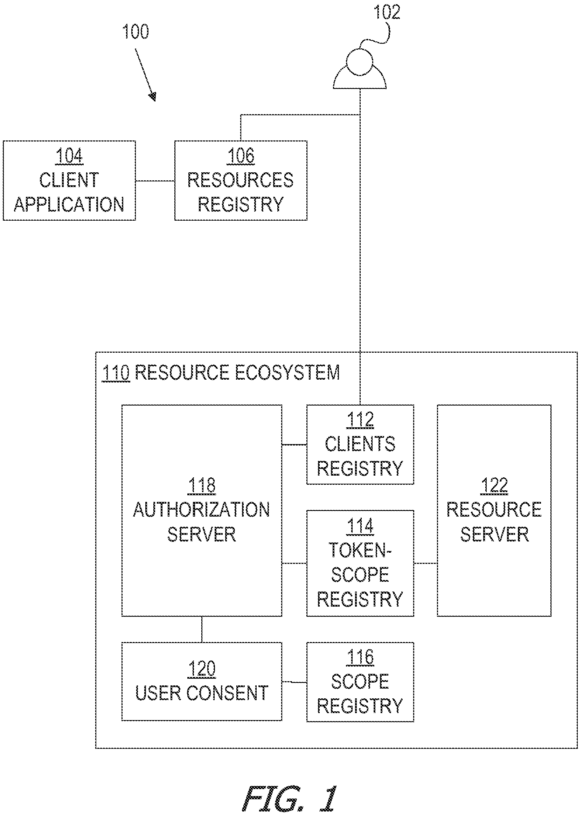

FIG. 1 is a block diagram illustrating an OAuth system architecture 100 and logical components thereof, according to an embodiment of the invention. Architecture 100 includes a resource owner (or user) 102, a client application 104, a resources registry 106, and a resource ecosystem 110. Resource ecosystem includes a clients registry 112, a token-scope registry 114, a scope registry 116, a user consent 120, and a resource server 122. Although one resource server 122 is shown, embodiments of the invention can include multiple separate resource servers. As seen from the connections in FIG. 1, client application 104 interacts with resources registry 106. Resource owner 102 interacts with resources registry 106 and with clients registry 112. Authorization server 118 interacts with clients registry 112, token-scope registry 114, and user consent 120. Resource server 122 interacts with token-scope registry 114. User consent 120 interacts with scope registry 116. Various of these components and their functions are discussed further below.

Embodiments of the invention can involve the delegation of authorization. Different resource use cases sometimes require different scope definitions. Different resources sometimes can rely on different authorization models and solutions. Different specific user actions can be required to give a client application consent to access resources maintained by different resource servers. Preferably, each different resource provider should not need to offer a separate proprietary OAuth authorization server to integrate with the specifics of that resource provider. The unfortunate result of each resource provider offering a separate proprietary OAuth authorization server would be that an enterprise wishing to integrate with multiple different resource providers and multiple different client form factors will have to deal with a myriad of different OAuth authorization server interfaces.

Therefore, in an embodiment of the invention, an generic OAuth framework architecture is provided. The framework can include OAuth wire protocol components (client and server), including metadata and runtime registries. The framework can include an infrastructure of pluggable "contracts" to customize and deploy application-specific solutions.

In one embodiment of the invention, resource server 122 stores, in token-scope registry 114, indications of the scopes that resource server 122 recognizes. Each such scope can be indicative of a different set of operations that can be performed relative to a different set of resources stored on resource server 122. Inasmuch as certain embodiments may include multiple different or separate resource servers, token-scope registry 114 can store mapping between different resource servers and different scopes. Furthermore, in one embodiment of the invention, each scope is mapped to a separate token within token-scope registry 114. Thus, by reference to token-scope registry 114, resource server 122 can determine the set of operations and the set of resources that are mapped to a particular token presented to resource server 122 by client application 104. Resource server 122 can limit the operations performed by client application 104 relative to resources maintained by resource server 122 to those operations specifically indicated by the set of operations mapped to the particular token.

Thus, in one embodiment of the invention, each particular resource server in a group of multiple resource servers provides, to the OAuth framework, a different set of metadata that indicates the scopes that can be mapped to tokens that can be used to access resources on that particular resource server. The scopes are therefore customizable by the administrators of the resource servers, making the OAuth framework flexible and applicable to many different use cases. Consequently, many different types of resource servers can all make use of the same generic OAuth framework without requiring the creation of a specific OAuth framework for each different type of resource server.

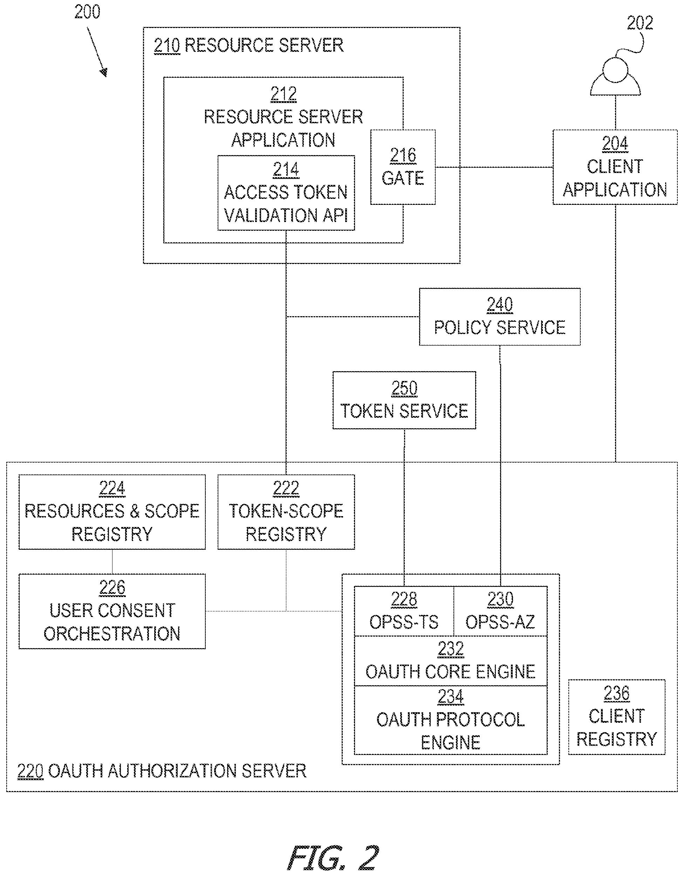

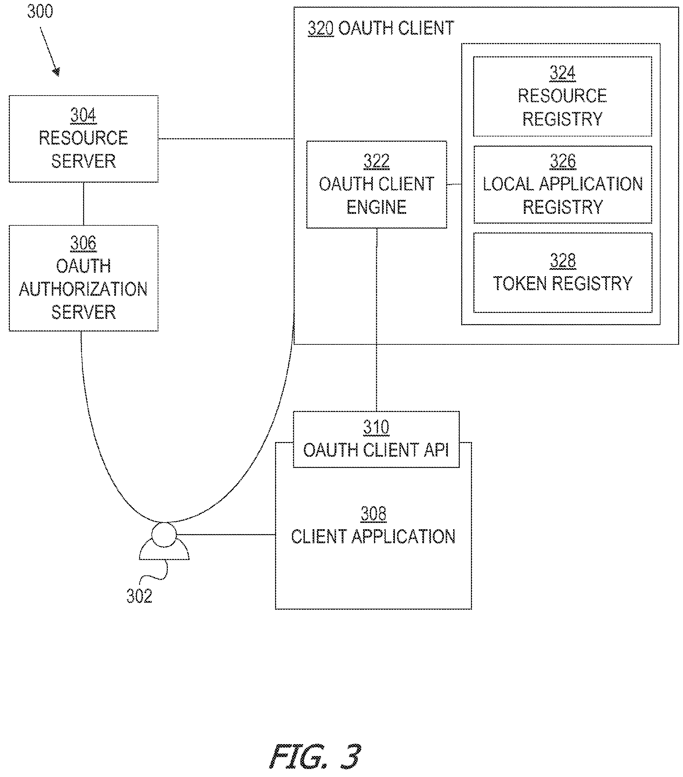

In an embodiment, the generic OAuth framework shown in FIG. 1 provides a basic conceptual structure. The OAuth framework can layer on top of existing identity management products. In the OAuth framework, contracts can define integration points with these existing products. The combination of the OAuth framework and contract implementations can fulfill miscellaneous use cases and deployment options. According to an embodiment, the OAuth framework includes two broad "roles": a consumer/client role, and an authorization server/resource server role. The authorization server/resource server role is discussed below with reference to FIG. 2, while the consumer/client role is discussed below with reference to FIG. 3.

FIG. 2 is a block diagram illustrating a resource server environment 200, according to an embodiment of the invention. In an embodiment of the invention, environment 200 includes resource owner (or user) 202, client application 204, resource server 210, OAuth authorization server 220, policy service 240, and token service 250. Resource server 210 incudes resource server application 212, which includes access token validation API 214 and gate 216. OAuth authorization server 220 includes token-scope registry 222, resources & scope registry 224, user consent orchestration 226, OPSS-TS (Oracle Platform Security Services-TS) 228, OPSS-AZ (Oracle Platform Security Services-AZ) 230, OAuth core engine 232, OAuth protocol engine 234, and client registry 236. In an embodiment, resource owner 202 interacts with client application 204 through gate 216, which accesses access token validation API 214. Client application 204 also interacts with OAuth authorization server 220. Access token validation API 214 interacts with token-scope registry 222 and with policy service 240. OPSS-TS interacts with token service 250. OPSS-AZ interacts with policy service 250. Components 228-234 collectively interact with token-scope registry 222 and with user consent orchestration 226. User consent orchestration 226 interacts with resources & scope registry 224.

In an embodiment of the invention, resources & scope registry 224 stores resource information, scopes, and miscellaneous metadata related to resources and services exposed via OAuth authorization server 220. In an embodiment of the invention, client registry 236 stores trust keys and secrets for authorized remote clients (e.g., client application 204). In an embodiment, token-scope registry 222 stores access tokens and refresh tokens that are issued to clients (e.g., client application 204) based on user (e.g., resource owner 202) consent In an embodiment, token-scope registry 222 stores AuthZ scope information that is associated with issued access tokens.

In an embodiment of the invention, resource server 210 registers its own metadata with OAuth authorization server 220. Different resource servers can register different metadata with the same OAuth authorization server. As part of the registration process, this metadata is imported into OAuth authorization server 220. The metadata indicates the various different scopes recognized by, or exposed by, resource server 210. Each scope specifies a different subset of the resources maintained by resource server 210. In an embodiment of the invention, at the time of registration, each scope recognized by resource server 210 is mapped to resource server 210 (only) in resources & scope registry 224. Thus, in an embodiment of the invention, resources & scope registry indicates, for each registered scope, the set of the corresponding resource server's resources that are accessible within that scope. A scope might indicate, for example, that only a particular photo is accessible, or that a particular folder of photos is accessible, or that a particular set of folders is accessible. A scope can indicate operations that are permissible relative to specified resources, such as read, update, delete, create, etc.

In an embodiment of the invention, OAuth authorization server 220 issues access tokens to client application 204. In an embodiment, for each such access token, OAuth authorization server 220 stores, in token-scope registry 222, a mapping between that access token and the particular scope (selected from among the scopes stored in resources & scope registry 224) that is assigned to that access token. Different access tokens for the same resource server may have different scopes assigned to them. Thus, when client application 204 presents an access token to OAuth authorization server 220, OAuth authorization server 220 may refer to token-scope registry 222 to determine the scope that is mapped to that access token, and then may refer to resources & scope registry 224 to determine the resources that are accessible within that scope.

In an embodiment of the invention, user consent from resource owner 202 is required in order for OAuth authorization server 220 to grant an access token to client application 204. For example, if client application 204 requests access to a particular resource (or a particular scope including that resource) from resource server 210, then resource server 210 may redirect the request to OAuth authorization server 220. OAuth authorization server 220 may invoke user consent orchestration 226 in order to ask resource owner 202 to verify that client application 204 should be granted access to the particular resource (or particular scope). In an embodiment, user consent orchestration 226 indicates, to resource owner 202, the scope to which client application 204 is seeking access, and provides resource owner 202 with the opportunity to consent to or decline access of that scope. More specifically, OAuth authorization server 220 may ask resource owner 220 to verify that client application 204 should be granted access specified by the particular scope (as indicated in resources & scopes registry 224), including the particular resource. In response to receiving consent from resource owner 202, OAuth authorization server 220 may generate an access token and store, in token-scope registry 222, a mapping between that access token and the particular scope. OAuth authorization server 220 can provide the access token to client application 204.

Client application 204 can then attempt to access the particular resource on resource server 210 by presenting the access token to resource server application 212. An agent on resource application server 212 can intercept the token and validate the token with OAuth authorization server 220 (e.g., via access token validation API 214) before allowing client application 204 to access the particular resource. If the particular resource that client application 204 attempts to access does not fall within the scope that is mapped the access token in token-scope registry 222 (e.g., if client application 204 attempts to access a folder that is outside of the scope of access to which resource owner 202 previously consented), then OAuth authorization server 220 will not validate the token, and resource server 210 will refuse to grant client application 204 access to the particular resource. Thus, scope of access is based on specific consent to that scope by resource owner 202. Resource owner 202 has the opportunity to refuse to give consent to a specific scope requested by client application 204, in which case OAuth authorization server 220 will not create an access token for client application 204. In one embodiment of the invention, each client application's request to access a resource maintained by resource server 210 also specifies a scope that is mapped to resource server 210 in resources & scope registry 224, and it is this specified scope for which the consent of resource owner 202 is requested as discussed above.

According to an embodiment of the invention, consistent with the discussion above, enforcement of access restrictions occurs at the time that client application 204 presents an access token to resource server 210. Enforcement requires an understanding of the scope that is encoded by the access token. Access tokens are issued by OAuth authorization server 220 per the scope definitions. Access tokens are validated per the scope that is encoded by the issued tokens. In one embodiment of the invention, policy service 240 and token service 250 in combination maintain the state of the access tokens that were issued and authorize issued access tokens. In an embodiment of the invention, a customer (i.e., owner and/or operator of resource server 210) can provide its own policy service 240 and token service 250. The OAuth framework may provide programmatic contracts, or programmatic interfaces, by which such customers can plug their own policy and token services into the OAuth framework in a manner that matches the scopes that those customers define. Each customer may publish its own set of scopes. The published set of scopes may indicate the form of the data that the customer's token service will return. The OAuth framework additionally may provide, to such customers, programming contracts or programmatic interfaces that permit policies to be created at the time of token issuance. These programmatic contracts or programmatic interfaces allow customers to plug their own custom programmatic code into the OAuth framework. Using these programmatic interfaces, a customer can wire its existing infrastructure into the OAuth system. In an embodiment, a customer that publishes its set of scopes is responsible for ensuring that its token and/or policy services return tokens that include scope information that is consistent with the published scopes. In response to client application 204 attempting to use a token, OAuth authorization server 220 can invoke an application programming interface (API) that will look up the customer's policy and validate that token.

In an embodiment, the OAuth framework specifies the interfaces that the customer's code (e.g., the code for token service 250 and policy service 240) needs to implement in order to interface with OAuth authorization server 220. The interfaces may be published so that customers are aware of the parameters that each interface expects to receive and the values that each interface expects to return. When client application 204 makes a request of OAuth authorization server 220, OAuth authorization server 220 makes responsive calls to the APIs related to that request. These calls may involve calls to customer-coded components that generate access tokens and provide those access tokens to client application 204, for example. In one embodiment of the invention, OAuth authorization service 220 exposes the aforementioned programmatic contracts or programmatic interfaces in the form of OPSS-TS 228 and OPSS-AZ 230. The customer's own implementation of token service 250 can interface with OPSS-TS 228, while the customer's own implementation of policy service 240 can interface with OPSS-AZ 230. OAuth authorization server 220 may invoke separate APIs for access token creation and access token validation. The customer may implement custom programmatic code to perform each task. During validation, policies constructed during token creation can be accessed to determine whether the action that client application 204 seeks to perform relative to resources matches the policy that is encoded by the access token that client application 204 presents.

Additionally, in one embodiment of the invention, the customer's own implementation of user consent orchestration 226, which is invoked when client application 204 seeks an access token from OAuth authorization server 220, can be plugged into OAuth authorization server 220. Interfaces to resources & scope registry 224 and token-scope registry 222 may be provided to the customer so that the customer can design its implementation of user consent orchestration 226 to obtain data from components 222 and 224 for use in constructing the consent request.

In an embodiment of the invention, the mappings stored in resources & scope registry 224 indicate not only the subsets of resources that are included within each scope, but also the exclusive subsets of operations that are permitted to be performed by client application relative to those subsets of resources. For example, a particular mapping may indicate for a particular scope that read and update operations, but not create or delete operations, can be performed relative to a specified subset of resources (e.g., files, folders, directories, lists, profiles, images, documents, etc.) maintained on resource server 210. Thus, in one embodiment of the invention, the consent request discussed above specifies not only a subset of resources that are associated with a scope, but also a subset of operations that are associated with that scope. Consequently, resource owner 202 knows precisely the kinds of operations that he is giving consent for client application 204 to perform relative to the subset of resources within the consent-request-specified scope.

According to an embodiment of the invention, client application 204 requests resource access equivalent to one of the specific scopes that resource server 210 has registered with OAuth authorization server 220. Thus, in one embodiment of the invention, client application 204 is designed with an awareness of the specific scopes that will be registered for resource server 210. Because client application 204 may interact with resources maintained by a variety of different resource servers, the vendors of various resource servers may agree upon a standard set of scopes that their resource servers will register with OAuth authorization server 220, thereby easing the design task of the designers of client application 204 and other client applications.

In one embodiment of the invention, a client framework is provided in order to allow client applications, such as client application 204, to implement "hooks" for various different types of resource providers. For example, client application 204 might implement separate hooks for Google, Facebook, Yahoo, LinkedIn, etc. FIG. 3 is a block diagram illustrating an OAuth client environment 300, according to an embodiment of the invention. OAuth client environment 300 includes a resource owner 302, a resource server 304, an OAuth authorization server 306, a client application 308, and an OAuth client 320. Client application 308 includes an OAuth client API 310. OAuth client 320 includes an OAuth client engine 322, a resource registry 324, a local application registry 326, and a token registry 328. Resource server 304 and OAuth authorization server 306 interact with each other. Resource server 304 and OAuth client 320 interact with each other. OAuth authorization server 306 and OAuth client 320 interact with each other via resource owner 302 (e.g., through redirection accomplished by an Internet browser of resource owner 302). Resource owner 302 also interacts with client application 308. Client application 308 interacts with OAuth client engine 322 through OAuth client API 310. OAuth client engine 322 interacts with resource registry 324, local application registry 326, and token registry 328.

According to an embodiment of the invention, metadata regarding all of the different types of resource servers with which client application 308 may interact are stored within resource registry 324, enabling client application 308 to interact with a variety of different resource servers. Resource registry can indicate, for example, the different sets of scopes recognized by each different type of resource server. Consequently, client application 308 is able to request access corresponding to a particular scope recognized by resource server 304, and this particular scope may be specified in the consent request that OAuth authorization server 306 sends to resource owner 302 on behalf of client application 308. Resource providers can publish their OAuth standard-compliant scope specifications so that designers can populate resource registry 308 with the appropriate server-to-scope mappings for those providers' resource servers. In an embodiment, because resource registry 308 can be populated independently of client application 308, client application 308 does not need to be revised in order to interact with newly discovered resource servers; instead, developers can simply "plug-in" the new mappings for those resource servers into resource registry 324, with which client application 308 interacts.

Often, a complex website that acts as a resource provider or server is not a monolithic application. Often, instead, a complex website constitutes a variety of different applications. In an embodiment of the invention, local application registry 326 stores mappings between various different resource providers and the sets of applications that are offered or exposed by those resource providers. Each such application may be mapped in local application registry 326 to a separate Uniform Resource Locator (URL) for that application. In one embodiment of the invention, local application registry 326 stores trust keys to exercise the OAuth client role to access remote resources.

Typically, client application 308 is able to use a particular access token multiple times to access resources maintained by resource server 304 before that particular access token expires. In an embodiment of the invention, the access tokens that client application 308 obtains from OAuth authorization server 306 are stored within token registry 328. Inasmuch as client application 308 may interact with multiple different resource servers, token registry 328 can maintain mappings between access tokens and the different resource servers to which those access tokens pertain. Token registry 328 can store both access tokens and refresh tokens for various different remote resource servers (e.g., resource server 304) and scopes.

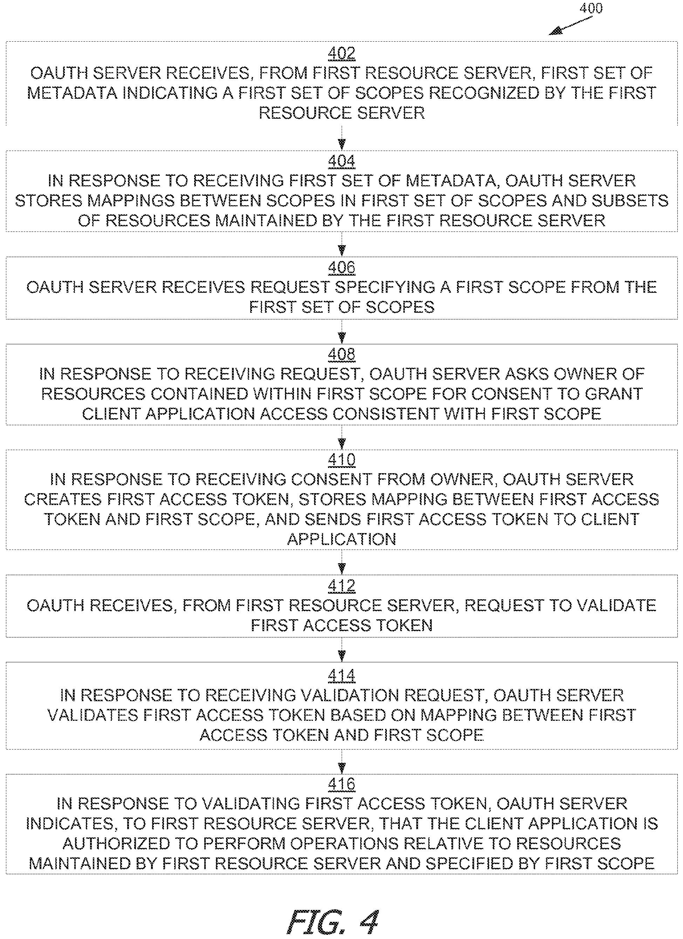

FIG. 4 is a flow diagram illustrating a technique 400 for registering a first resource server's metadata with a generic OAuth authorization server, according to an embodiment of the invention. Although technique 400 involves certain blocks or operations, alternative embodiments may involve more, fewer, or different operations than those illustrated. Furthermore, alternative embodiments may involve the performance of operations in an order different from that illustrated. In block 402, an OAuth authorization server receives, from a first resource server, a first set of metadata indicating a first set of scopes that are recognized by the first resource server. In block 404, in response to receiving the first set of metadata, the OAuth authorization server stores mappings between scopes in the first set of scopes and subsets of resources maintained by the first resource server. In one embodiment, in response to receiving the first set of metadata, the OAuth authorization server stores a mapping between a particular scope, a subset of resources stored by the first resource server, and a set of operations that a holder of a particular token mapped to the particular scope is permitted to perform relative to resources in the first subset of resources.

In block 406, the OAuth authorization server receives a particular request specifying a first scope from the first set of scopes. In block 408, in response to receiving the request specifying the first scope, the OAuth authorization server asks an owner of resources contained within the first scope for consent to grant a client application access consistent with the first scope. In block 410, in response to receiving the consent from the owner, the OAuth authorization server (a) creates a first access token, (b) stores a mapping between the first access token and the first scope, and (c) sends the first access token to the client application. In one embodiment, in response to receiving the consent from the owner, the OAuth authorization server invokes programmatic code provided by a customer (e.g., the owner of the first resource server) who does not provide the OAuth authorization server. The programmatic code implements an interface provided to the customer by a provider of the OAuth authorization server. The programmatic code creates the first access token.

In block 412, the OAuth authorization server receives, from the first resource server, a request to validate the first access token. In block 414, in response to receiving the request to validate the first access token, the OAuth authorization server validates the first access token based on the mapping between the first access token and the first scope. In one embodiment, in order to validate the first access token, the OAuth authorization server invokes programmatic code provided by a customer (e.g., the owner of the first resource server) who does not provide the OAuth authorization server. This programmatic code implements an interface provided to the customer by a provider of the OAuth authorization server. The programmatic code validates the first access token.

In block 416, in response to validating the first access token, the OAuth authorization server indicates, to the first resource server, that a client application that presented the first access token to the first resource server is authorized to perform operations relative to a set of resources that are maintained by the first resource server and specified by the first scope.

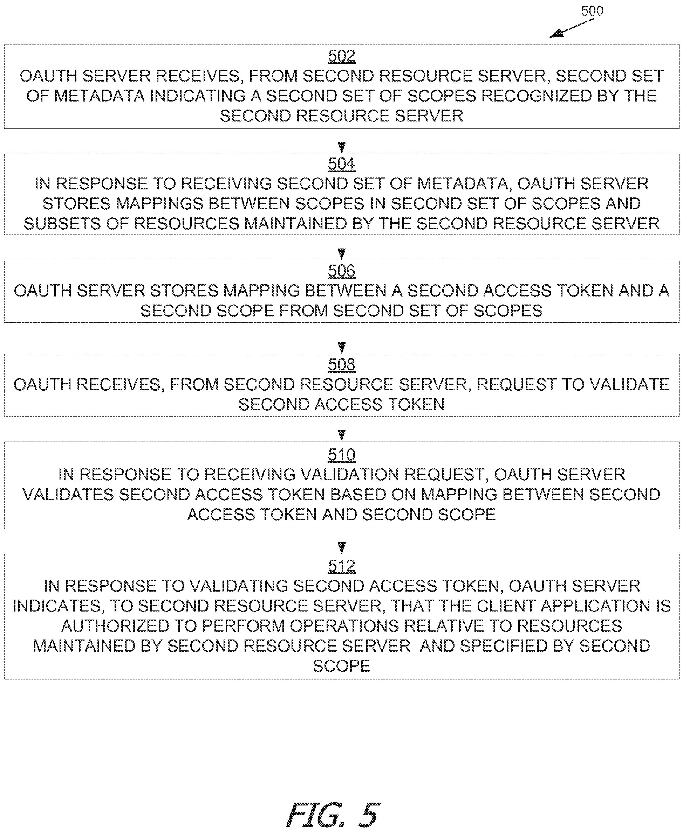

FIG. 5 is a flow diagram illustrating a technique for registering a second resource server's metadata with the generic OAuth authorization server, according to an embodiment of the invention. Although technique 500 involves certain blocks or operations, alternative embodiments may involve more, fewer, or different operations than those illustrated. Furthermore, alternative embodiments may involve the performance of operations in an order different from that illustrated. In block 502, the OAuth authorization server receives, from a second resource server that is separate from the first resource server (referenced in FIG. 4), a second set of metadata indicating a second set of scopes that are recognized by the second resource server, the second set of scopes differing from the first set of scopes (referenced in FIG. 4). In block 504, in response to receiving the second set of metadata, the OAuth authorization server stores mappings between scopes in the second set of scopes and subsets of resources maintained by the second resource server. In block 506, the OAuth authorization server stores a mapping between a second access token and a second scope from the second set of scopes. In block 508, the OAuth authorization server receives, from the second resource server, a request to validate the second access token. In block 510, in response to receiving the request to validate the second access token, the OAuth authorization server validates the second access token based on the mapping between the second access token and the second scope. In block 512, in response to validating the second access token, the OAuth authorization server indicates, to the second resource server, that a client application that presented the second access token to the second resource server is authorized to perform operations relative to a set of resources that are maintained by the second resource server and specified by the second scope.

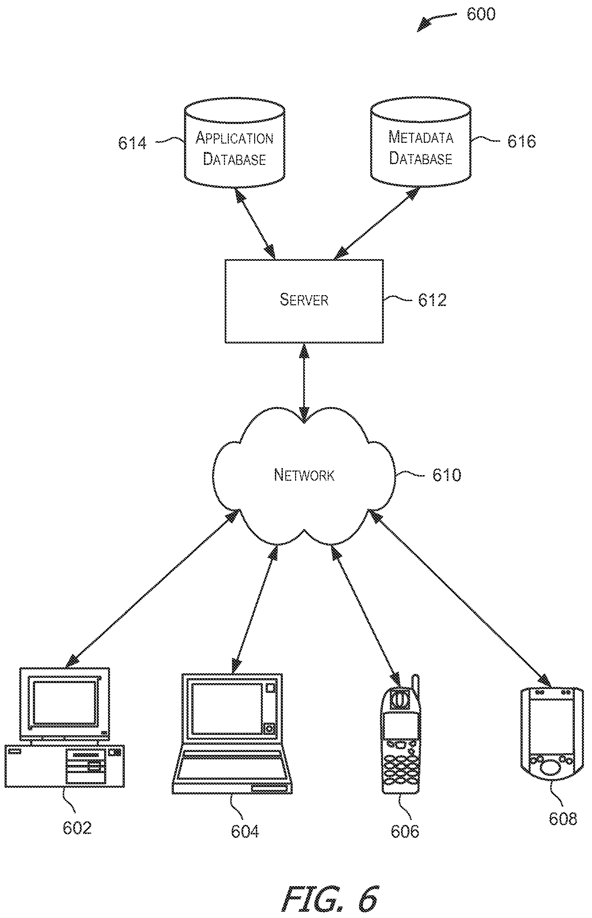

FIG. 6 is a simplified block diagram illustrating components of a system environment 600 that may be used in accordance with an embodiment of the present invention. As shown, system environment 600 includes one or more client computing devices 602, 604, 606, 608, which are configured to operate a client application such as a web browser, proprietary client (e.g., Oracle Forms), or the like. In various embodiments, client computing devices 602, 604, 606, and 608 may interact with a server 612.

Client computing devices 602,604,606,608 may be general purpose personal computers (including, by way of example, personal computers and/or laptop computers running various versions of Microsoft Windows and/or Apple Macintosh operating systems), cell phones or PDAs (running software such as Microsoft Windows Mobile and being Internet, e-mail, SMS, Blackberry, or other communication protocol enabled), and/or workstation computers running any of a variety of commercially-available UNIX or UNIX-like operating systems (including without limitation the variety of GNU/Linux operating systems). Alternatively, client computing devices 602, 604, 606, and 608 may be any other electronic device, such as a thin-client computer, Internet-enabled gaming system, and/or personal messaging device, capable of communicating over a network (e.g., network 610 described below). Although exemplary system environment 600 is shown with four client computing devices, any number of client computing devices may be supported. Other devices such as devices with sensors, etc. may interact with server 612.

System environment 600 may include a network 610. Network 610 may be any type of network familiar to those skilled in the art that can support data communications using any of a variety of commercially-available protocols, including without limitation TCP/IP, SNA, IPX, AppleTalk, and the like. Merely by way of example, network 610 can be a local area network (LAN), such as an Ethernet network, a Token-Ring network and/or the like; a wide-area network; a virtual network, including without limitation a virtual private network (VPN); the Internet; an intranet; an extranet; a public switched telephone network (PSTN); an infra-red network; a wireless network (e.g., a network operating under any of the IEEE 802.11 suite of protocols, the Bluetooth protocol known in the art, and/or any other wireless protocol); and/or any combination of these and/or other networks.

System environment 600 also includes one or more server computers 612 which may be general purpose computers, specialized server computers (including, by way of example, PC servers, UNIX servers, mid-range servers, mainframe computers, rack-mounted servers, etc.), server farms, server clusters, or any other appropriate arrangement and/or combination. In various embodiments, server 612 may be adapted to run one or more services or software applications described in the foregoing disclosure. For example, server 612 may correspond to a server for performing relying party and open authorization processing according to an embodiment of the present invention.

Server 612 may run an operating system including any of those discussed above, as well as any commercially available server operating system. Server 612 may also run any of a variety of additional server applications and/or mid-tier applications, including HTTP servers, FTP servers, CGI servers, Java servers, database servers, and the like. Exemplary database servers include without limitation those commercially available from Oracle, Microsoft, Sybase, IBM and the like.

System environment 600 may also include one or more databases 614, 616. Databases 614, 616 may reside in a variety of locations. By way of example, one or more of databases 614, 616 may reside on a non-transitory storage medium local to (and/or resident in) server 612. Alternatively, databases 614, 616 may be remote from server 612, and in communication with server 612 via a network-based or dedicated connection. In one set of embodiments, databases 614, 616 may reside in a storage-area network (SAN) familiar to those skilled in the art. Similarly, any necessary files for performing the functions attributed to server 612 may be stored locally on server 612 and/or remotely, as appropriate. In one set of embodiments, databases 614, 616 may include relational databases, such as databases provided by Oracle, that are adapted to store, update, and retrieve data in response to SQL-formatted commands.

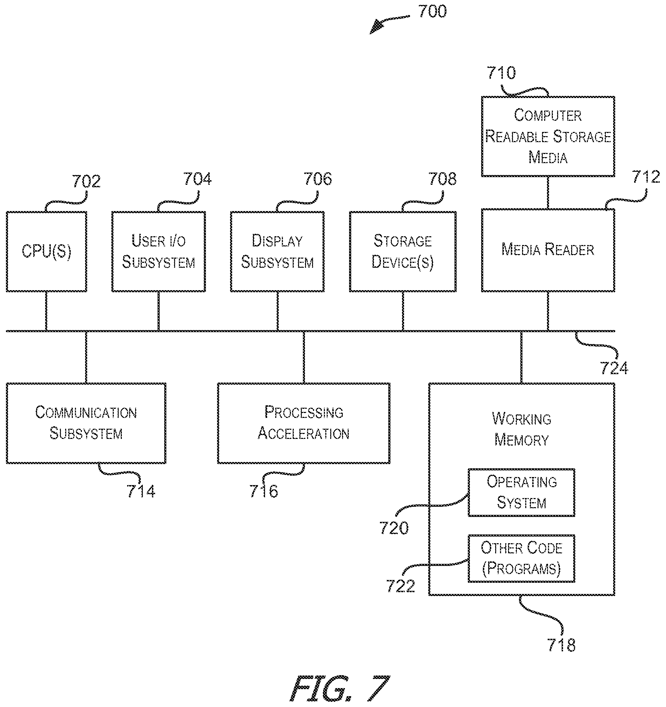

FIG. 7 is a simplified block diagram of a computer system 700 that may be used in accordance with embodiments of the present invention. For example server 602 may be implemented using a system such as system 700. Computer system 700 is shown comprising hardware elements that may be electrically coupled via a bus 724. The hardware elements may include one or more central processing units (CPUs) 702, one or more input devices 704 (e.g., a mouse, a keyboard, etc.), and one or more output devices 706 (e.g., a display device, a printer, etc.). Computer system 700 may also include one or more storage devices 708. By way of example, the storage device(s) 708 may include devices such as disk drives, optical storage devices, and solid-state storage devices such as a random access memory (RAM) and/or a read-only memory (ROM), which can be programmable, flash-updateable and/or the like.

Computer system 700 may additionally include a computer-readable storage media reader 712, a communications subsystem 714 (e.g., a modem, a network card (wireless or wired), an infra-red communication device, etc.), and working memory 718, which may include RAM and ROM devices as described above. In some embodiments, computer system 700 may also include a processing acceleration unit 716, which can include a digital signal processor (DSP), a special-purpose processor, and/or the like.

Computer-readable storage media reader 712 can further be connected to a computer-readable storage medium 710, together (and, optionally, in combination with storage device(s) 708) comprehensively representing remote, local, fixed, and/or removable storage devices plus storage media for temporarily and/or more permanently containing computer-readable information. Communications system 714 may permit data to be exchanged with network 1610 and/or any other computer described above with respect to system environment 1600.

Computer system 700 may also comprise software elements, shown as being currently located within working memory 718, including an operating system 720 and/or other code 722, such as an application program (which may be a client application, Web browser, mid-tier application, RDBMS, etc.). In an exemplary embodiment, working memory 718 may include executable code and associated data structures used for relying party and open authorization-related processing as described above. It should be appreciated that alternative embodiments of computer system 700 may have numerous variations from that described above. For example, customized hardware might also be used and/or particular elements might be implemented in hardware, software (including portable software, such as applets), or both. Further, connection to other computing devices such as network input/output devices may be employed.

Storage media and computer readable media for containing code, or portions of code, can include any appropriate media known or used in the art, including storage media and communication media, such as but not limited to volatile and non-volatile (non-transitory), removable and non-removable media implemented in any method or technology for storage and/or transmission of information such as computer readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, data signals, data transmissions, or any other medium which can be used to store or transmit the desired information and which can be accessed by a computer.

Although specific embodiments of the invention have been described, various modifications, alterations, alternative constructions, and equivalents are also encompassed within the scope of the invention. Embodiments of the present invention are not restricted to operation within certain specific data processing environments, but are free to operate within a plurality of data processing environments. Additionally, although embodiments of the present invention have been described using a particular series of transactions and steps, it should be apparent to those skilled in the art that the scope of the present invention is not limited to the described series of transactions and steps.

Further, while embodiments of the present invention have been described using a particular combination of hardware and software, it should be recognized that other combinations of hardware and software are also within the scope of the present invention. Embodiments of the present invention may be implemented only in hardware, or only in software, or using combinations thereof.

The specification and drawings are, accordingly, to be regarded in an illustrative rather than a restrictive sense. It will, however, be evident that additions, subtractions, deletions, and other modifications and changes may be made.

### APPENDIX

### BACKGROUND

Embodiments of the present invention relate to identity management, authentication, and authorization frameworks.

### BRIEF SUMMARY

Embodiments of the present invention relate to identity management, authentication, and authorization frameworks. In one embedment, a framework is provided for integrating Internet identities in enterprise identity and access management (IAM) infrastructures. According to another embodiment, a framework is provided for open authorization. A framework is also provided for relying part functionality.

The foregoing, together with other features and embodiments will become more apparent upon referring to the following specification, claims, and accompanying drawings.

### BRIEF DESCRIPTION OF THE DRAWINGS

Several drawings are included in this document.
Additionally, Fig. 1 is a simplified block diagram illustrating components of a system environment that may be used in accordance with an embodiment of the present invention; and
Fig. 2 is a simplified block diagram of a computer system that may be used in accordance with embodiments of the present invention.

### DETAILED DESCRIPTION

In the following description, for the purposes of explanation, specific details are set forth in order to provide a thorough understanding of embodiments of the invention. However, it will be apparent that the invention may be practiced without these specific details.

### APPENDIX

### Features:

### (1) Relying party Platform/Framework for integrating Internet Identities in existing enterprise identity and access management (IAM) infrastructures

Businesses, especially those with internet facing properties (web sites, ecommerce apps, mobile apps, etc) are looking to expand their user base towards achieving higher adoption and higher revenue. "Internet Identities" are user accounts held in public sites like Facebook, Google, Yahoo, etc.-these are a treasure trove of tens of millions of users. At the same time, enterprises have existing investments in IAM systems that are not equipped to handle these identities; both in terms of integrating with these varied technologies as well as the scale and security aspects of internet facing deployments. Some prior solutions are custom/ad hoc/peer-peer/slapped-on/expensive--"band aids" put together on enterprises. Some products provide some integration solutions but they are too tied to the product. Overall, prior solutions lack the extensibility, scalability and security to tackle the both the problems of coping with the changing internet environment as well as preserving investments in existing IAM solutions.

According to an embodiment of the present invention, a framework or platform is provided with the following features:
- Built-in connectors for well known internet identity providers (IDPs) such as Google, Yahoo, Face Book, LinkedIn, Twitter, et al.
- Standards based interfaces to integrate with compliant IDPs (OpenID, OAuth (open authorization), Security Access Markup Language (SAML), etc.).
- Built-in integrations for leading IAM vendors (such as Oracle, CA, IBM, others.)
- Extensibility via plug-in points layered on top of an abstract workflow/process flow to customize to meet specific deployment needs.

Example workflow process flows:
- User Authentication to IDPs leading to enterprise session creation at an appropriate level.
- Progressive User Registration.
- Policy based authentication up-leveling via integration with "local" authentication.

Embodiments provide several novel features including but not limited to features related to the framework, workflow/process based plug-ins, progressive and on Demand/Application driven User on boarding and authentication, and the like.

An embodiment of the present invention provides significant improvements over prior solutions. The abstract workflow/process model allows businesses to deal with the business use cases rather than technology expertise on product specifics. An embodiment of the present invention may be used in conjunction with various IAM solutions ranging from small (e.g., simple LDAP, JSESSIONID based) to large scale IAM deployments.

### (2) OAuth Framework

Businesses need to interact with several entities via the internet (customers, employees, partners, cloud services, etc.) to stay competitive and to grow. Recent advances in the social networking and user centric identity has resulted in companies coming together to create an open standard called OAuth to facilitate secure inter-domain communication between enterprises. Broadly, this standard covers point-to-point secure access to services and resources from one domain to another. The services/resources generally fall in the following categories:
- User controlled data - such as the user's calendar, photos, contact lists, etc.
- Enterprise controlled data - such as a CRM SaaS service, customer lists, user management service, user provisioning data, SLAs, etc
These services/resources may be hosted in-house or on the cloud.

OAuth 2.0 has gained tremendous popularity in recent couple of years for sharing data and resources over the wide-internet owing to its simplicity and internet scalability.

Prior solutions are based on "toolkits" provided by individual resource/service owners, typically a different one for every client form factor: mobile, web browser, web server, standalone application, etc. The problem is although OAuth is a standard, it is not an "interoperable" spec - hence each individual toolkit implements the protocol and interactions in its own specific manner. An enterprise wishing to integrate with multiple partners and in different client form factors therefore has a huge challenge to deal with a myriad of toolkits. Also, a good implementation needs a robust authorization model that is capable of handling fine grained and dynamic policies to ensure data security and its accountability (e.g., adapt to changing business relationships).

Some prior solutions are custom/ad hoc/peer-peer/slapped-on/expensive - "band aids" put together on enterprises that do not integrate well with existing enterprise IAM deployments. Overall, prior solutions lack the extensibility, scalability and security to tackle the both the problems of coping with the varied and ever changing internet environment as well as preserving investments in existing IAM solutions.

An embodiment of the present invention provides an OAuth framework or platform with the following features:
- Built-in connectors for well known internet resource and authorization servers such as Google Docs, Yahoo, Facebook, LinkedIn, Twitter, Salesforce.com, Oracle OD, Oracle Web Center, etc.
- Built-in integrations for leading IAM vendors (Oracle, CA, IBM, others).
- Extensibility via plug-in points layered on top of an abstract workflow/process flow to customize to meet specific deployment needs.

In one embodiment, the workflow process flows as follows:
- User Authorization leading to token issuance for resource/service access.
- Application driven access to remote services/resources.
- Policy based exposure of local resources/services to partner entities.
- Token lifecycle - user driven, admin driven, policy driven.

Embodiments provide several novel features including features related to Framework/Platform, Workflow/process based plug-in, OnDemand/Application driven resource access, and the like.

An embodiment of the present invention provides several improvements over prior solutions. The abstract workflow/process model allows businesses to deal with the business use cases rather than technology expertise on product specifics. An embodiment of the invention may be used with various IAM solutions ranging from small (e.g. simple LDAP, JSESSIONID based) to large scale IAM deployments.

Further details are described in the following sections/parts (Parts 1 through 7). The various parts below describe various embodiments; the description is not intended to be restrictive or limiting in nature.

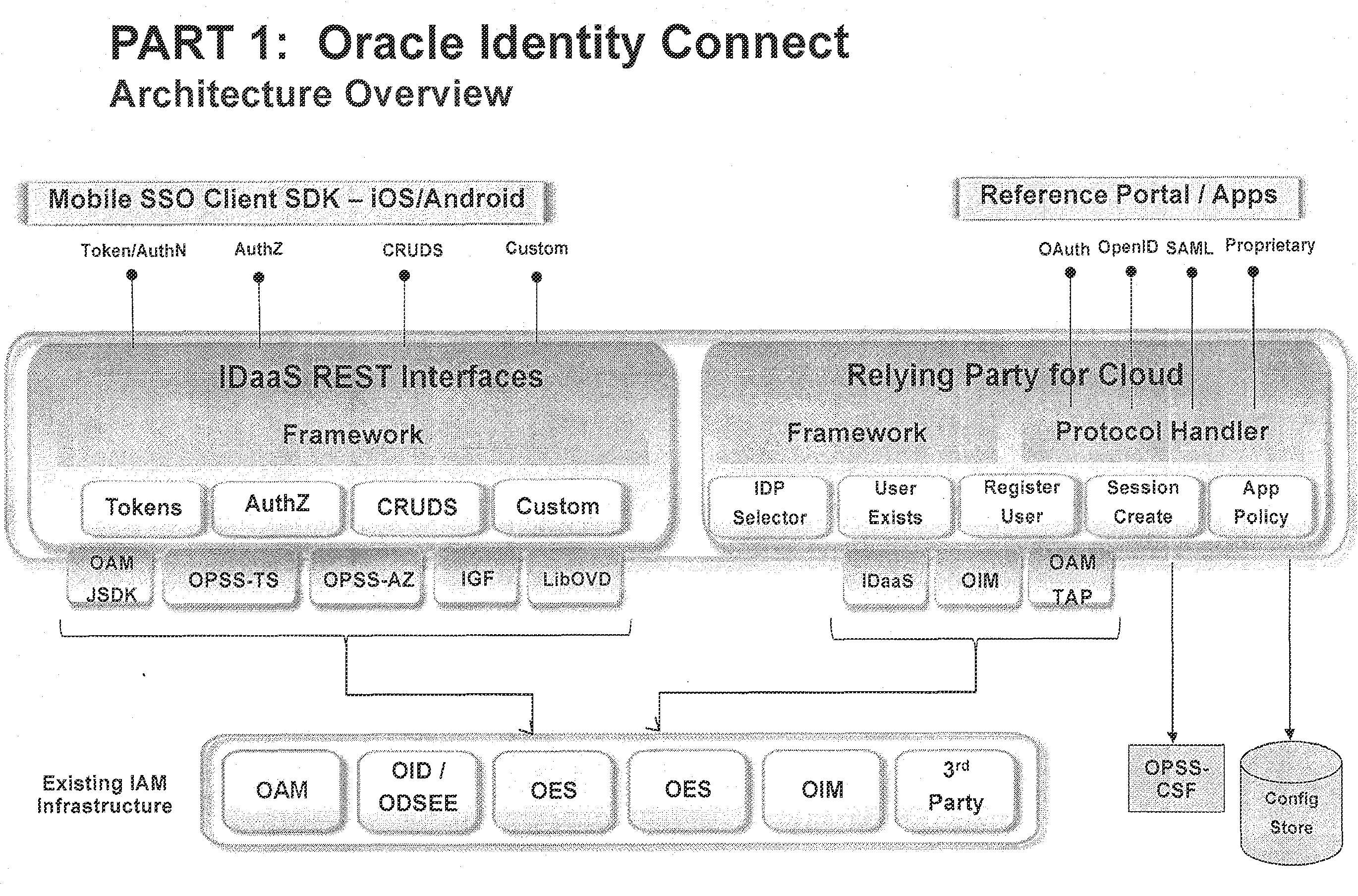

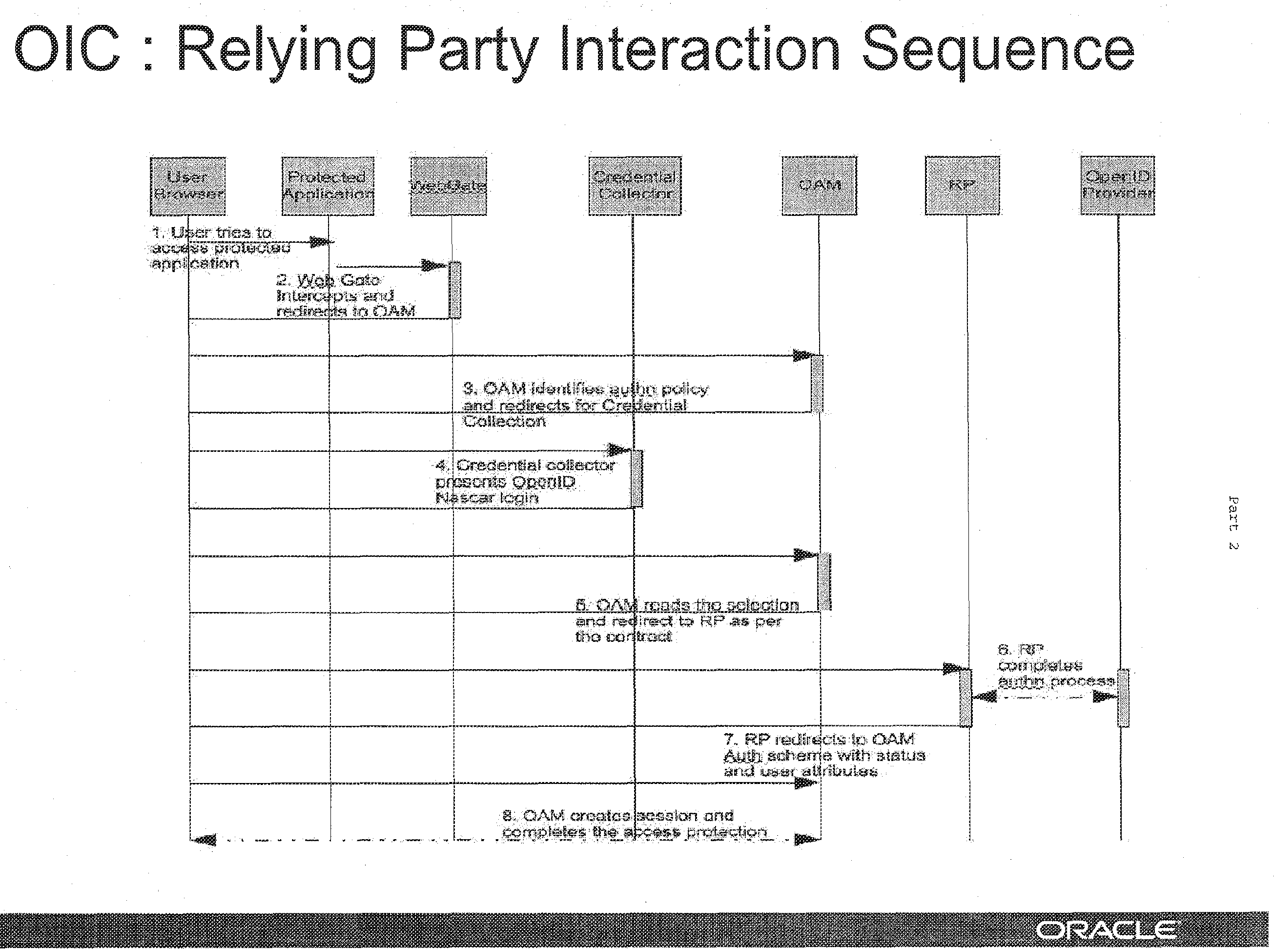

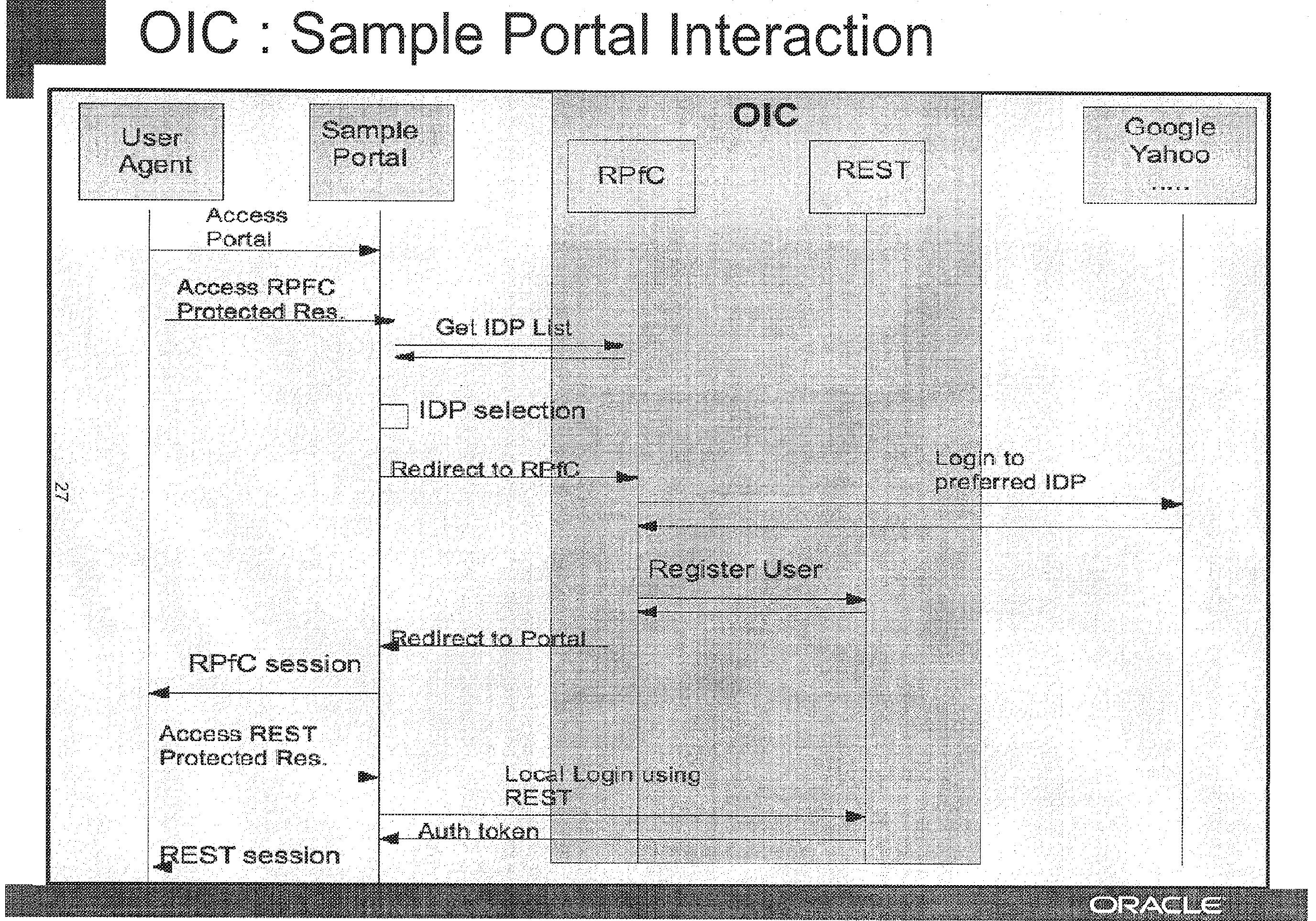

### PART 3

### Relying Party for the Cloud (RPC)

### Executive Overview

Relying Party for the Cloud is a system that facilitates customers to extend their extranet offerings to leverage the emerging Internet Identity.

Architected to enable both embedded native integration and loosely coupled deployment integration form factors:
✔ *API contracts for embedding and native integration with current and future IAM suite*
*✔ As a "drop-in" proxy with RESTful interfaces to non-intrusively extend existing web resources powered by existing IAM products (e.g., pre-Maple OAM, OIF, OpenSSO and OIM environments) as well as web sites where there is no prior Oracle IAM footprint*

### Key Business Use-case

*Enable customers to expand &extend their extranet service offerings to users from social media and popular communities on the Internet.*
*✔ Combine the convenience of user-centric experience with the robust Identity Management and sophisticated risk mitigation capabilities of the Oracle IAM platform*

### Terminology

- ***Relying Party***: Service Provider side application/system consuming user centric identity
- ***User Centric Identity protocols***: OpenID, OAuth, CardSpace (Information Cards), proprietary
- ***Internet IDP***: Identity Provider such as Google, Yahoo, Facebook, Twitter, Any compliant OpenID
- ***Modes of Integration* & *operation***: Deployment options of RP components - E.g.: Embedded or Proxy modes.

### Background

One of the key developments on the internet in the past few years is the exponential growth of "Internet Identities". These identities originated from users' choice of internet applications such as email (Gmail, Yahoo), social networking (Facebook, Twitter), blogs, communities (Linkedin), etc and overtime have evolved into "user centric" identities that allow the convenience of using the same identities to access other applications on the Internet. Gmail and Yahoo for example automatically provision OpenID for all users that allow this convenience- based on user consent of course.

Large enterprises with consumer facing internet properties - many of whom are Oracle IAM customers - see a huge opportunity here to expand their user base by extending this facility to their sites - thereby providing the much coveted initial "stickiness", leading to revenue growth and competitive edge.

These companies span industries - insurance, financial, retail, media, so on. Relying Party for the Cloud focuses on providing the necessary infrastructure pieces to enable these companies to leverage internet identities, yet preserve their investment in existing applications and AAA/IdM systems.

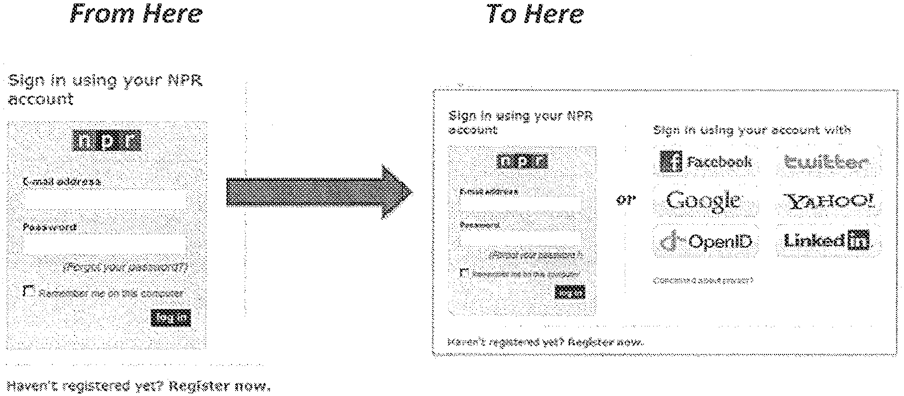

The above is a live site and this trend has become pervasive in a short time over the last year. Some of the other prominent ones are below.

### (Please navigate through the corresponding "Login" prompts)

• Kodak, Sears, National Geographic, Fox News, ..... etc. for more, visit Janrain.com

### Requirements and Design Center

The picture below illustrates the desired transition that customers seek: Going from locally managed and managed identity silos for their extranet customers to Internet integrated experience.
✔ Assert user-centric Internet Identity into OAM, OIF and OIM authentication flows
   ∘ Provide authentication choices to users
   ∘ Provide consent-driven authentication and attribute access
✔ Enable painless user on-boarding and progressive ID provisioning
   ∘ Integrate with customers existing user self registration Flow
   ∘ User on boarding and Attribute/AuthZ claims propagation
✔ Enable application specific policies
   ∘ Enable websites with multiple applications and services end points
   ∘ Application specific IDP choices and claims policies
✔ Enable Multi-protocol / Multi-provider use cases on the Internet
   ∘ User links multiple IDP associations against one site account
   ∘ User authenticates with an OpenID provider and consents to share information about group membership in Facebook via Facebook Connect
   ∘ User authenticates with OpenID and consents to provide OAuth access token to the site to enable access to a yet another OAuth enabled SP (given Site is an OpenID RP and an OAuth client.
   ∘ Co-existence with SAML in Service Provider Role (Proposal: via embedded Fedlet in RPC).

### Key Differences from Enterprise Flows

✔ User centric identity - user chooses how to authenticate vs Enterprise mandating it.
✔ Relatively lower level of authentication based on loose "social" context vs tighter biz relationships. It does not replace existing higher LOA authentication mechanisms for high value transactions.
✔ More focus on self-provisioned user registration - "lure the user in first...then make him/her sticky"
✔ Application centric - hence needs to be Lightweight & simple to deploy

### Deployment Architecture and Form Factor Requirements

✔ Implemented as a service component of the OAM-suite
✔ Extends the OAM-suite admin console
✔ 2 Modes of operation: Proxy mode, Embedded mode (Fedlet style)

**Some deployment scenarios are illustrated below.**

### Proxy mode - without AAA/IDM - typically standalone Web sites

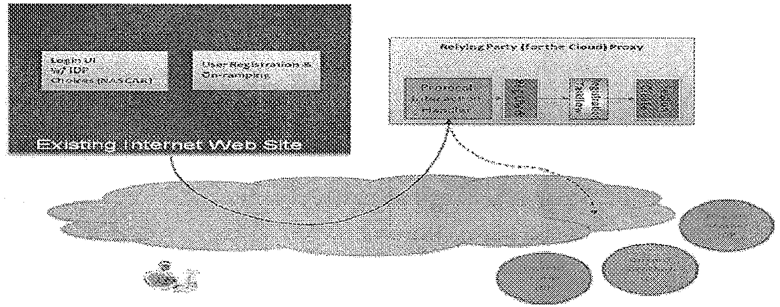

### Proxy mode - with AAA/IDM - typically a multi-application web site

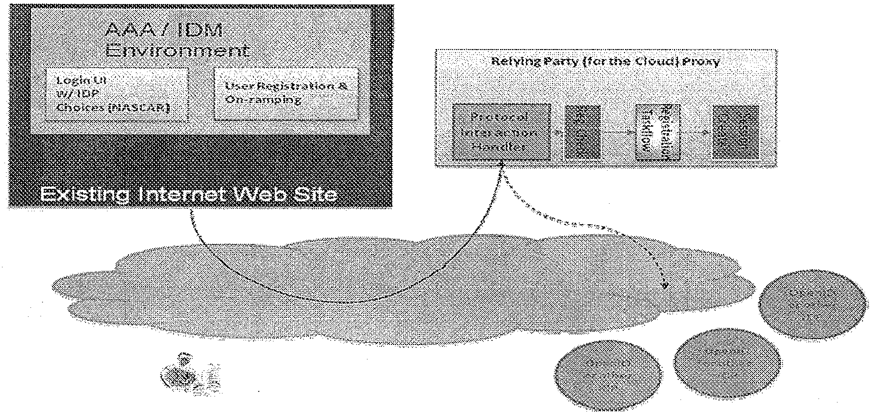

### Embedded mode - without AAA/IDM - typically standalone single application Web sites

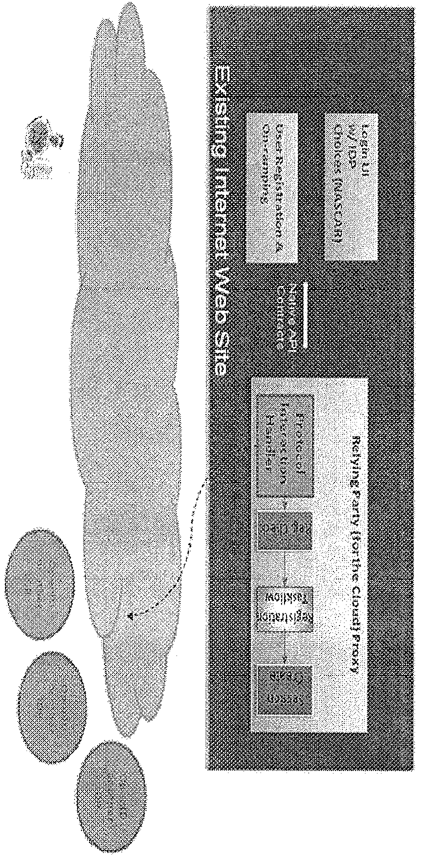

### Embedded mode - with AAA/IDM - typically a multi-application web sites

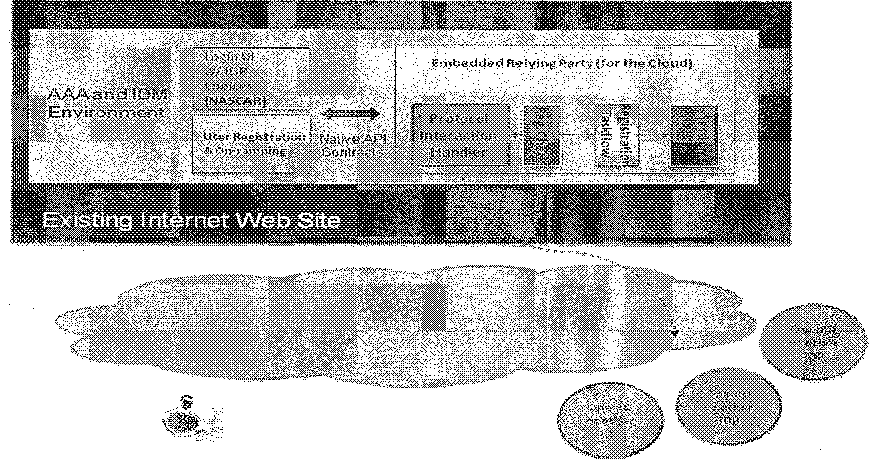

### Contracts

**RPC exposes the following main contracts** 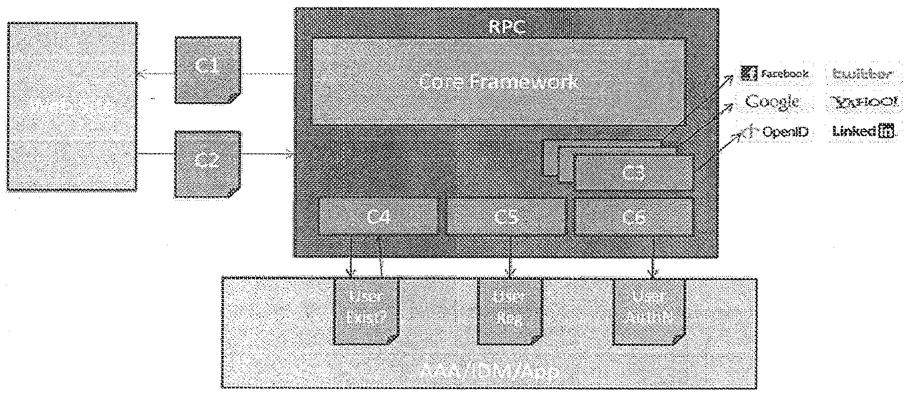
1. IDP selector Interface [C1]
   ∘ This contract is relevant if the site wants to integrate with RPC to handle the presentation of available IDP choices
   ∘ Invoking this interface will lead RPC to direct the user to go the "extended", Internet Login experience. RPC will expose the configuration interfaces for URLs for each of the IDPs supported.
2. Post IDP Selection Interface: [C2]
   This contract allows redirection to RPC endpoints to initiate the IDP flow based on the selection made. This includes all parameters needed by the RPC to initiate the flow.
3. IDP interaction Provider [C3]
   This contract is a SPI - providers of this SPI include implementations for vanilla OpenID, specific OpenID implementations, other protocols. This contract is primarily to enable system integrators, customers and future development to cleanly add new providers without major changes to the core framework. This contract provides two sub-contracts:
   ∘ SSO/Authn with IDP
   ∘ Attribute fetch from IDP
4. Registration Status Check Provider Interface[C4]
   The main contract is a SPI and subcontract is a RESTful call. The configured provider is invoked upon successful completion of the IDP flow. A default implementation of the SPI invokes the REST call to query if the user just authenticated (via the selected IDP) already exists. Another implementation of the SPI could make a direct call to a configured LDAP user repository.
5. Registration Task Flow Provider Interface [C5]
   The main contract is a SPI. The configured provider is invoked when [C4] indicates user does not exist. A default implementation of the SPI makes the appropriate attribute query call to the IDP to retrieve additional attributes for the user and uses "redirect" to a preconfigured registration URL with the user profile attributes. Optionally it may pass a return url to indicate to the registration flow which page to finally redirect to once user has registered.
6. Session Creation Provider Interface [C6]
   The main contract is a SPI. The configured provider is invoked when [C4] indicates user already exists. A default implementation of the SPI uses "redirect" to a preconfigured authentication URL with the identity of the user. Optionally it may pass a return url to indicate to the authentication flow which page to finally redirect to once user session is created.

These contract invocations are identified in the Flow Details interaction diagram in the next section. Below is a summary of the contracts in pictorial form.

### Example Flow:

- User Chooses Local Authentication or one of the supported IDPs (Displayed as "Nascar" style labels)
- If User chooses one of the IDPs - RP starts SSO flow in the "background".
- User is redirected to IDP for authentication where user enters credentials and consents to sharing identity with RP.
- Protocol flow continues back to RP-concludes with RP verifying authn, and grabbing relevant user attrs
- RP presents authn info and attributes to interested entities (eg OAM, OIM, OIF, etc)

### Flow Details (Please note contract labels on relevant interactions):

### a) Local Authentication Flow

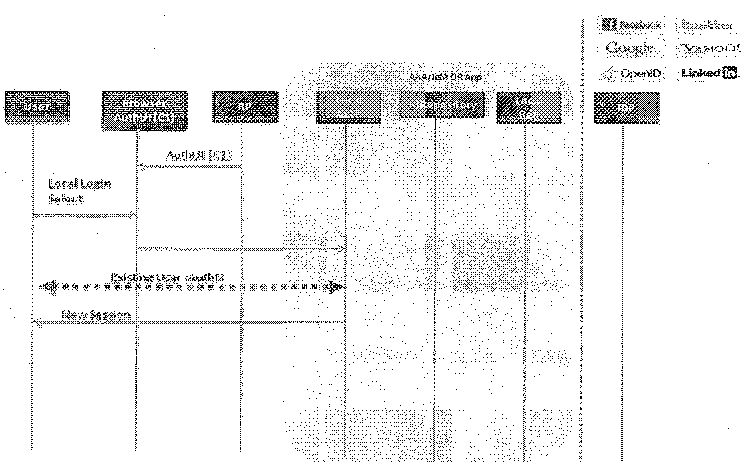

### b) User Registration: New User Flow

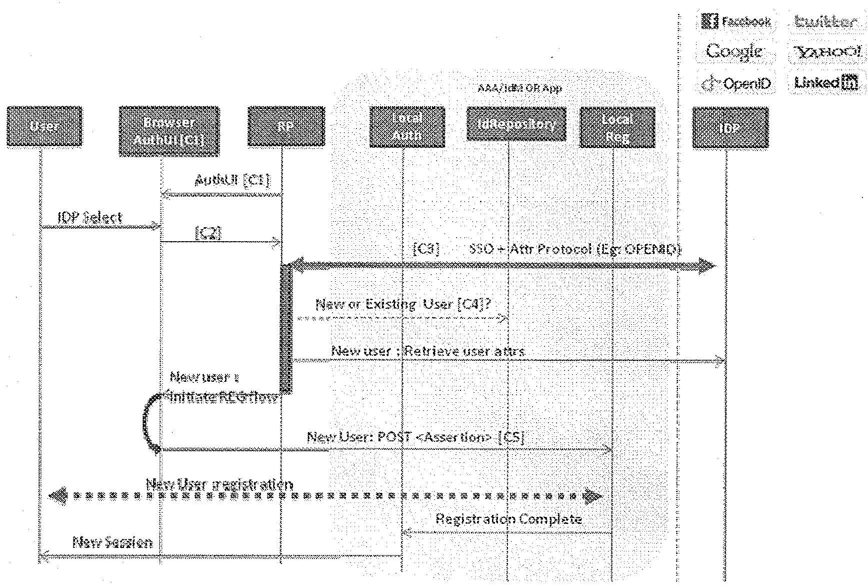

### c) Existing User - Authentication Flow:

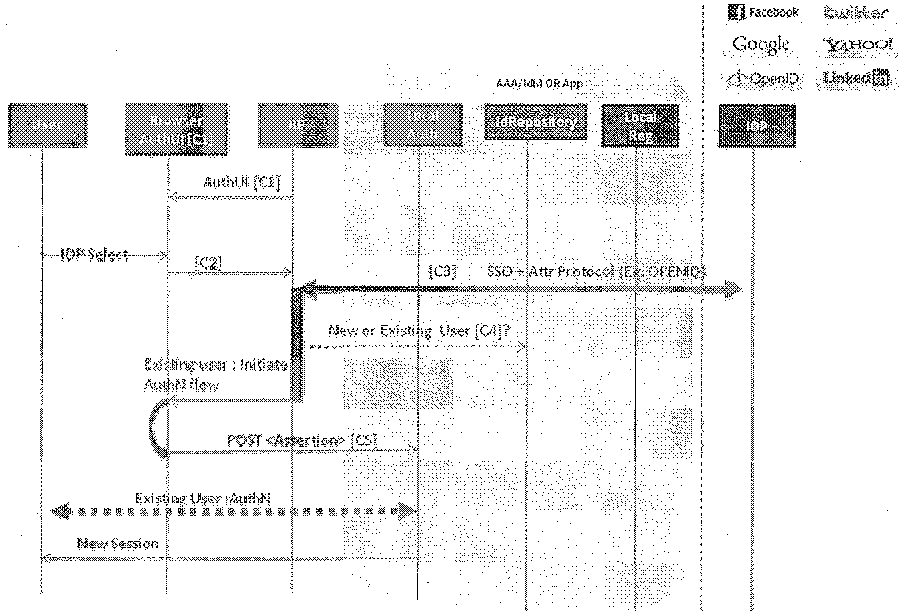

### Summary:

- IDP Selector UI
- Google, Yahool, Facebook....
- Fedlet-like WAR file (+.Net)
- Contracts for conveying assertions
- Integration code for:
   - Custom Application (.Net, JavaEE)
   - Identity Suite Products: OAM, OIM, OIF, etc

### APPENDIX

### OpenID Integration Design Pattern for OAM

### Objectives

This document contains the diagrams and description of a generalized design pattern or blue-print for OpenID integration. It is meant to address the following objectives:
1) Provides a clear design outline for implementing an OpenID solution that integrates into typical Internet facing current deployments (e.g. AARP): To enable both SSO and new user registration based on one's OpenID.
2) Can be leveraged in existing releases of both OAM and OIF environments without being tied to either one.
   a. Loosely coupled design pattern usable in either of the environments
   b. Does not require any OAM product enhancements
3) Lends itself for re-use of the design pattern (and potentially code) by Oracle professional services in related customer projects.
4) Serves to guide the design of OpenID RP enablement within components of Access Management suite
   a. Analogous model for other Internet consumer identity integrations (e.g. Information Cards)
   b. The design pattern manifested as an appropriate Shared Services for Access (SSA) artifact in NG-AM

### Assumptions

It is assumed that the customer has an existing deployment of OAM to protect the access to their applications, including:
- A customized user registration application or form, providing an UI for self-registration and user provisioning in an identity store that the OAM will authenticate against
- A customized user login application or form, submitting user credentials to an OAM Webgate
- URL resources protected by an OAM Webgate

It is further assumed that the customer would like to extend their deployment to optionally allow their users to authenticate against an OpenID Provider (OP), selected from a predetermined list displayed through the login UI. The first time users authenticated with their OpenID Provider will interact with the registration UI similar to the one in the current deployment, but with certain information pre-filled based on the information received from the OP.

### Design Pattern Description

The proposed design pattern may be used to achieve the required integration by developing extensions to customer customizations and developing a new OpenID Relying Party module as follows:
- An extension to the existing login UI to display an OpenID IDP selector (Nascar): the *OpenID Login Extension.*
- A new module, the *OpenID-RP Module,* to orchestrate the OP interactions (the core OpenID-RP functionality), OAM interactions, and registration UI interactions (for the first time users).
- An extension to the existing registration UI to display any OP provided user attributes and collect additional user information to complete the registration: the *OpenID Registration Extension.*

### Components and Interactions (Unregistered User)

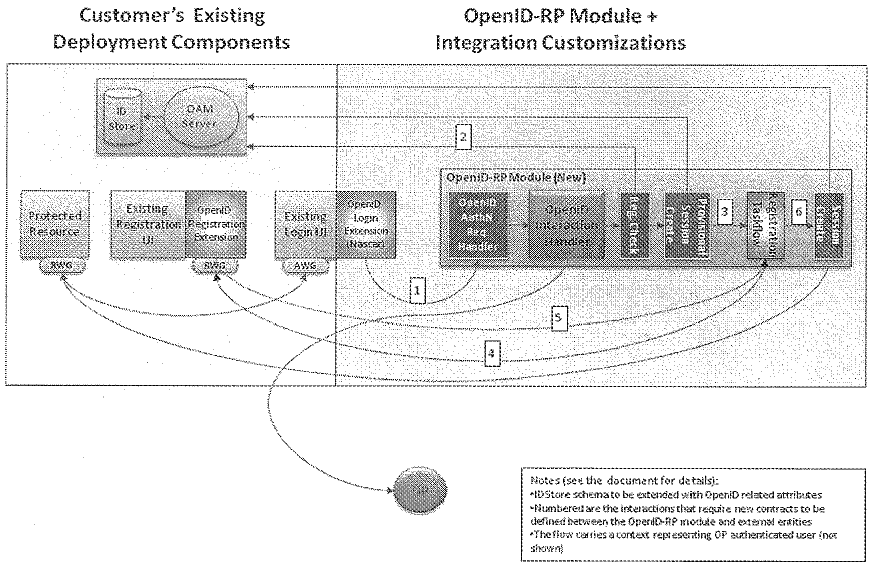

*The center of the* proposed design pattern is the OpenID-RP Module. It encapsulates a set of functional blocks that interact with external entities using well defined contracts and together provide for the OpenID integration in a way that does not require OAM10g product enhancements. The OpenID-RP capability itself is contained in the *OpenID Interaction Handler* block, and it is assumed that an appropriately licensed open source code may be used for its implementation. The other blocks are to be custom developed. Several new contracts need to be defined for interactions with the OpenID-RP Module building blocks, as indicated in the diagrams with numbers. Configuration and policy changes will be needed in OAM and additional attributes required in the ID store schema to store OpenID related information for each registered user, e.g. authorized OpenID Providers, associated user identifiers, etc.

### OpenID AuthN Flow (Unregistered User)

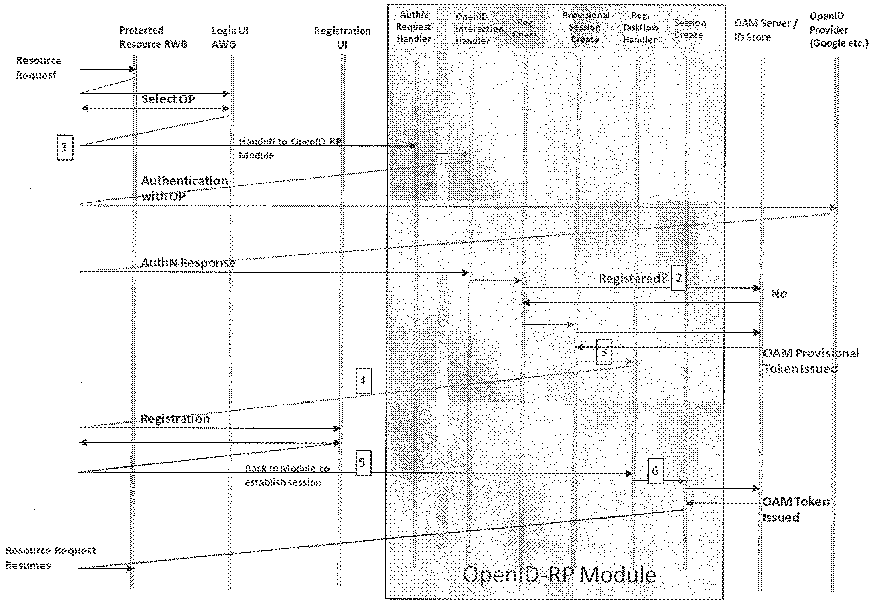

To describe the building blocks of the OpenID-RP Module and their interactions, let's step through the request flow for an unauthenticated user (refer to the attached interactions and sequence diagrams):
a) a user attempting to access a protected resource will be instead shown a login page where one of the listed OpenID Providers may be selected
b) upon user selection of an OP to use, a front-channel redirection will occur to the OpenID-RP module's *OpenID AuthN Request Handler*
c) the OpenID-RP module's *OpenID Interaction Handler* will further redirect the user to the OP for authentication
d) following the authentication with the OP, the user will be directed back to the *OpenID Interaction Handler* of the OpenID-RP module
e) the module will perform a *Registration Check* to ascertain whether the OP authenticated user can be mapped to an entry in the local identity store
f) if the registration check was successful, an OAM session is created and the user directed back to the originally requested protected resource
g) otherwise, the *Registration Taskflow* is invoked (see below for the description of the provisional session referenced in the diagram), which will display the registration UI, provision the user in the identity store, establish an OAM session and finally direct the user to the originally requested protected resource

Two contexts need to be propagated throughout this flow: A context representing the resource the user originally attempted to access prior to authentication (the resource context) and the context representing the OP authenticated user (authenticated user context). The resource context needs to be available at the end of the flow to redirect the user browser to the originally requested resource following the authentication and registration. The authenticated user context needs to be available to communicate the identity of the authenticated user throughout the registration taskflow up to the point of creating the OAM session following successful completion of the registration.

There are multiple ways to ensure that the necessary contexts are propagated securely throughout the flow. The diagrams show one way to achieve this using the concept of a provisional OAM session. The provisional session is a logical representation of an OAM session allowing user access only to specifically designated resources, like the registration page or Terms and Conditions' page, to complete the registration process. It gets created after the unsuccessful registration check, which would cause a partially populated user record created in the ID store. The provisional OAM token would be created for the authenticated, but not fully registered user utilizing the OAM ASDK. The Registration Extension UI and its fronting OAM WebGate would consume this token and contained user identity to associate the additional user-provided registration information with the user record earlier created in the ID store. After the registration completes, the flow would return to the OpenID-RP Module to create the full OAM session for the user (again using the OAM ASDK) - in a sense upgrade the provisional OAM token to an OAM token of a fully authenticated and registered user. The concept of a provisional session may be emulated in the OAM10g deployment by formulating authentication schemes such that OAM token with a low (e.g. 0) authentication clearance level represents a provisional session, while any higher clearance level is used for full OAM sessions.

Note that the canonical flow shown in the diagrams may be altered to fit into existing environment. Some of the interfaces or sub-modules of the OpenID-RP Module may be omitted, if the equivalent functionality is provided elsewhere. For example, if the Registration UI extension can be included within the OpenID-RP Module itself, the flow will be simplified and the provisional session will not be necessary.

### Components and Interactions (Registered User)

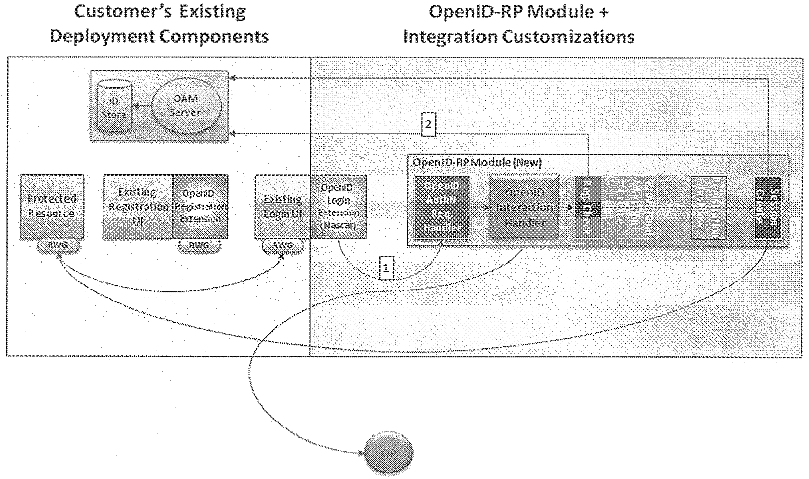

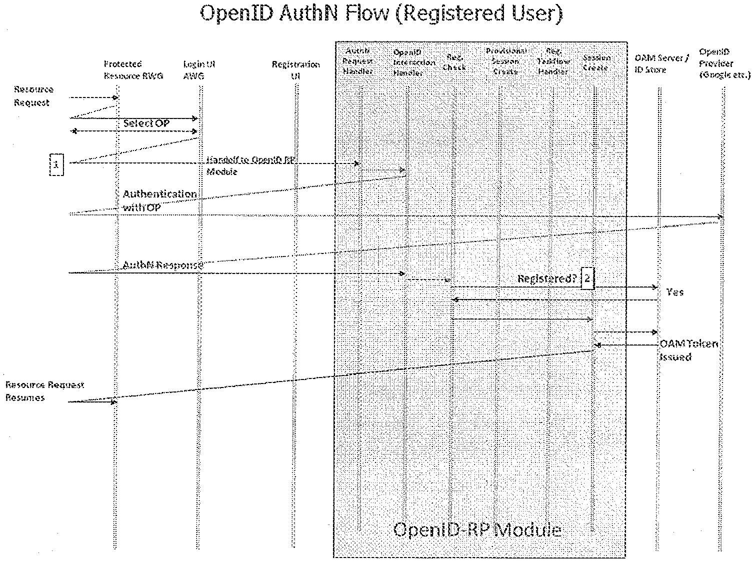

### PART 4: Identity Relying Party (For Cloud Applications)

### 1.Project Overview

### 1.1.Project Description

One of the key developments on the internet in the past few years is the exponential growth of "Internet Identities". These identities originated from users' choice of internet applications such as email (Gmail, Yahoo), social networking (Facebook, Twitter), blogs, communities (Linkedin), etc and over time have evolved into "user centric" identities that allow the convenience of using the same identities to access other applications on the internet. Gmail and Yahoo for example automatically provision OpenID for all users that allow this convenience- based on user consent of course. Large enterprises with consumer facing internet properties - many of whom are Oracle IAM customers - see a huge opportunity here to expand their user base by extending this facility to their sites - thereby providing the much coveted initial "stickiness", leading to revenue growth and competitive edge. These companies span industries - insurance, financial, retail, media, so on. Relying Party for the Cloud focuses on providing the necessary infrastructure pieces to enable these companies to leverage internet identities, yet preserve their investment in existing applications and AAA/IdM systems.

Federation standards such as OpenID, OAuth, SAML, and Information Cards etc. provide a foundation for internet identity authentication and authorization. This project provides a light weight infrastructure and appropriate contracts for applications/services in the cloud by acting as a relying party (RP) for various protocols. This project will be developed under the umbrella of IDaaS.

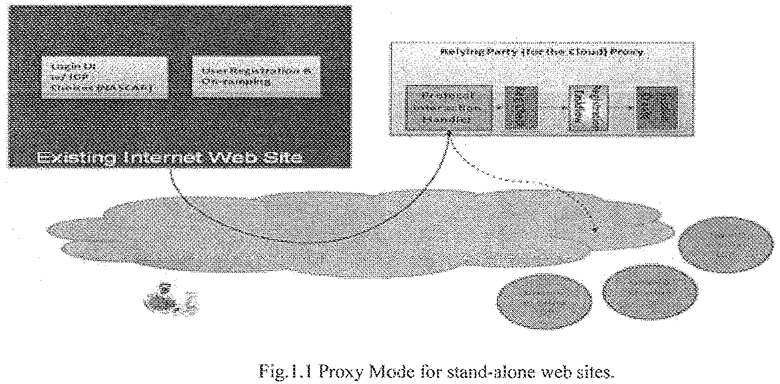

The above diagram illustrates the deployment and integration view of RP with an existing website. In this diagram, the RP acts as a proxy between exiting internet website and various identity providers. The RP facilitates the existing website for external user authentication and registration with minimal customizations. Similarly, the diagram below represents the RP proxy integration with existing AAA/IDM infrastructure where IDM infrastructure is with OAM, OIM etc.

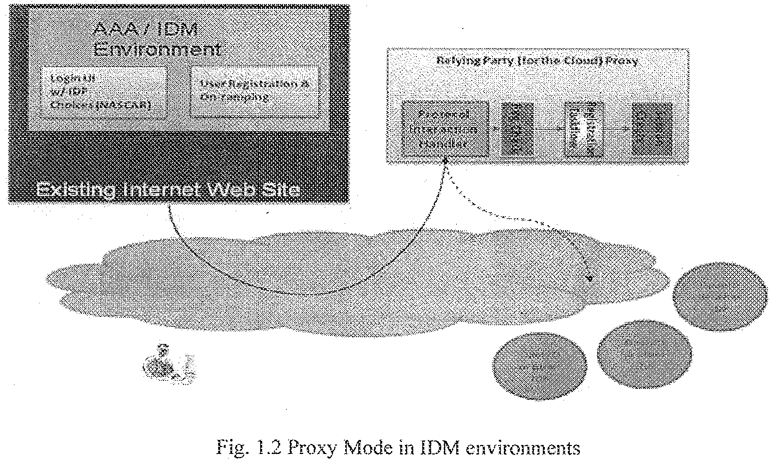

This is typically multi-application mode where the applications are protected by the Oracle IDM Infrastructure. The IDM environment has to be customized for login and registrations to support OpenID, OAuth etc.

RP infrastructure also supports in embedded mode where the RP components could be integrated into 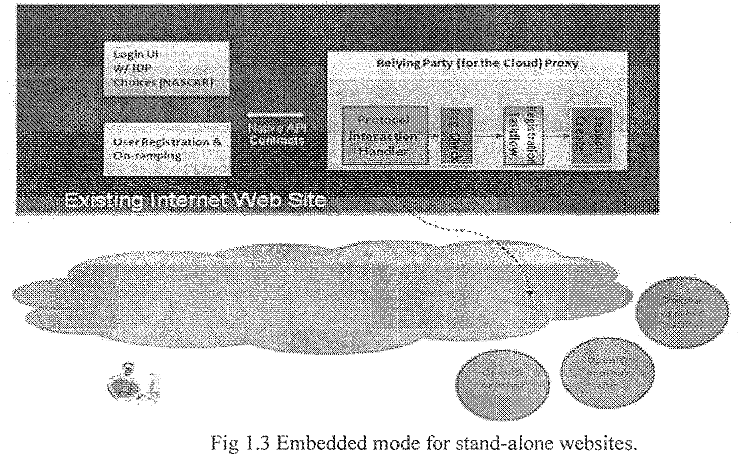 existing web site or IDM components. The above diagram illustrates the embedded mode of RP into the existing internet website. In the embedded mode, the contracts probably will be native contracts for tighter integration. For the IDM infrastructure, the deployment view for the embedded mode is represented below.

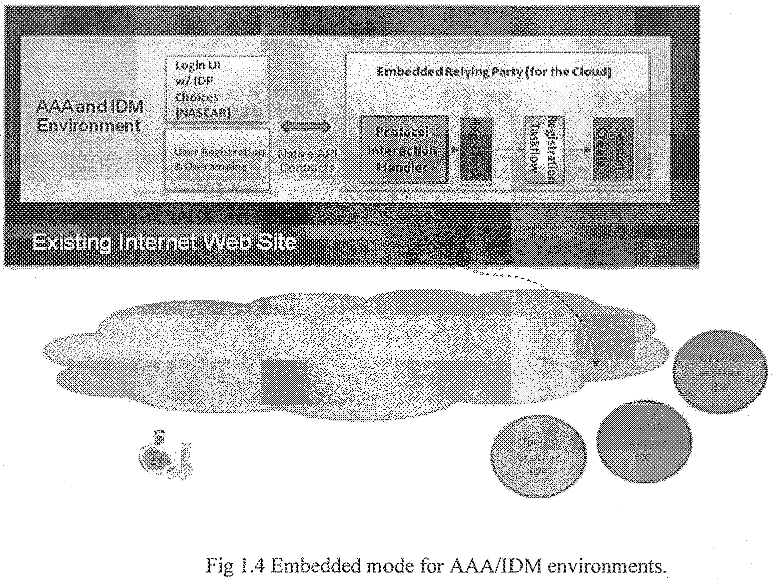

### 2.Concepts

- IDaaS: Identity as a Service
- SaaS: Software as a Service. Also known as "software on demand", the SaaS model allows vendors to develop, host and operate software for customer use.
- RP: Relying Party who consumes authenticated assertions from their trusted Identity Providers and provides an access to their application or a website.
- InfoCard: Information Cards are digital identifiers that users can use over the Internet and issued by trusted Identity Providers.
- OpenID: Open Identity. OpenID is an open, decentralized standard for authenticating users which can be used for access control, allowing users to log on to different services with the same digital identity where these services trust the authentication body.
- OP: OpenID Provider. Identity Provider who authenticates the user.
- OpenID RP: A website or applcation that wants to verify the end-user's identifier using OpenID protocol. This is also referred as OpenID Service Provider.
- SAML: Security Assertion Markup Language
- OAuth: The OAuth 2.0 authorization protocol enables a third-party application to obtain limited access to an HTTP service, either on behalf of an end-user by orchestrating an approval interaction between the end-user and the HTTP service, or by allowing the third-party application to obtain access on its own behalf.
- Resource Owner: An entity capable of granting access to a protected resource. When the resource owner is a person, it is referred to as an end-user.
- Resource Server: The server hosting the protected resources, capable of accepting and responding to protected resource requests using access tokens.
- Client: An application making protected resource requests on behalf of the resource owner and with its authorization.
- Authorization server: The server issuing access tokens to the client after successfully authenticating the resource owner and obtaining authorization.
- Access Token: A value used by the Client Application to gain access to the Protected Resources on behalf of the User, instead of using the User's Service Provider credentials.

### 3.Requirements

### 3.1.OpenID RP requirements

### 3.1.1.Support OpenID version 2.0.

The OpenID 2.0 is the newer version of OpenID specifications and this core specification contains protocol namespaces, protocol parameters, signing and verification procedures, key exchange protocol etc. Extensions are also pert of this protocol, however the corresponding protocol parameters are defined in respective extension specifications.

### 3.1.2.Support OpenID version 1.1

OpenID version 2.0 was final in December' 2007, so 1.1 support may not be ideally needed except for legacy OpenID providers.

### 3.1.3.Support OpenID Simple Registration Extension 1.0

The simple registration extension enable the RP to self register a user account at RP using the user profile obtained from OP.

### 3.1.4.Support OpenID Attribute Exchange Extension 1.0

The attribute exchange profile enable the RP to fetch user attributes from an OP and also update the user profile attributes. While the fetch is common use case, update may be useful when it is needed for multiple RPs.

### 3.1.5. Support OpenID Provider Authentication Policy Extension 1.0

The OpenID Provider Authentication Policy Extension enable Relying Party to express authentication context or a policy and level of assurance (LOA) while an OpenID Provider is authenticating the user. For example, RP could express OP to use multi-factor authentication for user authentication. Similarly, the OP could return the level of assurance and the authentication policy that has been used for RP. What it means for an RP is to validate the requested authentication policy with the returned authentication policy.

### 3.1.6.Provide integration with OAM 11g

The relying party provides integration with Oracle Access Manager (OAM) with minimal customizations. The integration should provide an access to OAM protected application by using OpenID authentication via the RP infrastructure. The RP should define the protocol parameters, integration sequence, assuming that the Login, Registration is provisioned through OAM.

### 3.1.7.Provide SPIs for integration with Applications or OAM

The RP provides SPIs for handling user registration and as well as for session creation. Out of the box, RP provides default implementations for OAM, but for non OAM applications and for any other customizations, an appropriate SPIs are needed for application integrations.

### 3.1.8. Integrate with other Oracle IDM stack such as OIF etc.

This is on demand integration as and when there is a possible use case.

### 3.1.9. Support Discovery of OpenID Providers

Discovery is the process where the Relying Party uses the identifier to look up the necessary information to talk to the respective OP. OpenID has three paths to discover about OP information based on the OP identifier.

If the identifier is an XRI, XRI_Resolution will yield an XRDS document which contains OP information. If the identifier is an URL, Yadis Protocol shall be first attempted and if it succeeds, the result is again an XRDS document. If Yadis protocol fails on URL, then the RPs would use HTML based discovery of the providers.

It may be nice to support to HTML based discovery and as per the specification, the HTML based discovery is needed for an RP.

### 3.1.10.Support Direct/Indirect Communication between OpenID provider and the RP

OpenID defines Direct Communication for establishing associations such as Key Exchange using Diffie-Hellman Key Exchange and as well for validating authenticated assertions. While the later one i.e. validating assertions may not be ideally needed by the RP but key exchange is used.

In indirect communication, messages are passed through user agent. This is the typical protocol flow that is used where the authentication request and responses are sent between an RP and an OP.

### 3.1.11.Support OpenID signature algorithms HMAC-SHA1 and HMAC-SHA256.

While generating signatures, OpenID supports two signature algorithms HMAC-SHA1 and HMAC-SHA256. When supported, HMAC-SHA256 is recommended by the OpenID 2.0 specification.

### 3.1.12.Support to handle both positive and negative OpenID Assertions.

While positive assertions may complete the authentication process, negative assertions typically require a follow-up authentication requests.

### 3.1.13.Support associations.

Associations establishes a shared secret between an RP and an OP which is used to verify subsequent messages between the concerning parties. It is recommended to form associations for an RP if it is possible to do to minimize security vulnerabilities.

### 3.1.14. Support Google and Yahoo as the OpenID Providers.

While there are many OpenID Providers that are available, this release supports Google and Yahoo as the OpenID Providers in priority.

### 3.2. TBD

### 3.3. SAML RP

### 3.4.OAuth RP requirements

### 3.4.1.Support OAuth version 2.0

The OAuth 2.0 is the newer version of OAuth specifications and this core specification contains protocol request and response flows to get access token (optionally refresh token) for the client, client registration etc. RP implements OAuth client role.

### 3.4.2.Support authentication with OAuth version 2.0 providers

RP support resource owners(users) authentication with OAuth 2.0 providers and retrieve the profile information, optionally enable local user registration.

### 3.4.3.Support returning of access token for given scope as requested by the client.

RP supports client's requests to return a access token for given scope.

### 3.4.4.Support Facebook OAuth 2.0 provider.

RP supports Facebook OAuth 2.0 provider. Currently Facebook is the only OAuth 2.0 compliant provider. Support gets added for other providers like Linkedin and Twitter as and when they become OAuth 2.0 compliant.

### 3.4.5.Support access token caching.

RP supports caching of access token (optionally refresh token). This is to facilitate usage of access token till it's expiry. And optionally usage of long lived refresh token to get a new access token.

### 3.4.6.RP registers as a client to OAuth 2.0 providers.

RP registers as a client to Facebook OAuth 2.0 provider. This could be a manual process, depends on the providers's provisions for client application registration.

### 3.5.Client application requirements

### 3.5.1.Support registration of client applications with RP.

RP provides administrative tools (console and command line) to facilitate registration of client applications. The details include application id, description, application specific user profile attributes, application required authentication providers etc.

### 3.5.2.Support secure interactions between client applications and RP.

The interactions between RP and client applications are secure i.e. RP ensures authorized applications can only communicate with it along with data integrity checks.

### 4.Feature Descriptions

### 4.1.Architecture

The following diagram provides the high level view of Relying Party (RP) architectural components in Internet Identity Environments with various application contracts.

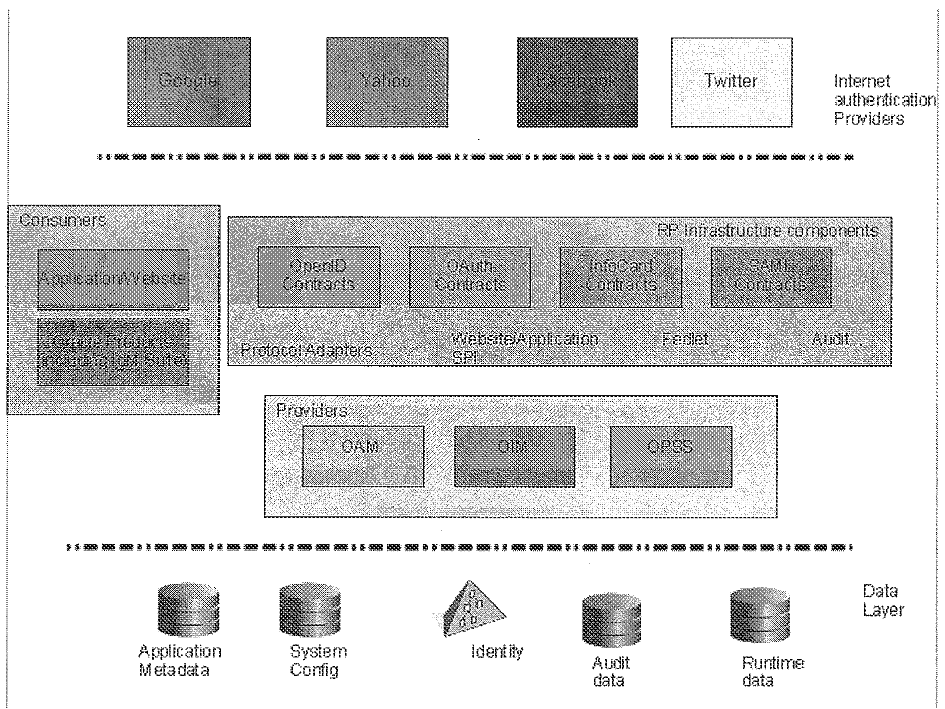

### Fig 4.1 Relying Party Architectural Components

The Relying Party (RP) is the consumer of Identity Authentication Assertion issued from Identity Provider. In the above diagram, Google, Yahoo, Facebook are the identity providers where the user has accounts. The Relying Party in this architecture is deployed with Web site/Application which relies on user authentication from one of the internet authentication providers.

The architecture consists of five different entities:
1. Relying Party (RP) infrastructure that provides protocol implementation for OpenID, OAuth etc. as a Relying Party and also various contracts for Website/Applications integration.
2. Consumers. The consumers are either third party applications/web sites or Oracle IDM Components themselves who enable RP functionality to various customer applications.
3. Identity Provider (IP or IDP) provides end user authentication and provides authenticated assertions to the relying parties (OpenID providers, OAuth providers, STS for Information Cards, SAML IDP etc..)
4. SPI or Providers: The RP infrastructure uses SPI model for invoking various contracts and the corresponding provider depending on the functionality. For example, for user registration, the OIM provider may be used etc.
5. Configuration and Data Layer for the system configuration, audit, logging etc..

### Design Considerations:

1. RP is loosely coupled component that could be deployed independently or embEddable into the existing application.
2. Minimal customizations for existing access or session providers and possibly with little extensions to the existing Login/Registration UI.
3. Analogous model for other consumer identity integrations for e.g. Information Cards, OAuth, SAML etc.
4. RP should not need to assume the presence of Oracle Infrastructure Components such as OAM, OIF etc.
5. SPI model for application/product integrations.

### 4.1.1 Architectural flows and Contracts:

The following illustrates interactions and contracts between various components with RP infrastructure.

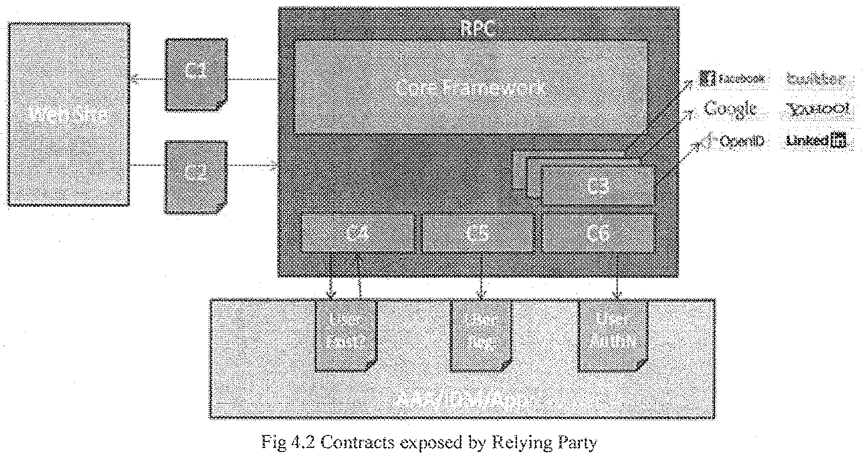

The above architecture exposes various contracts by the RP to the Websites/Applications and as well as to the external internet authentication providers.

The contracts exposed by RP exposes are defined as follows:
- IDP Selector Interface (C1)
- Post IDP Selection Interface (C2)
- IDP Interaction Provider Interface (C3)
- Registration Status Check Interface (C4)
- Registration Task Flow Provider Interface (C5)
- Session Creation Provider Interface (C6)
- Configuration Provider Interface (C7)
- Attribute Mapping/Authorization Provider Interface (C8)

**1. IDP Selector Interface (C1):** This contract provides the list of Authentication/Identity providers to the Website/Application so that the application could present the Login page that consists of various external authentication providers (for e.g. Yahoo, Google, Facebook etc..)..
   - This contract is relevant if the site wants to integrate with RP to handle the presentation of available, IDP choices.
   - Invoking this interface will lead RP to direct the user to go the "extended", Internet Login experience. RP will expose the REST interfaces for URLs tor each of the IDPs supported.
**2. Post IDP Selection Interface (C2):** This contract allows redirection to the RP end points to initiate the IDP flow based on the selection made. This defines the following preliminary contractual parameters when Application/Website redirects to RP.
   - return url,
   - level of assurance (for e.g. LOA1, LOA2 etc.)
   - user attribute names (optional for authentication but used for registration)
   - authentication provider name(for e.g. Google),
   - protocol type (openid)
   - applicationID (for e.g. http://www.example.com)
   - applicationType (for e.g. Oracle Access Manager 11g)
   - scope (OAuth)
   The design document will explain in detail all the required parameters for each protocol. This contract will have a provider model for each protocol.
**3. IDP Interaction Provider Interface (C3):** This contract is an SPI - providers of this SPI include implementations of OpenID, OAuth, other protocols. For SAML, this contract would use Fedlet. This contract is primarily to enable system integrators, customers and future development to cleanly add new providers without major changes to the core framework. This contract defines two sub-contracts:
   - SSO/Authn with IDP
   - Attribute Fetch from IDP
   This contract defines an RPAdapter which is described in detail in section 4.1.2.
**4. Registration Status Check Interface (C4):** The main contract is an SPI, and the sub contract is a RESTful call back to the application to check the user presence. Alternatively, it could use a direct LDAP call to the repository to check the user presence. Again this, is a provider model and depends on the application/website integration model.
**5. Registration Task Flow Provider Interface (C5):** This contract defines for the user registration if the user is not present by executing C4. Alternatively, provider could choose progressive registration depending on the user attributes that are obtained from IDP etc. The default implementation of the SPI makes the appropriate attribute query call to the IDP to retrieve additional attributes for the user and uses 'redirect' to pre-configured registration URL with the user profile attributes. Optionally it may pass a return url to indicate to the registration flow which page to finally redirect to once user has registered.
**6. Session Creation Provider Interface (C6):** The main contract is an SPI. The configured provider is invoked when C4 indicates user already exists. A default implementation of the SPI uses "redirect" to a preconfigured authentication URL with the identity of the user. Optionally it may pass a return url to indicate to the authentication flow which page to finally redirect to once user session is created.
**7. Configuration Provider Interface (C7):** This interface allows RP to leverage an existing configuration store for its own configuration data. The intent here is to provide seamless configuration/administration with the environment in which RP is deployed.
**8. User Attribute Mapper/Authorization Provider Interface (C8):** This interface is used by RP to store per "application" or more accurately, the consumers of RP user attribute mapping data, as well as the attributes RP is authorized to retrieve from the IDP. C7 and C8 are administrative contracts.

The following describes various flow diagrams with different contracts.

### Local Authentication Flow:

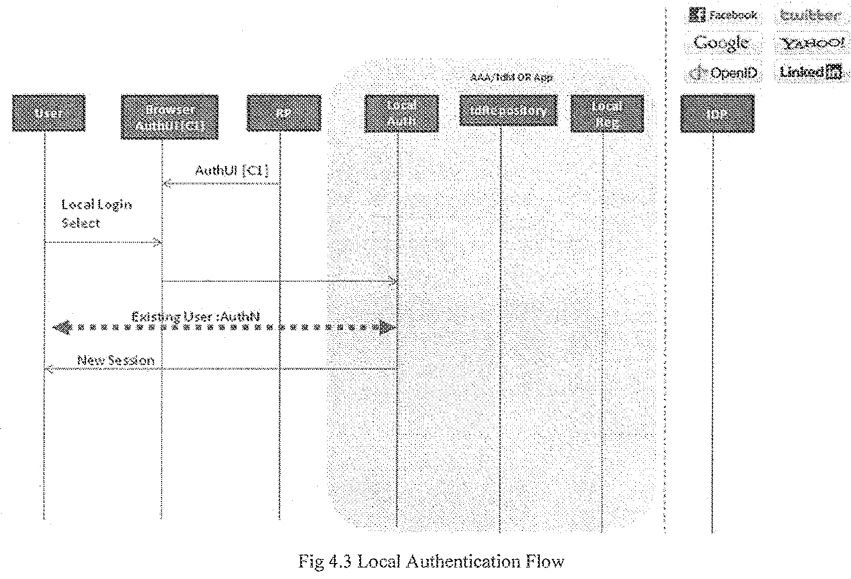

In this flow, the user chooses to use local authentication and the website/application creates a new local session.

### User Registration (New User Flow)

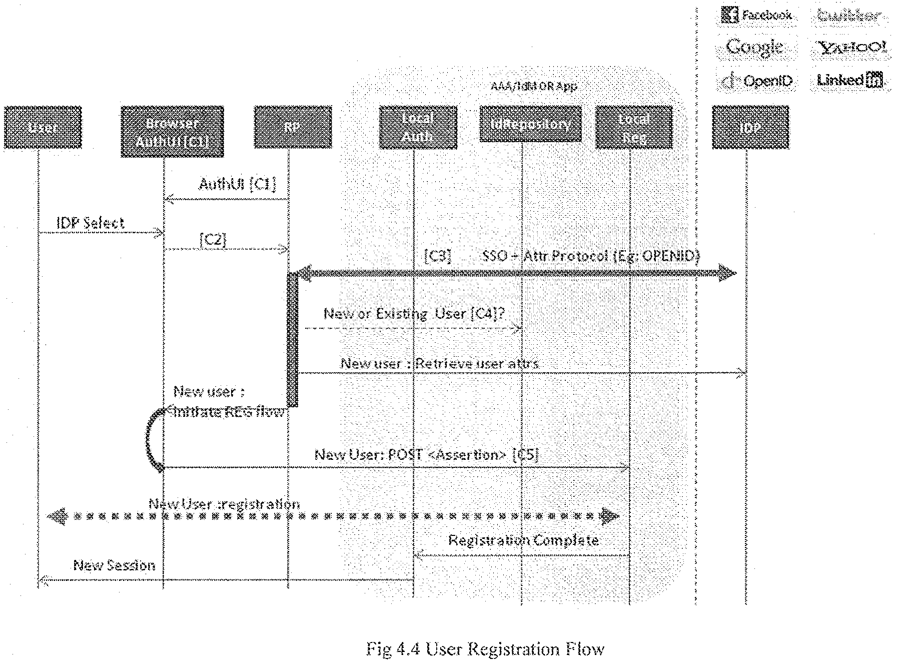

This flow describes registration process when the user chooses to use external internet authentication provider. In this flow, the website/application does not find the user in the local repository and presents an option to register locally by using the attributes obtained from the authenticated assertions.

### User Authentication Flow:

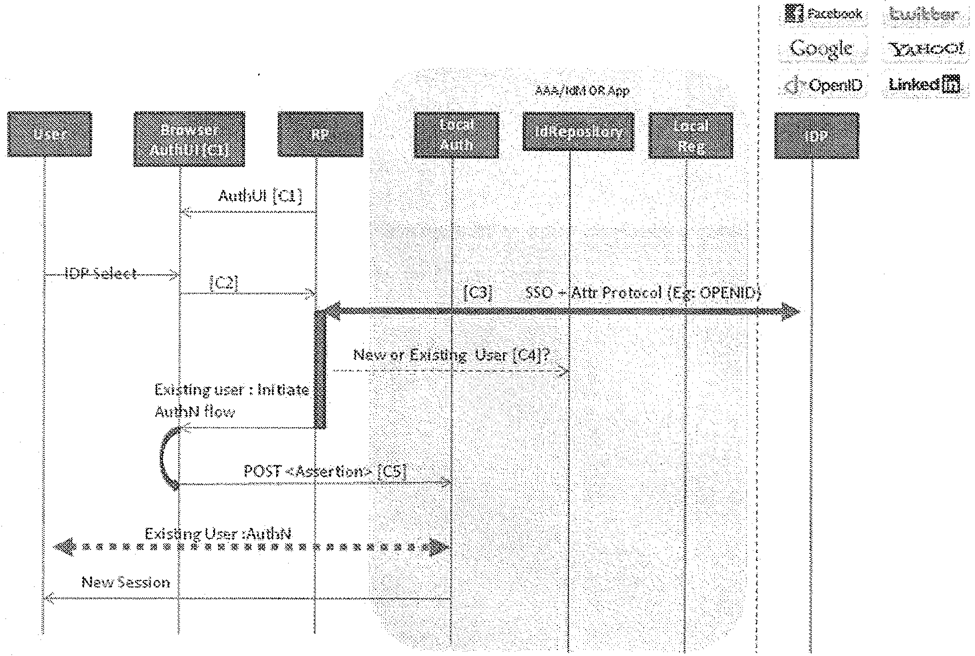

**Fig 4****.****5** User authentication flow

This protocol flow describes the user authentication process assuming that the user existed in local repository.

### OAuth Access Token retrieval flow:

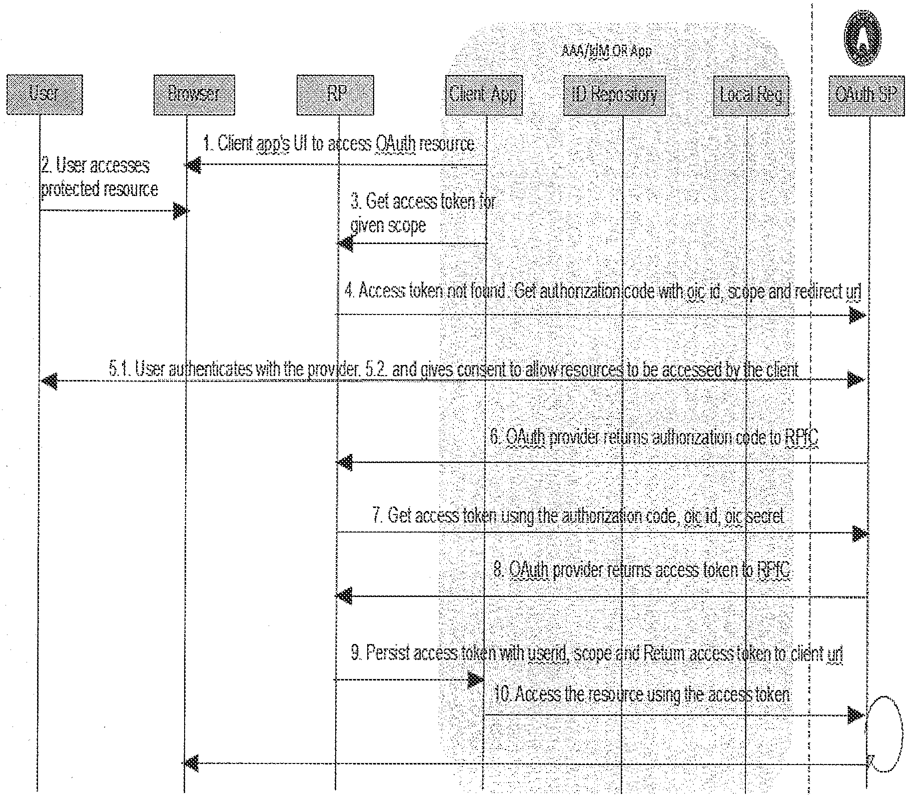

### Figure 4.6 OAuth Access Token Retrieval Flow

This flow describes OAuth access token retrieval flow when a client app requests RP for a given resource scope. In this flow, RP initiates OAuth request/responses for getting authorization code and access token. RP uses access token to fetch user profile and finally returns access token + user id + oauth identifier etc. data back to client app.

### .4.1.2 Relying Party Adapter

The RP interaction handler exposes an SPI model for user session creation and for user registration. RP exposes an interface called RPAdapter which enables an RP to use a pluggable model to invoke the adapter in the context of Application.

```
 /**
 * The interface used to implement the appropriate handing for an Application (Session Provider)
 */
 public interface RPAdapter {
   /**
    * Checks if a user is present in the access provider store
    *
    * @param userId The user identifier of the user obtained from OpenID/OAuth Provider
    * @param request http request context from the OpenID/OAuth RP interaction handler
    * @pram response http response context from the OpenID/OAuth RP interaction handler.
   * @param RequestContext request context
    * @return true if the user is found in the ID store; false otherwise
    *
    */
    public boolean isUserExists(String userId,
       HttpServletRequest request, HttpServletResponse response, RequestContext context);
```

```
 /**
 * Register a user into the application ID store
 *
 * @pram attributes The name/value pairs of attributes used in registering a user
 * @throws RegistrationException if the user registration is failed
 * @param request http request context from the OpenID/OAuth RP interaction handler
 * @pram context request context.
 * @param response http response context from the OpenID/OAuth RP interaction handler.
 *
 */
 public void handleRegistration(Map attributes, HttpServletRequest request,
          HttpServletResponse response, RequestContext context) throws RegistrationException;
```

```
 /**
 * Handles user login process. The implementation could choose to
 redirect to the return url of the access
 provider for session creation or create a session locally and
 redirect with appropriate session cookie for
 the return url.
 *
 * @pram userId The user identifier of the user
 * @pram attributes The name/value pairs of attributes used in creating the user session
 * @param request http request context from the OpenID/OAuth RP interaction handler
 * @pram response http response context from the OpenID/OAuth RP interaction handler.
 * @param context request context.
 * @throws SessionException if the user registration is failed
 *
 */
 public void handleLogin (String userId, Map attributes, HttpServletRequest request,
         HttpServletResponse response, RequestContext context) throws LoginException;
 }
```

```
/**
  * Process the request before the authentication.
  *
  * @param request http request context
 * @pram response http response context
 * @pram config configuration for processing pre authentication request.
  * @throws RPException for any failure
  *
 */
 public void preAuthnRequest(
       HttpServletRequest request, HttpServletResponse response, Map config) throws RPException;
 /**
  * Process the request after the authentication.
  *
  * @pram request http request context
  * @param response http response context
 * @pram config configuration for processing pre authentication request.
  * @throw RPException for any failure
  *
  */
 public void postAuthnRequest(
       HttpServletRequest request, HttpServletResponse response, Map config) throws RPException;
       }
```

The RPAdpater is instantiated per Application using factory model.

```
 /**
 * The factory class used to get the appropriate <code>RPAdapter</code> for a specific
 * access provider type
 */
 public class RPAdapterFactory {
 /**
 * Returns the appropriate <code>RPAdapter</code> for the specified provider type
 *
 * @param providerType The type of the access provider that the RP communicates with in the
                       current transaction
 * @Returns the appropriate <code>RPAdapterr</code> for the specified provider type
 * @throws UnknownProviderException if the provider type is not supported
 */
 public RPAdapter getRPAdapter(String providerType) throws
      UnknownProviderException;
 }
```

### .4.1.3 Attribute Mapping & Policies

User attributes are critical and sensitive data that is usually exchanged between a relying party and an authentication provider. However, the attribute names exposed by the protocol or by the authentication provider do not necessarily match with identity attributes on the relying party provider. This document proposes to have an attribute mapping configuration per application at RP. The RP would use the attribute mapping and create the corresponding protocol requests when making queries to Identity Providers. Similarly the same attribute mapping would be used when relaying the attributes obtained from the authentication providers with appropriate conversion back to the website/application consumption.

Attribute mapping per protocol needs to be worked if necessary.

The attribute policies for an Application are indirectly configurable through attribute mapping. For example, RP would return only those attributes to an Application that are configured through attribute mapping. The attribute policies per user are outside the scope of this document.

This specification proposes the following preliminary interface for attribute mapping:

```
 public interface AttributeMapper {
     /**
      * Returns an attribute value pair map that is used between
 identity providerID and as well as
      * between applications and relying party.
      */
     public Map<String, String> getAttributes(List<String> amibuteNames, String authnProviderID);
     }
```

The mapper itself could be obtained in the context of application and protocol that's being used.

### 4.1.4 Relying Party Integration with Oracle IDM stack:

While the RP provide a standalone/independent infrastructure to integrate with any application or a web site, the default mode provides a complete integration with Oracle Identity Management Stack. The following diagram illustrates the integration of Relying Party with OAM and OIM.

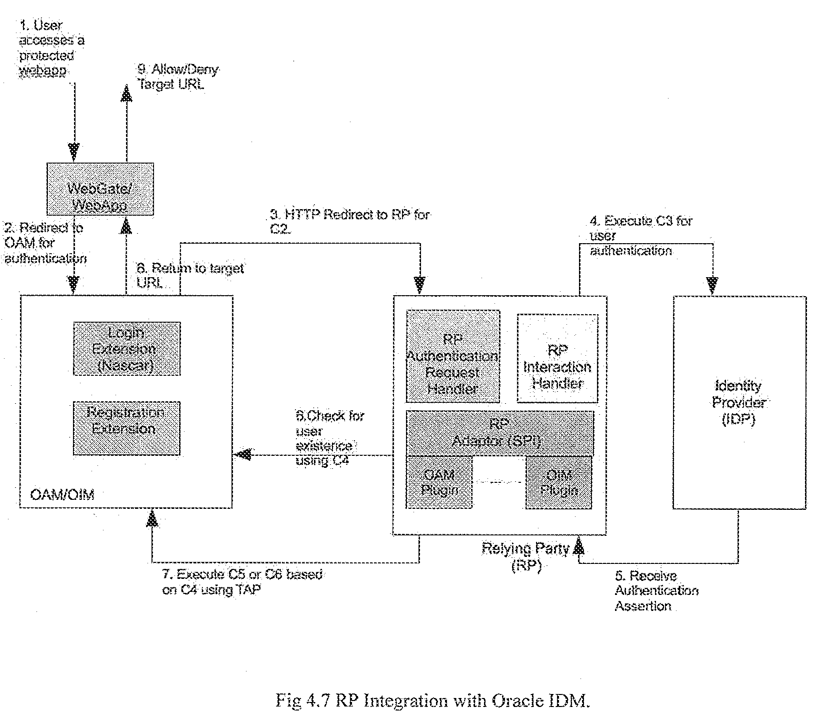

In this architecture, there are primarily four components: OAM Infrastructure, OIM Infrastructure, RP infrastructure and an external authentication provider. The Oracle Access Manager provide a centralized authentication and single sign-on for various applications that are protected by the respective Oracle Web Grates. The identity store for Oracle Access Manager is typically provisioned through Oracle Identity Manager with a Database or an LDAP Server. In the above diagram, the webgate intercepts the user request for an Application resource and redirects to OAM for authentication as per the configured authentication policy.

The Fig 4.8 interaction diagram illustrates the sequence flow of RP integration with OAM. The below diagram specifically illustrating OpneID provider, but also applicable toOAuth provider and other protocol providers as well.

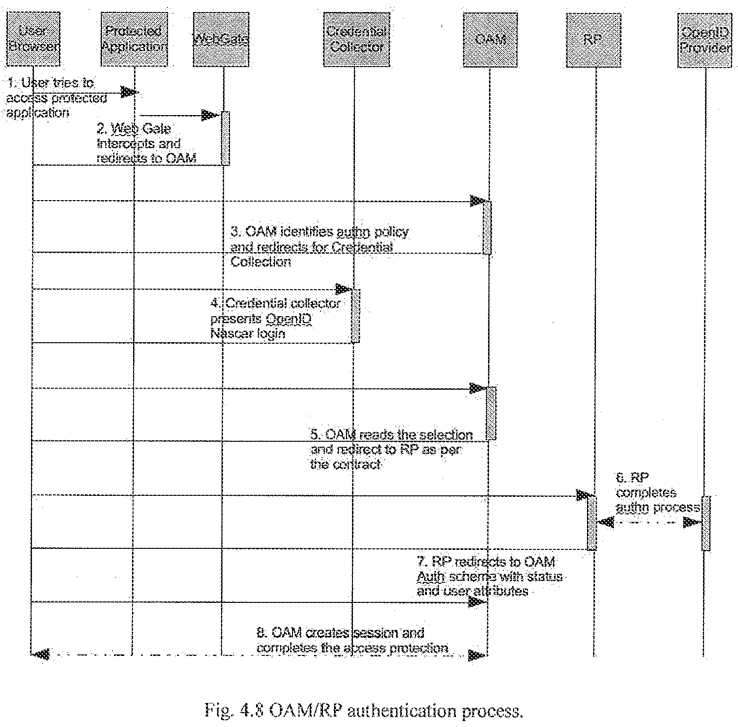

Upon accessing an OAM protected web site, the user is being redirected to a credential collection by the OAM. The credential collector for an RP authentication scheme would be a customized login page with possible NASCAR extensions that lists all known OpenID Providers, OAuth Providers, Trusted Partners, InfoCard Providers etc. An example of the login extension is illustrated below.

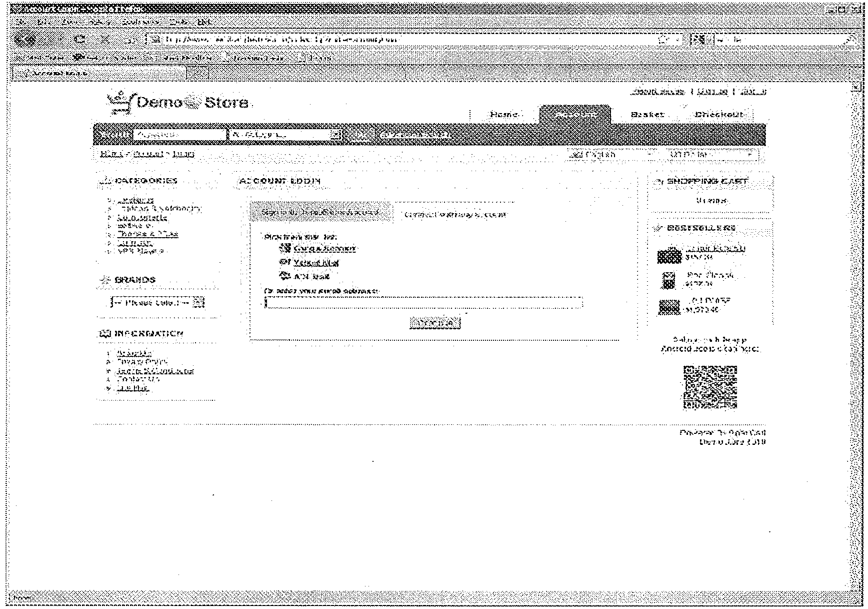

Alternatively, another popular OpenID based login page is shown below.

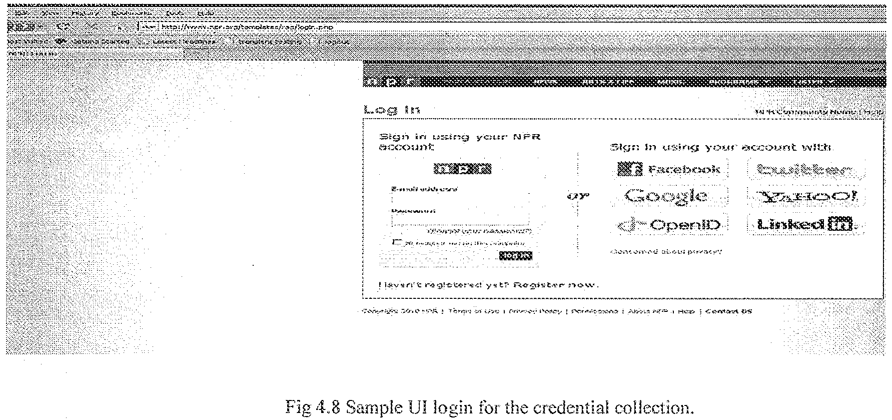

Once the user clicks on selected authentication provider, it will redirect to RP by executing contract C2 to initiate the corresponding protocol. C3 is RP/IDP protocol contract User is presented with an IDP login page as appropriate based on the chosen identity provider. Once the user authenticates and authorizes, the corresponding authentication assertion is sent back to the RP.

The request context is maintained for the entire transaction so that the RP and/or OAM could redirect back to the protected application as appropriately. The RP when it successfully completes SSO process between IDP and RP, the RP interaction handler invokes Registration Check Interface contract to check the user presence. The SPI model allows this contract to be independent of RP design and will depend on the run time artifacts of the contract.

If the user presence check returns true, the RP also checks for progressive registration. Progressive registration is where the user attributes obtained from the Identity Provider provide little more details of the user identity than the existing attributes. In this case, user is redirected for re-registration with new set of attributes. More details on this will be added in the design document.

### Session Creation Provider Interface:

When the user is present, the above RPAdapter redirects to the 'Return URL' by securely transferring the user attributes and authentication status as per the contract defined by TAP mechanism. The 'Return URL' would TAP authentication scheme endpoint. The TAP Auth Scheme at OAM Server validates the response from RP and creates a user session.

### Registration Task Flow Interface:

When the user does not present, the RP Adapter redirects to 'Registration URL' (provided through configuration) with corresponding user attributes. The registration extension at OAM Server pre-populates the registration page with the user attribute value pairs obtained from OP and present it to the user. This is similar to self-registration on OAM Server except the user attribute values are pre-populated

The following OAM/OIM extensions need to be developed for the RP integration.
**OAM Extension 1:** Right now there is no authentication scheme for the RP Integration. The demo used OIF (Oracle Identity Federation Manager) Authentication Scheme for now, however, the contracts between OAM and OIF are independent. RP needs a new authentication scheme in OAM.
   RP uses the TAP (Trusted Authority Protocol previously known as DAP, Delegated Authentication Protocol) mechanism to exchange the contractual parameters with OAM. The TAP protocol is defined by the OAM Infrastructure.
**OAM Extension 2:** The TAP Protocol right now is not generic enough to exchange attributes or parameters between OAM and trusted partner except the user id. The TAP protocol will need be extended to exchange attributes and any other required parameters.
**OAM Extension 3:** The OAM Credential Collector for the RP authentication scheme needs to be developed. The content for this login extension may be obtained from the Relying Party.
**OAM/OIM Extension 4:** User registration or User creation interface needs to be provided by this extension. Right now there is no remotable API as such from OAM or OIM to create users., however, this extension could use
   - Use RESTful interface (Need additional component IDAAS/REST in the deployment)
   - Use direct LDAP interface (depending on the deployment).
**OAM/OIM Extension 5:** The user presence check needs an API support from either OAM or OIM. Right now there is no remotable API as such from OAM or OIM to check the user presence. This is similar to extension 4.

### PART 5: Relying Party

### 1. Introduction

The Relying Party (RP) provides an infrastructure that enables a web site or a service provider to use various internet based Authentication systems besides their local authentication infrastructure to provide a secure access to various resources/services. The goal for the Oracle Relying Party for the Cloud (RPC) is to provide simple and lightweight infrastructure for both Oracle IDM customers and non IDM environments. The design of RP makes sure that it works in both stand-alone and as well as in embedded mode with minimal integration requirements. To achieve this, the RP infrastructure is based on contractual model and exposes few interfaces for applications/websites to provide appropriate integration options.

### 1.1. Relying Party Infrastructure Contracts

The following diagram represents the contractual model of the Relying Party infrastructure between various entities.

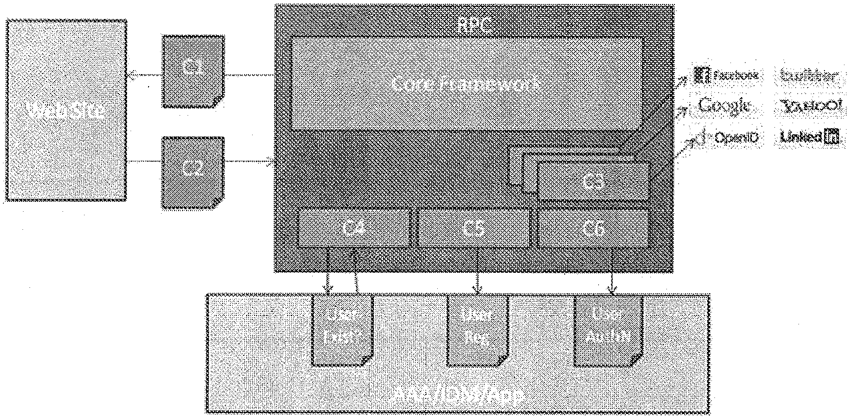

RPC is the self contained web application that handles various protocols such as OpenID, OAuth, SAML, InfoCard etc.. primarily on the protocol consumer side of it. RP exposes the following interfaces.

### C1 - IDP(Identity provider) Selector Interface:

IDP Selector Interface contract provides list of known Identity Providers to the web site. This contracts enables the websites to build an extension for the existing Login screen/web page to show all the external authentication systems such as Internet identity providers (Google, Yahoo etc..), trusted partner authentication systems (with SAML) etc.

### C2 - Post IDP Selector Interface:

The Post IDP Selector Interface allows the website to exchange the selected IDP, protocol and any other protocol/user attributes that are needed for an RP to interact with external identity system.

### C3 - IDP Interaction Provider Interface:

The IDP Interaction Provider Interface is purely between an RP to the external authentication system and this contract executes the corresponding protocol depending on type of the identity provider.

### C4 - Registration Status Check interface:

The Registration Status Check Interface enables RP to find the local user presence based on the authentication assertion/attributes obtained from the Identity Provider. While this is optional from the requirement perspective, this contract enables the website/application to provide a self-registration option.

### C5 - Registration Task Flow Provider Interface:

The Registration Task Flow Provider Contract enables the RP to initiate the registration task flow based on the C4 interface. This contract is to create a user in the local system with appropriate attributes.

### C6 - Session Creation Provider Interface:

The Session Creation Provider Interface is to establish a user session for the web site access. The user session is created by relying on the authentication assertion from the trusted external authentication provider.

### Administrative Contracts:

### C7 - Configuration Provider Interface :

This interface allows RP to leverage an existing configuration store for its own configuration data. The intent here is to provide seamless configuration/administration with the environment in which RP is deployed.

### C8 - User Attribute Mapper/Authorization Provider Interface:

This interface is used by RP to store per "application" or more accurately, the consumers of RP user attribute mapping data, as well as the attributes RP is authorized to retrieve from the IDP.

### 2. High Level Designs

### 2.1. Design Architecture

The following block diagram illustrates the architectural view of Relying Party infrastructure.

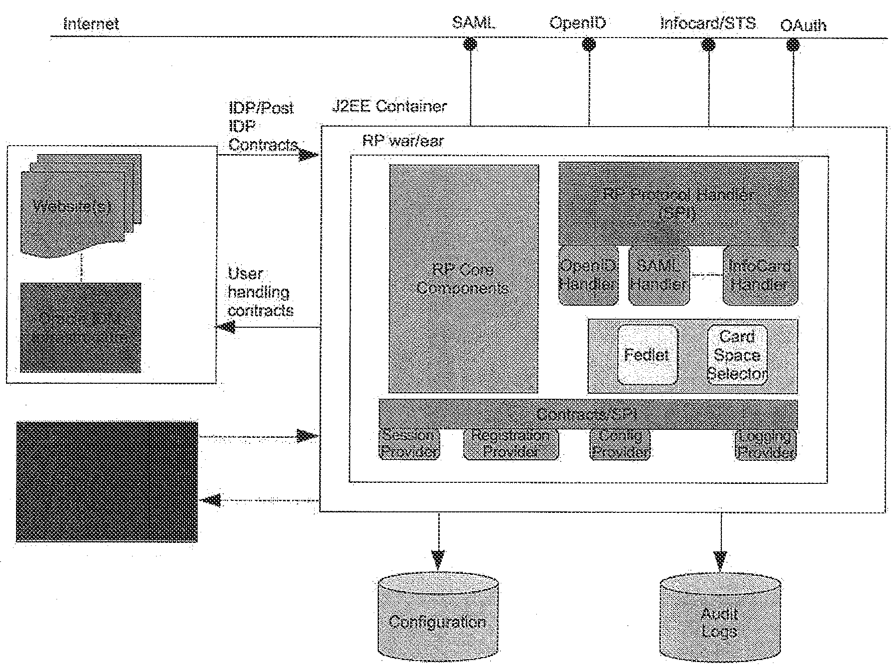

This architectural diagram illustrates the RP deployment in a stand-alone mode where the RP is a self contained war/ear deployment on a J2EE Container. The RP Core Components consists of initialization protocol end points, the return URLs, and other protocol specific API. The RP Protocol Handler is an SPI for various protocol tasks. For example, the OpenID Handler, SAML Handler, OAuth Handler etc. are used to invoke the corresponding protocol invocations. The SPI model allows to use various underlying components such as Fedlet for e.g. for SAML. Fedlet is going to be bundled as part of the Relying Party war file to handle SAML protocols. Card space selector is just a place holder for now to allow the architecture to be flexible to work with any third party protocol providers.

Each contract exposed by the RP is an SPI which allows very flexible integration for any third party application or websites and as well with Oracle IDM infrastructure. The default implementation for each interface are provided out of the box to work Oracle IDM infrastructure such as OAM, OIM, OVD, audit and configuration. The contracts are per application as the requirements for each application/website may be different even though the framework would allow to use the default implementation. For 11 g R1 PS2, all the contracts that are related to OpenID will be implemented.

### Execution flow

The sequence diagram shown below describes the interactions between User to the Website provider and/or AAA (Local Identity System), RP and to the IDP.

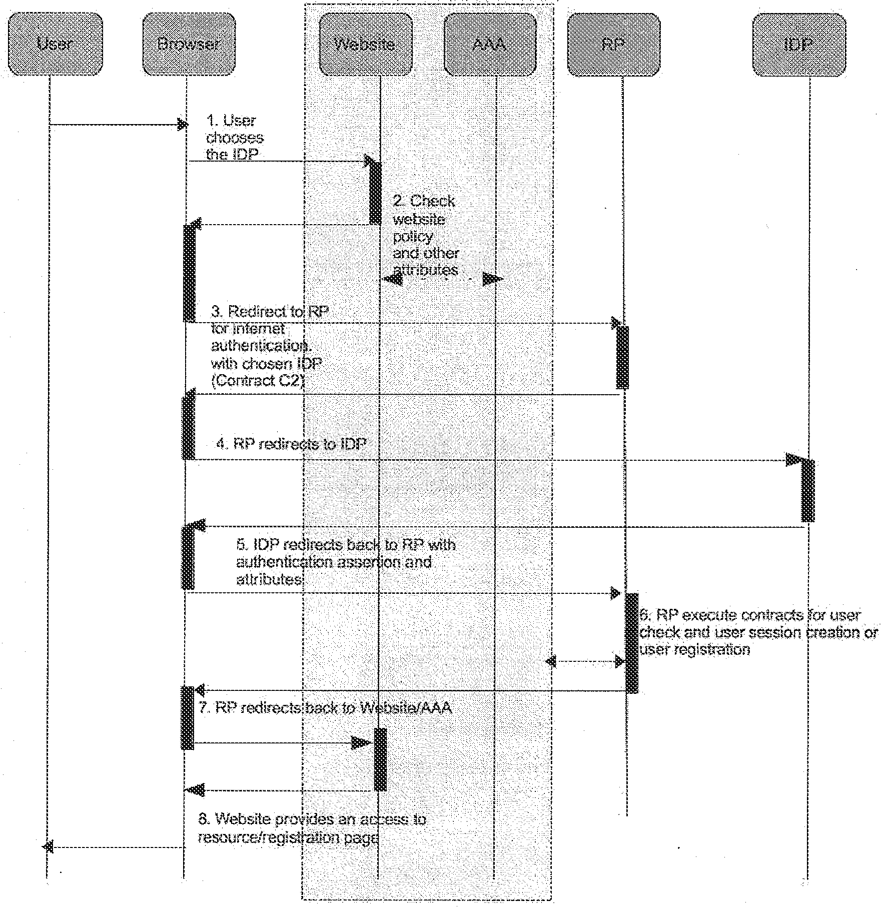

In the above diagram, the Application/Website and AAA (Authentication, Authorization, and Audit aka IDM) are typically co-located and sometimes it may be the same system. The Relying Party is fronted by the Application to handle internet authentication.
1. When the user chooses a sign-in or login option on the website/application web page, the user is presented with a local login and as well an internet based authentication that lists out all the known Identity Providers. Usually, this requires a customization for the existing Login Page to display the list of Identity Providers. The content for this Login extension is provided by the Relying Party System.
2. For the selected authentication method and the provider, the AAA/website checks local system policy and obtains any attributes and establishes an authentication context.
3. The AAA/website redirects to the Relying Party to invoke the Internet authentication. The exchange of information between the RP and the AAA system is as per the contract between the two. This is primarily to exchange the attributes securely and delegate the authentication process to the RP, hence establishing Trust is required.
4. The RP redirects to the IDP with appropriate protocol based on the selected Identity Provider and the method.
5. After user authentication at IDP, the IDP sends back to the RP with an Authentication Assertion.
6. The RP validates the Authentication Assertion, obtains the user information based on the authentication assertion. In this step, first the RP executes user presence check contract to determine if the user is presented in a local AAA/website system.
7. Once the user contracts are executed, the RP redirects back to the return url on the AAA/website to complete the session creation.
8. Finally, the website access is provided to the user.

### 2.2. System Placement

The Relying Party acts a gateway/proxy to the existing authentication infrastructure for internet based authentication. The system is designed to be used in two modes.

**Stand-alone mode:** The RP is a self contained war file application and deployed independently before the Website/IDM infrastructure. The RP acts as a proxy for external authentication. The contracts are executed through HTTP protocol where applicable. This model is useful where the application does not want to change by itself to enable for protocols like OpenID, OAuth etc. Also, this model is useful where there are more than one Applications/Website(s) in the deployment.

**Embedded mode:** In the embedded mode, the RP binaries and web components are bundled as part of the existing application/AAA. In IDM deployments, the RP is part of Oracle Access Manager. The embedded mode provides a tighter integration with the application and the management of RP configuration can be integrated to the existing application configuration management.

### 3. Design Description

The RP infrastructure comprises of both in-built and as well as bundled components such as Fedlet etc. The following design components describe the high level infrastructural elements. The design descriptions described here provide flexibility to accommodate any protocol.

### 3.1. Servlet URL Components

The servlet URL components are part of the RP core components. Mainly, the RP servlets contain the initialization URL to invoke the appropriate protocol based on the binding information as per the Contract C2. The initialization servlet sets up the context based on the chosen Identity Provider, protocol etc. Also, typically, most of the internet identity protocols require a Return URL where the authentication assertions are sent back. Since, the data format that is posted to this Return URL is specific to the protocol type, it will be an independent URL for each protocol. For example, the OpenID return URL would be OpenIDReturnServlet.

The following represents the servlet components view of the RP with OpenID Protocol.

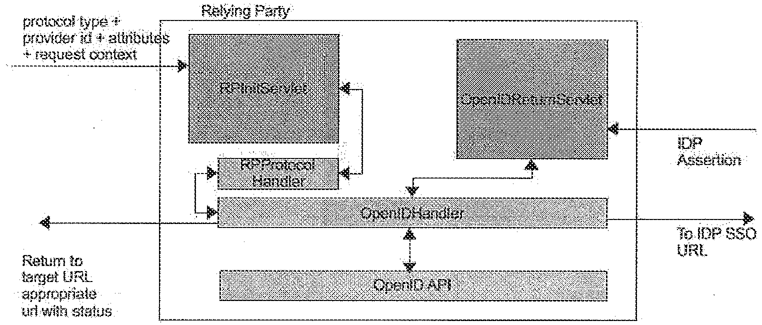

The RPInitServlet validates the input contract parameters, reads the protocol parameters and invoke the corresponding protocol handler, in this case OpenIDHandler. The OpenID handler constructs the protocol request and redirects to the appropriate IDP for authentication. The OpenIDReturnServlet receives the response from the IDP, invokes the OpenIDHandler to validate the response, and finally redirect back to the target URL.

### 3.2. Protocol Adapter

The Protocol Adapter is an SPI where a specific handler is invoked for each protocol. This allows flexibility to plug-in any non native implementations for various protocols. The below diagram represents the class diagram of RP protocol handler to invoke pre/post authentication and logout requests.

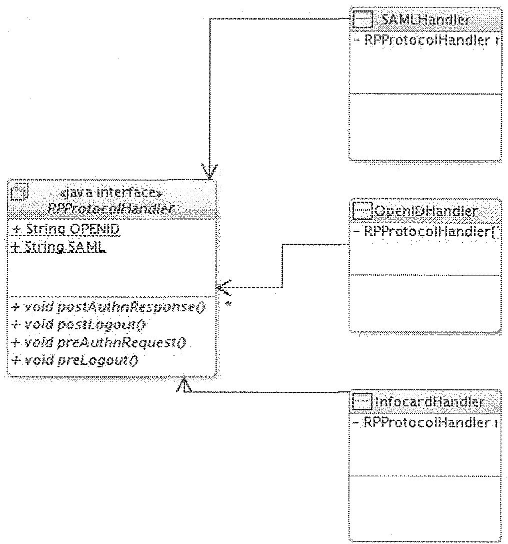

The RP Handler is invoked by the RPInitServlet as mentioned above to handle various protocols such as OpenID, OAuth Handler, SAML Handler, InfoCard etc.

### 3.3. Contracts SPI

The RP Infrastructure currently exposes several contracts for various tasks. Each contract that is exposed an SPI Model since each contract component may vary from one to the other. Right now, there are six runtime contracts and three administrative contracts. These are contracts are per application and the contract is initialized with the Application ID.

### 3.3.1. IDP Selector Interface:

The IDP Selector Interface allows to identify the list of known Identity Providers. This interface exposes a RESTful interface for the remote clients to obtain the list of Identity Providers. The block diagram explains the contract for a remote web site. The REST service uses the native IDP Selector Interface to retrieve the list of Identity Providers from both SAML Configuration (Fedlet based configuration) and as well from the RP configuration. The RP configuration interface manages the OpenID, OAuth providers while leveraging SAML configuration from Fedlet. In the embedded mode, the IDPSelector Interface could directly be invoked.

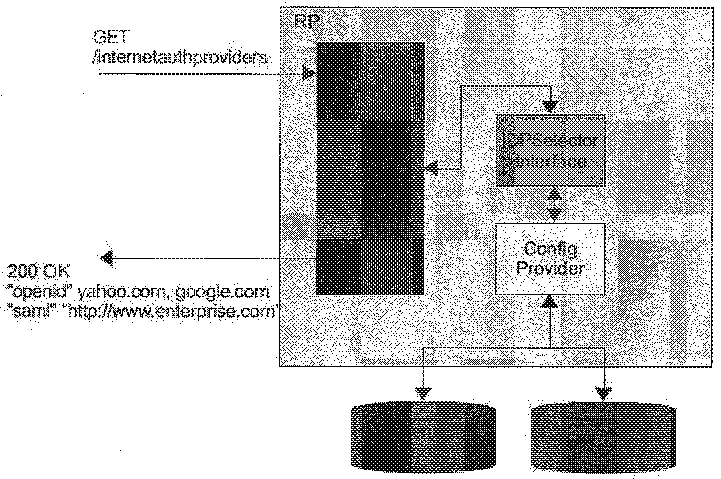

The following interface outlines the data exposed by this contract.

```
 /**
 * This interface is to retrieve the list of known trusted identity providers by the RP.
 */
 public interface IDPSelector {
   // Returns the list of Identity Providers based on the protocol,
 for e.g. {'openid', '<google.com>,
   <yahoo.com>'...}
   public Map<String, List<String» getIDPList(String applicationID, String protocol);
   }
   The JSON response format is:
   {"identityproviders": {
  "provider": {
     "name": "Google"
     "op identifier" : "https://www.google.com/accounts/o8/id"
     "protocol" : "OpenID"
   }
   "provider": {
    "name" : "Yahoo"
    "op identifier" : "https://me.yahoo.com
    "protocol" : "OpenID"
 }
 "provider" : {
      "name" : "MyOpenID"
      " op identifier" : "http://www.myopenid.com"
      "protocol" : "OpenID"
  }
  }
```

### 3.3.2. Post IDP Selection Interface:

The Post IDP Selection Interface is to securely exchange the data and as well as any authentication state between Relying Party and to the website/AAA. While the interface is generic enough to integrate with any third party application, the application/AAA may use different technologies based on the contract.

The following diagram represents the post IDP Selection Interface invocation.

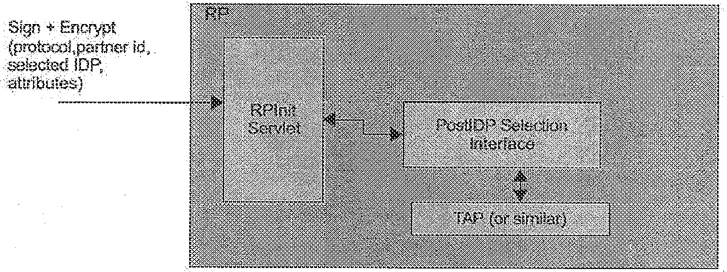

The following interface describes the post IDP selection interface.

```
 /**
 * This interface is used to securely decrypt the attributes
 that were sent by the partner application
 */
 public interface PostIDPSelection {
   /**
    * Decrypts and returns the secure attributes such as
 protocol, provider, any attribute mapping info.
    */
   public Map<String, List<String>> decrypt(HttpServletRequest request);
   }
```

The partner SHOULD need to sign and encrypt the contract parameters as per the mutual agreement. For OAM, TAP (Trusted Authentication Protocol) mechanism is used to securely transfer the contractual parameters between RP and the OAM. Typically such mechanisms require a shared secrets maintained in both at RP and the Website. The following contractual parameters are obtained with is interface:
- protocol
- providerName
- ApplicationID (or PartnerID)
- Set of attributes (with format rp.attribute.<attributename>=value)
- LevelOfAssurance (sort of authentication level)

### 3.3.3. IDP Interaction Provider Interface:

The IDP Interaction Interface is very specific to the RP to handle various protocols. The Protocol Handler SPI belongs to this contract. While this interface is not expected to provide any custom implementations, but the interface allows to plug-in various protocol providers such as Fedlet for SAML2 etc.

### 3.3.4. Registration Status Check Interface:

This interface is to check the user presence for an asserted subject by the Identity Provider. The IDP Assertion contains the subject information either through attributes or through a unique identifier. Typically the local user is identified through a common attribute mapping such as email id. In some cases, the user identifier such as OpenID Identifier, or a SAML pseudo name is used. The following interface allows to check for the user presence.

```
/**
 *This interface checks the user presence based on the user attribute.
 **/
 public interface RegistrationStatus {
   public boolean isUserExists(String attributename, String value);
   }
```

The following diagram explains the invocation of the Registration Status Check Interface.

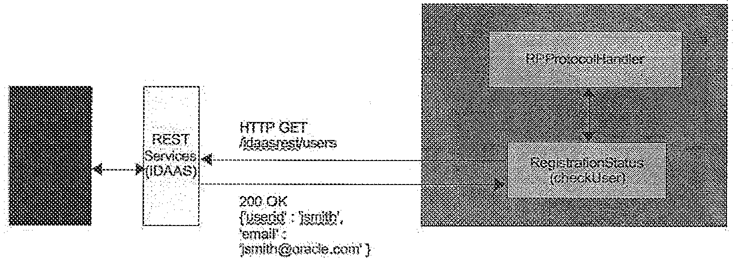

The above illustrates the Check User contract for IDM infrastructure where the REST services are front-ended to IDM to check the user presence. The RPProtocolHandler invokes the RegistrationStatus interface to check the user presence after the post IDP interaction.

### 3.3.5. Registration Task Flow Provider Interface:

The Registration Task Flow Provider Interface allows to create a user when there's no user present based on IDP Assertion. While this may be optional in some cases for e.g. enterprise cases, usually the internet applications present an option for a user to do the local user registration after authentication to an IDP.

The following interface is used to register the user.

```
/**
 * Registration Interface.
 */
 public interface UserRegistration {
  public boolean registerUser(String userid, Map attributes,
 RequestContext context, HttpServletRequest
  request, HttpServletResponse response);
  }
```

The implementations of this interface typically redirect to the existing internet application/AAA to complete the user registration. The RP does not have the end-user UI interface. The following may be possible for user registration.

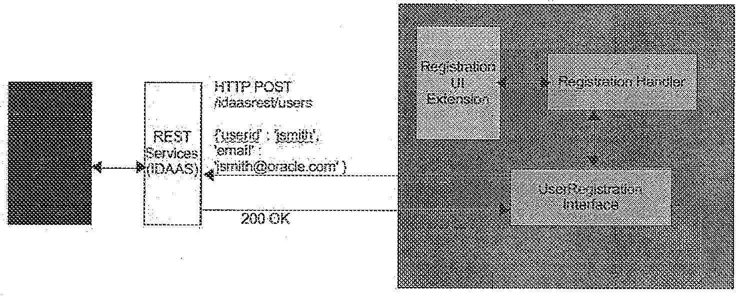

As shown in the above diagram, the Registration UI extension is part of RP infrastructure where it may present the user with pre-filled user attributes that are received from the Identity Provider. Once the user chooses to register, the UserRegistration Interface uses IDAAS REST services to create the user when Oracle IDM is used as a AAA together with the internet application.

### 3.3.6. Session Creation Provider Interface:

The session creation provider interface allows the user to access the website/internet application resources by creating a user session based on the IDP Assertion. The following interface defines the session creation provider.

```
/**
 * This interface allows to create a user session.
 */
 public interface SessionProvider {
   /**
    * Creates session
    * @param userid subject for the user session
    * @param attributes any user attributes that need to be set.
    * @pram context request context to dereference the initiation request.
    * @param request Http Servlet Request
    * @pram response Http Servlet Response
    */
   public boolean createSession(String userid, Map attributes,
 RequestContext context, HttpServletRequest
   request, HttpServletResponse response);
   }
```

The following diagram illustrates the session provider interface with OAM. The Session Provider is invoked by the RPProtocolHandler to create a user session. For OAM, the user information such as user id, user attributes are sent back to OAM using TAP mechanism with the original request context to create the user session.

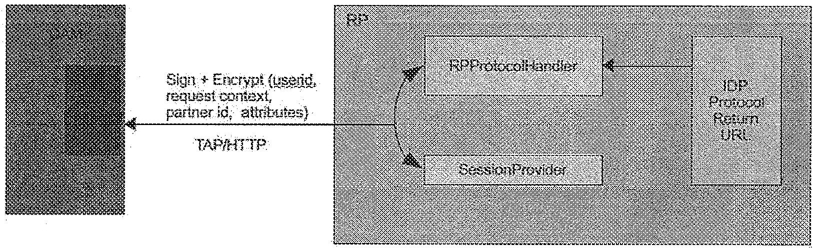

### 3.3.7. Configuration Provider Interface:

The RP infrastructure needs to support both standalone mode and as well as embedded mode. So, the RP configuration interface should be provider model where the configuration store is independent of the interface. The following diagram depicts the configuration SPI.

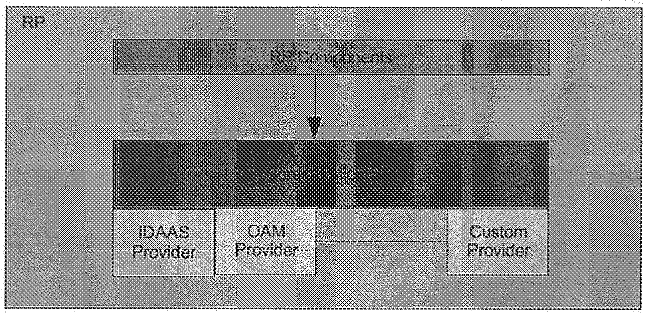

### 3.3.8. Attribute Mapper Interface:

The attribute map interface allows the RP to map the IDP protocol attributes to the local attributes. The local user attributes are usually associated with local repository schema which obviously differs from what the IDP protocols define. For example, OpenID defines first name attribute as "openid.ax.type.fname" which typically maps to "givenname" from LDAP user schema. The attribute mappings are configured per application in RP configuration.

```
 public interface AttributeMapper {
      /**
      * Returns the attribute value map for the corresponding attribute map.
 If there's no attribute mapping
      defined, but the attribute is available, the attribute value
 pair is set to the attribute received from the protocol.
       */
     public Map getAttributes(Map attributeMap);
 }
 public final class RPConfigManager {
    public AttributeMapper getAttributeMapper(String applicationID) {
       // return AttributeMapper
    }
 }
```

### 3.4. OAuth Design

OIC attempts to achieve the following objectives as part of OAuth client implementation.

### 3.4.1. Authentication:

OIC enables user (resources owner) authentication with OAuth providers, retrieve user profile information, optionally get user registered with the application(client). Here no access token returned to the application (like very much OpenID authn process).

OIC enables user (resource owner) authentication with OAuth providers, retrieve user profile information, optionally get user registered with the application(client). Here no access token returned to the application (like very much OpenID authn process).

Flow: Explained with Facebook as the OAuth provider.
3.4.1.1 IDP Selector contract: Application (client) uses RPfC's authentication provider (either through iframe or use app's own login ui built using RPfC's IDP REST service data).
3.4.1.2 Post IDP Selector contract: User selects a specific OAuth provider, say Facebook. It's url on the login page looks like below:
   http://sepc.us.oracle.com:18080/idaas_rp/RPInitServlet?applicationID=SamplePortal&protocol=oauth&selectedID P=Facebook
3. 4.1.3 IDP Interaction Provider contract: Once the user chooses an IDP, control goes to RPfC's RPInitReturnServlet. RP invokes OAuthHandler if the selected IDP protocol is OAuth, which in turn uses corresponding OAuthProvider implementation to do OAuth request/response flow. (Ex: Facebooklmpl - an oauth provider implementation returned by auth provider factory based on selectedIDP and protocol info supplied in the above url).
3. 4.1.4 Facebooklmpl does OAuth request/response flow like below.
   * Authorization code request with scope, redirect url, and client id. Here user gives consent. INFO: Redirection to following URL:
   https://graph.facebook.com/oauth/authorize?client_id=162875890440655scope=user_birthday,user_location,email & display=page&redirect_uri=http//sepc.us.oracle.com:8080/OAuthDemo/OAuthReturnServlet Facebooklmpl by default uses email, user_birthday and user_location scopes as part of user authentication to retrieve profile data.

Facebook authorization code response:
EGMOpgMz9UGBPasVF7kXSBHyarD0MIg5fNM-syW7v50.eyJpdi16InJzVE9TUWRzNEdPZkdjR0dRX20tNUEifQ.B26VRhRY1vMBx1BdoWF_I1q-7Kq81xY7JqIpZu24SCwtyLd64FE4GYIJXZtoRMGGcD96f7opzMDftHFLlyknY9d OADgqC3UANSrdiILwnxAgniRONh9-1J63QXG6sfCUePyq2MfejhkZ1sL8CLmi0A
* Access Token request with client id, client secret, redirect uri and authorization code: back channel communication
https://graph.facebook.com/oauth/access_token?client_id=162875890440655&redirect_uri=http//sepc.us.oracle.co m:8080/OAuthDemo/OAuthReturnServlet&client_secret=30628b7ccbbc421521d0bfbf944bfc55&code=EGMOpg Mz9UGBPasVF7kXSBHyarD0MIg5fNM-yW7v50.eyJpdiI

Facebook accesstoken response:
access_token=162875890440655|2.teYwXPWgVERRO_hgMr2BdQ_.3600.1304715600.1-100001298313088|r-SY98AzavDLaJrGcllgFsZQDRk&expires=6429
   Caching AccessToken and RefreshToken(if available) : Access token gets cached as explained in section 3.4.3.
3. 4.1.5 FacebookImpl does user profile request as below and gets the profile data.
   * Fetching user profile using access token:
   https://graph.facebook.com/me?access_token=162875890440655%7C2.Gcb19gQUbW59efeH3OOgHQ_.3600.13 04031600.1-100001298313088%7CVChG-TnkJ1IsbOnMDH2EAyG6Xt0
   response in JSON format:
      INFO: User Profile: {"id":"..","name":"..",....}
      RPfC process user profile data based on application's attributes mapping configuration.
3. 4.1.6 Registration Status check and Registration flow: OAuthRetumServlet invokes application's user registration contract by passing the profile data to it. The contract implementation checks whether the user is present using email address(or as specified in config) with the IdaaS REST service. If not present, then registration page shown based on contract (Application may have ifs own implementation or uses RPfC's default registration page).
3. 4.1.7. Session contract: If RPfC default provider get used, then creates a session and sets profile data into the session. If OAM contract used, then profile data gets set into TAP token.

### 3.4.2. Authorization:

OIC enables client to make specific authorization requests as described below:
3.4.2.1 Client specifies the scope and the OAuth provider for which the access token is needed. OIC in turn tries('tries' used as user consent involved) to return relevant access token to the client.
3.4.2.2 Client specifies the user profile attributes it needs from a OAuth provider. OIC in turn tries to fetch those from the OAuth provider and optionally facilitates updating user profile information through registration flow. (this use case applicable to OpenID providers as well).

OIC enables client to make specific authorization requests as described below:

### 3.4.2.1 Access token request: Client specifies the scope and OAuth provider for which the access token is needed and OIC in turn returns relevant access token to the client.

Flow:
Client sends scope data as a query parameter to RPInitServlet along with return url to which access token to be sent. Basically invoking Post IDP selector and IDP interaction contracts as explained in section 3.1.

Ex:
http://sepc.us.oracle.com:18080/idaas_rp/RPInitServlet?applicationID=SamplePortal&protocol=oauth&selectedID P=Facebook&scope=read_stram,publish _stream&returnURL=http://sampleportal.com/oauth_redirect Client specified scope gets forwarded to OAuth provider. RP gets the access token as described in section 3.1.4.
User profile information is also fetched using the access token. OAuthReturnServlet redirects to client specified return url along with the access token + user id + oauth provider name JSON data.

If no return url is mentioned, then consider it as error case.

Cache logic: Access token gets cached as explained in 3.3.

**3. 4.2.2 Attributes request:** Client specifies the user profile attributes it needs from a OAuth provider. OIC in turn tries to fetch those from the OAuth provider and optionally facilitates updating user profile information through registration flow (this use case applies to OpenID protocol as well). RPC stores application's attributes - oauth provider attributes mapping configuration.

### Flow:

### 3. 4.2.2.1 Client makes the request to RPfC with attributes and optionally with return url. Basically invoking Post IDP selector and IDP interaction contracts as explained in section 1.

### Ex:

http.//sepc.us.oracle.com:18080/idaas_rp/RPInitServlet?applicationID=SamplePortal&protocol=oauth&selectedID P=Facebook&attributes=al,a2&returnURL=http://sampleportal.com/oauth_redirect attributes query param may contain:
specific names
* or no value - means all the attributes configured in RPfC

If the user is already authenticated, then client shall send user identifier as a query parameter like below:
http://sepc.us.oracle.com:18080/idaas_rp/RPInitServlet?applicationID=SamplePortal&protocol=oauth&selectedID P=Facebook&attribubes=al,a2&userid=abc@fb.com&returnURL=http://sampleportal.com/oauth-_redirect

3.4.2.2.2 Based on user identifier, RP tries to get access token from the cache as explained in section 3.3. If no user identifier supplied, then RP does request/response flow (as described above 3.1.4) and makes attribute request as follows:
Case 1. Specific attributes mentioned: with FaceBookImpl
   https://graph.facebook.com/me?fields=a1,a2&access_token=2227470867|2.eZ5UyRegzovvA2K1qCgp0Q_.3600. 1304708400.0-100001298313088|m1cHHDKC9KcXAqJmK-PiujXc_3o&returnURL=http://sampleportal.com/oauth_redirect The attribute names need to be validated as specified in the application-attributes configuration.
   If an OAuth provider doesn't support requesting specific attributes rather all or none way, then RpfC gets the complete user profile data, then process the data based on the attributes mapping configuration.
Case 2. * or no value mentioned.
   https://graph.facebook.com/me?access_token=2227470867|2.eZ5UyRegzovvA2K1qCg0Q_.3600.1304708400.0 -100001298313088|m1cHHDKC9KcXAqJmK-PiujXc_3o

3. 4.2.2.3 After attributes fetched, OAuthReturnServlet redirects the attributes JSON response(or whatever the provider sends) back to the return url. If no return url is provided, then RpfC's default user registration processing gets done.

3. 4.2.2.4 Caching AccessToken and RefreshToken(if available) : Access token gets cached as explained in section 3.4.3.

### 3.4.3. Cache logic

Data to be cached: ApplicationID, ClientID(OIC id), UserID, Scope, AccessToken string, expiry time, RefreshToken string(if available) and any other attributes of AccessToken.

ClientID + UserID + Scope - as key and the object containing above data gets stored in the cache. UserID is basically decided as per the provider. For Facebook it is email address of the user to start with. Access token lookup: If an access token is available, check whether the token's expiry time.

If not expired, then use the access token.

If expired (remove the access token), then use the refresh token to get a new access token.

If refresh token itself expired, then kick off complete OAuth flow i.e. get authorization code, get access token etc. Client may optionally specify whether to use cached token or force RpfC to get a new access token as part of it's request to RpfC. The query parameter is: useCachedAccessToken=<true/false>

### 3.4.4. Configuration data

OAuthProvider (per provider)
- Name/ID (facebook, google, linkedin etc.)
- Authorization url - to get authorization code
- Access Token url - to get access token
- Profile url - to get user profile information.
- Attributes - user profile attribute names
- Scopes - list of resource permissions ??
- Consumer key - OIC application as consumer for the provider
- Consumer secret - OIC application as consumer for the provider
- OIC instance name - OIC instance registered with the provider, where a name needs to be given.
- OIC instance url - OIC instance registered with the provider, where a url of the instance to be given.

Application:
- per OauthProvider
   ∘ Attributes- list of user profile attributes application needs from the provider.
   ∘ Scopes - list of resource permissions ??
- Return url - to where access token to be sent.
- Attributes - application specific user profile attribute names

### 3.4.5. OIC registration with OAuth providers

OIC needs to register as an application with OAuth providers to facilitate OAuth communication. Each provider has their own registration process to follow in order to get the consumer key and secret. Here is some data points with some of the providers.

Facebook: Application setup: http://developers.facebook.com/setup/ (Sample application data after registration)
App Name: oic
App URL: http://sepc.us.oracle.com:18080/
App ID:204367999595412
App Secret: eaed1a1ef047791a03b02a74d5f95031

This data along with the following needs to be given while defining an OauthProvider in RpfC configuration.

Authorization URL :
https:/graph.facebook.com/oauth/authorize?client_id=%1$s&display=page&redirect_uri=%2$s Access Token URL :
https:/graph.facebook.com/oauth/access_token?client_id=%1$s&redirect_uri=%2$s&client_secret=%3$s&code= %4$s
Profile URL: https:/graph.facebook.com/me?access_token=1%1$s

Scopes supported: http://developers.facebook.com/docs/authentication/permissions/

### 4. Internal APIs/Classes

### 4.1. OpenID API

The OpenID is a lightweight protocol and uses only HTTP(s) requests and responses. The API described here is to provide extensible and reusable framework for an RP to support the OpenID protocol. The following illustrates the class diagram of various OpenID protocol elements.

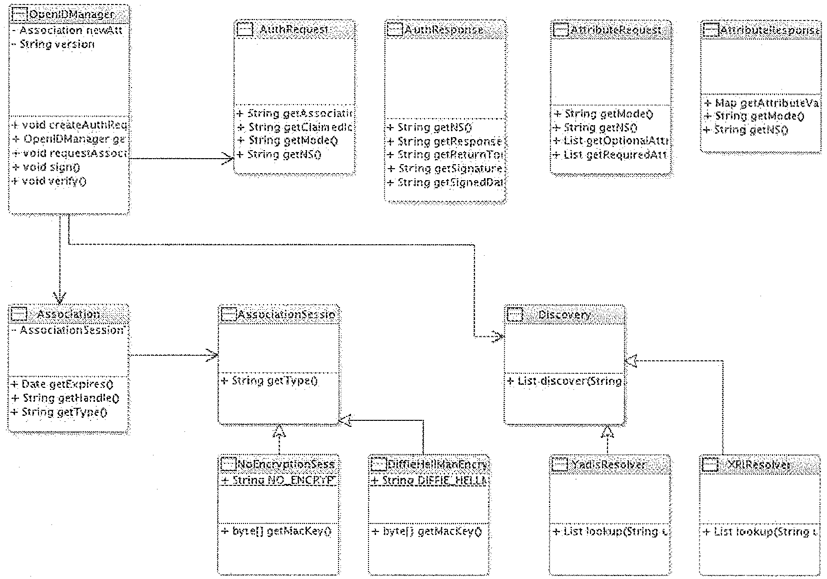

The following class descriptions describe the high level API calls

### 4.1.1. OpenIDManager

```
          /**
            * This is a manager class to create authentication requests,
 association requests, sign and
            * verify the request/responses etc. This is sort of entry
 class for the OpenID protocol invocation.
            */
          public final class OpenIDManager() {
               public OpenIDManager(String version) {
               }
               public AuthRequest createAuthRequest(String returnTo, String associationHandle) {
               }
               public Association getAssociation(String opEndpointUrl) {
               }
           }
```

### 4.1.2. Authentication/Attribute Requests

```
     /**
      * This class constructs the authentication requests to the OpenID provider.
      */
     public class AuthRequest {
          public AuthRequests(String mode, String associationHandle,
 String realm, String returnTo) {
          }
          public String getMode() {
          }
          public String getReam() {
          }
          // This method converts the OpenID parameters into
 the Map so that it can be added to the HTTP
          //request.
        public Map<String, String> getOpenIDParams() {
          }
     }
```

```
     /**
      * This class constructs the authentication response from the HttpServletRequest.
      */
     public class AuthResponse {
         // parses the authentication response from the OpenID provider
         public AuthResponse(HttpServletRequest request) {
         }
         public String getMode() {
         }
         public String getMode() {
        }
         public String Signature() {
        }
         public List getSignedElements() {
         }
         public String getClaimedId() {
         }
         public AttributeResponse getAttributeResponse() {
         }
         // Converts the OpenID Parameters into a map.
         public Map<String, String> getOpenIDParams() {
     }
     }
     /**
      * This class is to create an attribute request.
      */
     public class AttributeRequest {
          public AttributeRequest(List<String> requiredAttrs, List<String> optionalAttrs) {
          }
         public Map<String, String> getOpenIDParams() {
          }
     }
     /**
      * This class is to create an attribute response from the OpenID Provider response.
      */
      public class AttributeResponse {
          public AttributeResponse(HttpServletRequest request) {
          }
         // Returns the attribute value pair received from the OpenID Provider.
         public Map getAttributeValuePair() {
         }
         public Map<String, String> getOpenIDParams() {
          }
      }
```

### 4.1.3. Association

Associations are to establish a shared secret between Relying Party and the OpenID Provider.

```
/**
   * This class describes the Association that is established.
   */
  public class Association {
    public Association(AssociationSessionType sessionType, String associationHandle) {
     }
   public AssociationSessionType getSessionType() {
     }
    public String getHandle() {
     )
  )
```

```
  /**
  * This abstract class defines the association session type.,
 for e.g. no encryption, diffie-hellman etc.
   */
  public abstract class AssociationSessionType() {
      public String getType() {
      }
    public void setType(String type) {
  }
  }
```

```
 /**
  * This class extends from AssociationSessionType and to define the type of the session.
  */
 public class NoEncryptionSession extends AssociationSessionType() {
       public byte[] getMacKey() {
       }
  }
  public class DiffieHellManSession extends AssociationSessionType() {
      public byte[] getMacKey() {
       }
  }
 /**
 * This class creates the Association Request between RP and the OpenID Provider.
  */
 public class AssociationRequest {
      public AssociationRequest(String mode, String ns, Association association) {
      )
      public Association getAssociation() {
      }
      public Map<String, String> getOpenIDParams() {
      }
 }
 /**
  * This class parses the association response from the OpenID provider.
  */
 public class AssociationResponse {
      public AssociationResponse(HtttpServletRequest request) {
      }
      public Association getAssociation() {
      }
       public Map<String, String> getOpenIDParams() {
       }
  }
```

### 4.1.4. Discovery

Discovery is a process to look up the OpenID Provider endpoints and policies for the consumption of RP. The discovery protocol is the first protocol that the RP executes to find out the OP information. The OpenID defines three different ways, Yadis protocol, XRI resolution, and HTMLDiscovery.

```
/**
   * This class is the base class for resolving various op endpoints based on the URI.
   */
  public class Discovery {
      // discovers the urls based on the uri format.
     public List<String>discover(String uri) {
      }
  }
   /**
   * This class resolves the urls based on the Yadis protocol
 */
  public class YadisResolver {
      public List<String> lookup(String uri) {
      }
   }
  /**
   * This class resolves urls based on the XRI resolution on the XRI URI.
   */
  public class XriResolver {
      public List<String> lookup(String uri) {
      }
   }
```

### 4.2. RPProtocolHandler

The RPProtocolHandler interface is to invoke different protocol implementations for various tasks such as login/logout/contracts etc..

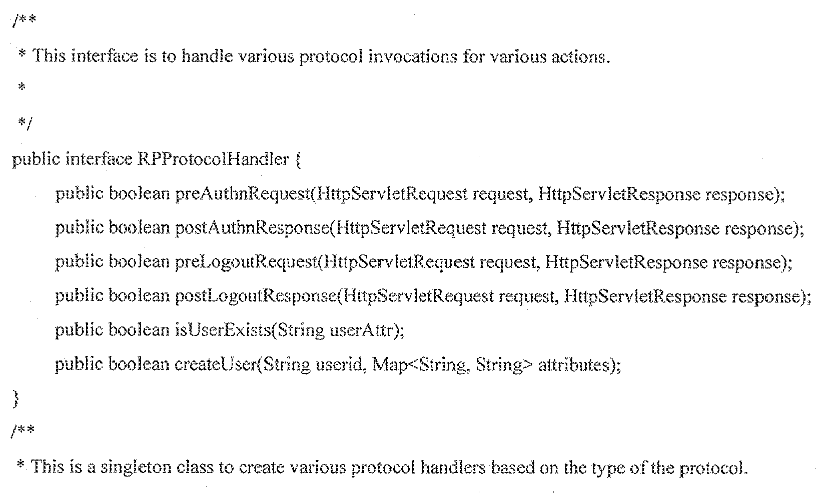

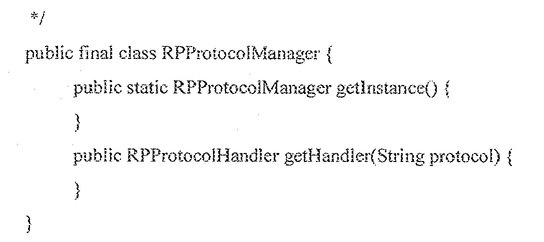

### 4.3. RequestContext

```
 /**
  * This class is to maintain the request context for a transaction.
  */
 public class RequestContext {
      public String getRequestID() {
      }
      public String getApplicationID() {
      }
 }
```

### 4.4. OAuth API/Classes

### High level class diagram :

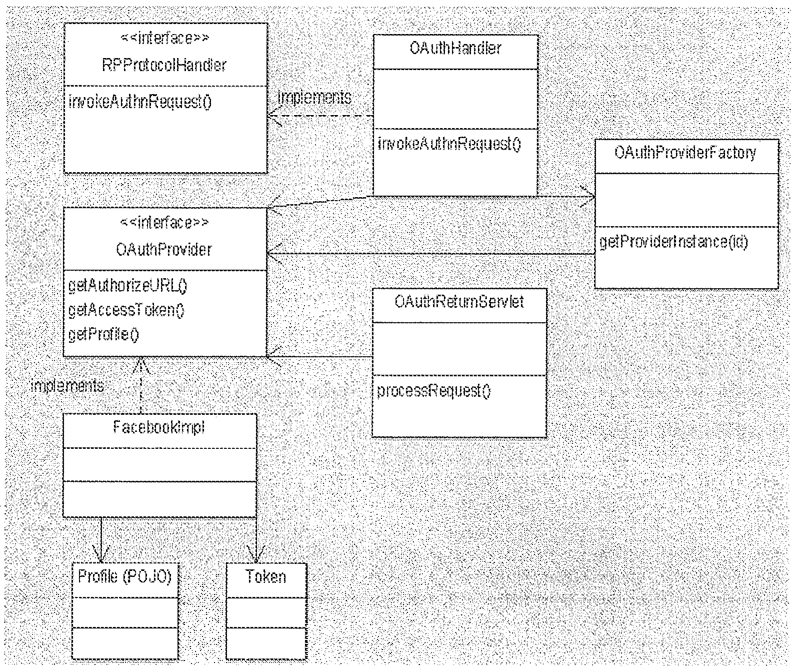

```
public interface OAuthProvider {
    /**
    * Returns the url to get authorization code.
    */
    public String getAuthorizeURL(String redirectUri) throws Exception;
    /**
    * Gets the access token using the authorization code.
    */
    public String getAccessToken(HttpServletRequest request) throws Exception;
    /**
    * Returns the Profile pojo using the access token.
    */
    public Profile getProfile() throws Exception;
  }
  public class OAuthProviderFactory {
   /**
    * It provides the instance of requested provider
    */
    public static OAuthProvider getInstance(final String id) throws Exception {
    }
  }
  public class OAuthHandler implements RPProtocolHandler {
    public Status invokeAuthnRequest (
     }
  }
  public class FacebookImpl implements OAuthProvider {
  }
```

### PART 6 OAuth Framework

### Objective

- *Enable customers to expand* & *extend their extranet service offerings based on emerging standards*
- *Combine the convenience of user-centric experience with the robust Identity Management and sophisticated risk mitigation capabilities of the Oracle IAM platform*

### OAuth

- Emerging User driven AuthZ protocol - Password anti-pattern.
   - In effect: User controlled limited scoped password/session
- Typically 4 entities are involved :
   - Service Provider or Resource Server- Offering access to a service or a resource
   - Authorization Sever-authz authority, token issuer
   - Resource Owner - User who "owns" the protected resources or service
   - Client - Entity (e.g. a server) who needs to access the service or resource based on Owners consent (Authorization)
- Enterprise Take:
   - SAML, WS-* : Can solve OAuth usecases if profiled appropriately but adoption will be hard.
   - Customer Reqs:
      - Ecommerce /Telco/Finance: Reap opportunities in the social network phenomenon
      - PaaS/SaaS : Simplicity - rope in developers and Sls for quick uptake+adoption
   - Possible Enhancements:
      - "Resource Owner" for enterprise resources:
         - Works well for enterprise resources owned by "humans"-e.g. : calendars, docs,
         - What about other enterprise resources/services - e.g.: customer leads, partner data, B2B
      - Security: Works well in SSL + Bearer token trust. Signing/encryption specs being built

### OAuth VS WS-Trust

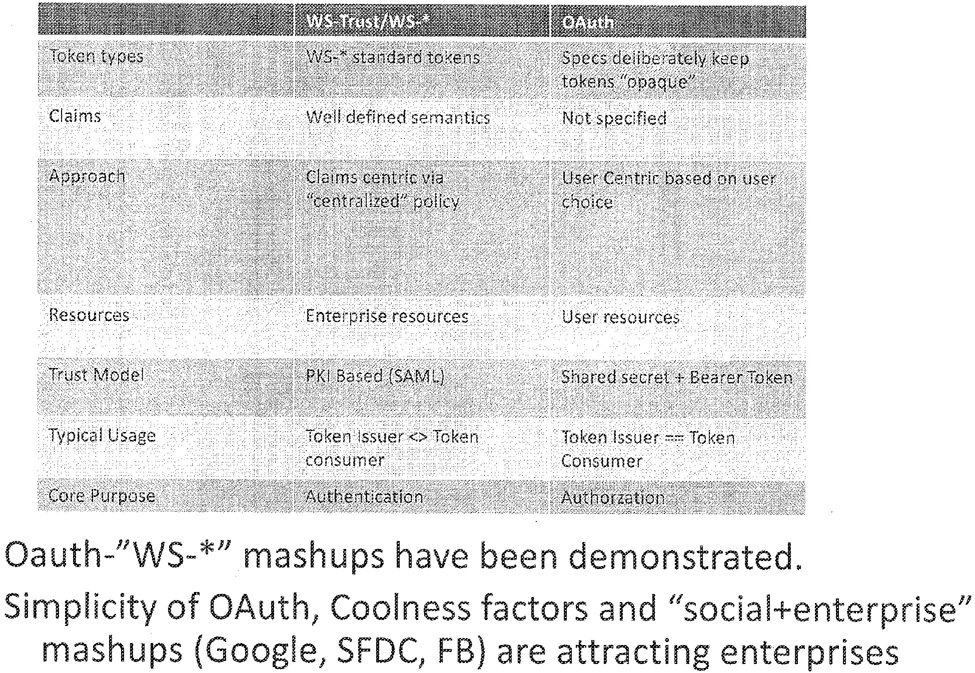

### Oracle OAuth Reference Architecture

- *OAuth Framework* provides the basic conceptual structure.
- Layers on top of existing Identity Products
- *Contracts* clearly define integration points
- *OAuth Framework + Contract implementations* fulfill misc usecases and deployment options.
- 2 broad "roles" :
   - Consumer/Client Role
   - Resource Server Role
- Caters to both 2-legged and 2 legged OAuth

### Proposed "OAuth Framework"

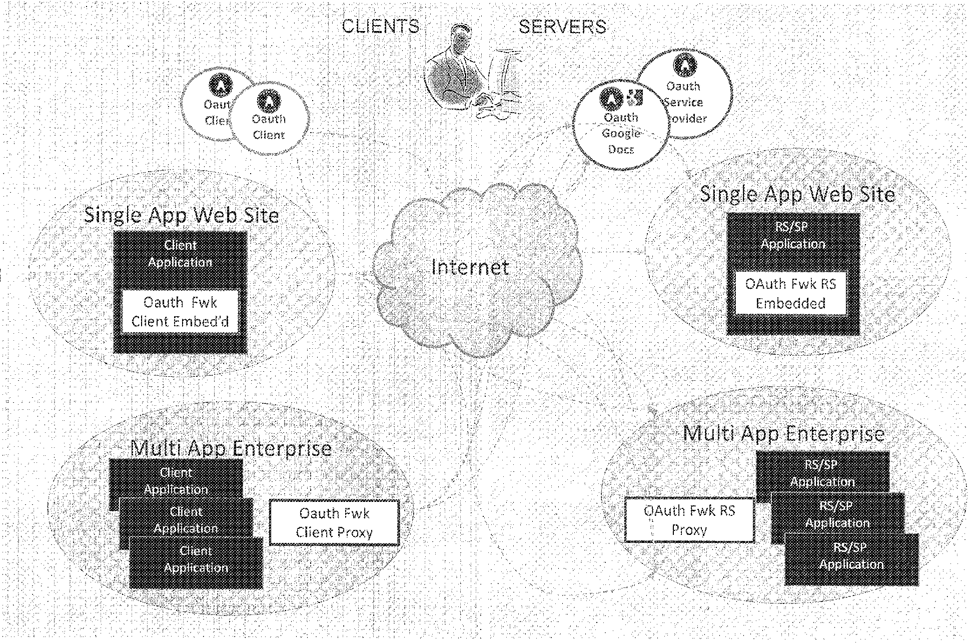

### Oauth Framework : Client Role

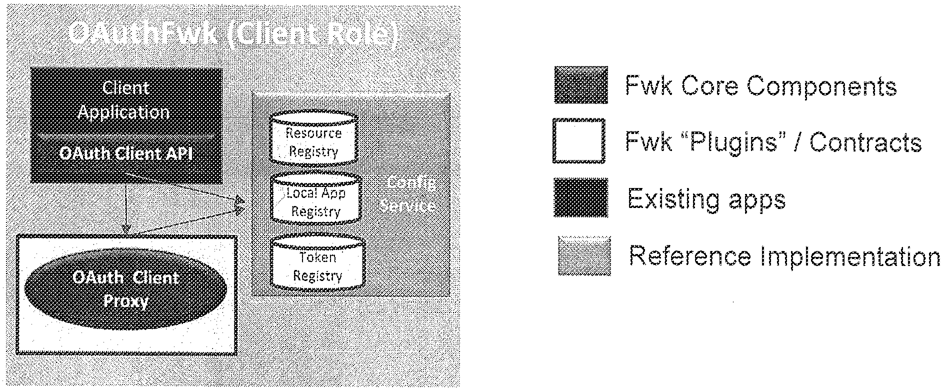

**Resource Registry :** Stores trust keys, remote resources, scopes and misc metadata related to remote Oauth compliant RS/SPs.
**Local App Registry :** Stores trust keys, access control info on local Apps that will exercise Oauth Client role to access remote resources.
**Token Registry :** Stores Access Tokens, Refresh tokens obtained from remote RS/SPs.

### Oauth Framework : Server Role

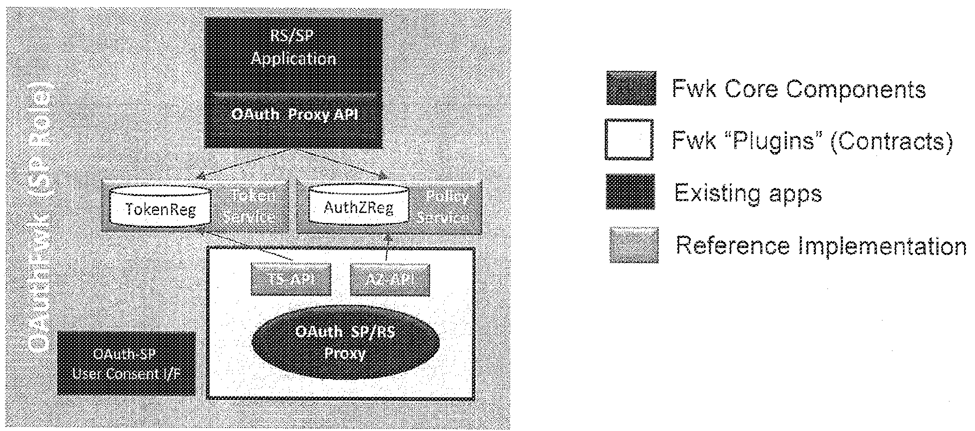

**Resources+Local Apps Registry :** Stores resource info, scopes and misc metadata related to resources and services exposed via Oauth.
**Client Registry :** Stores trust keys/secrets for authorized remote clients.
**Token Registry :** Stores access and refresh tokens issued to clients based on user consent.
**Authorization Registry :** AuthZ info related to issued acess tokens

### OAuth Flow Overview : 2 Roles

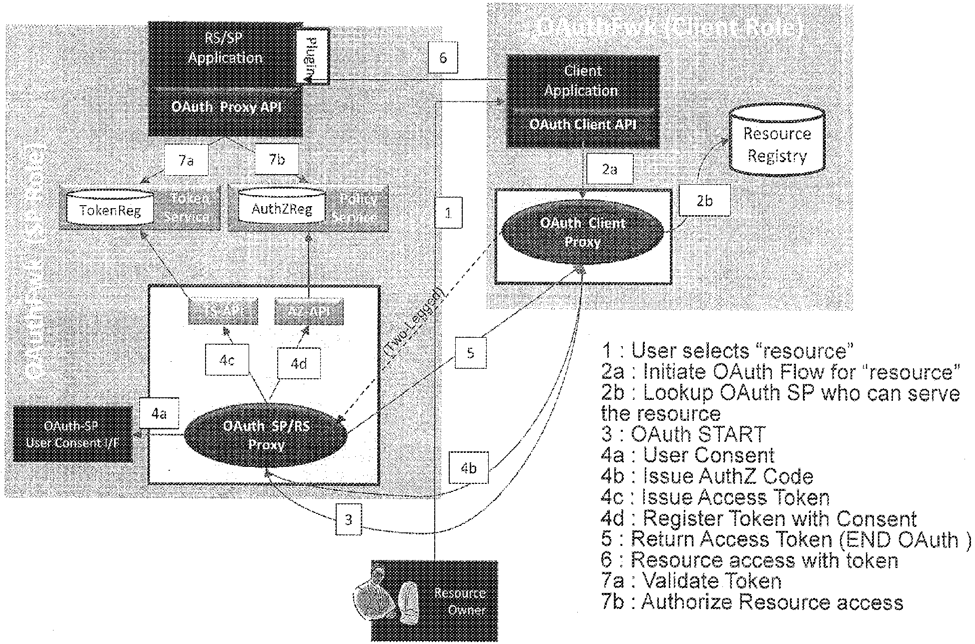

### OAuthClient : Summary

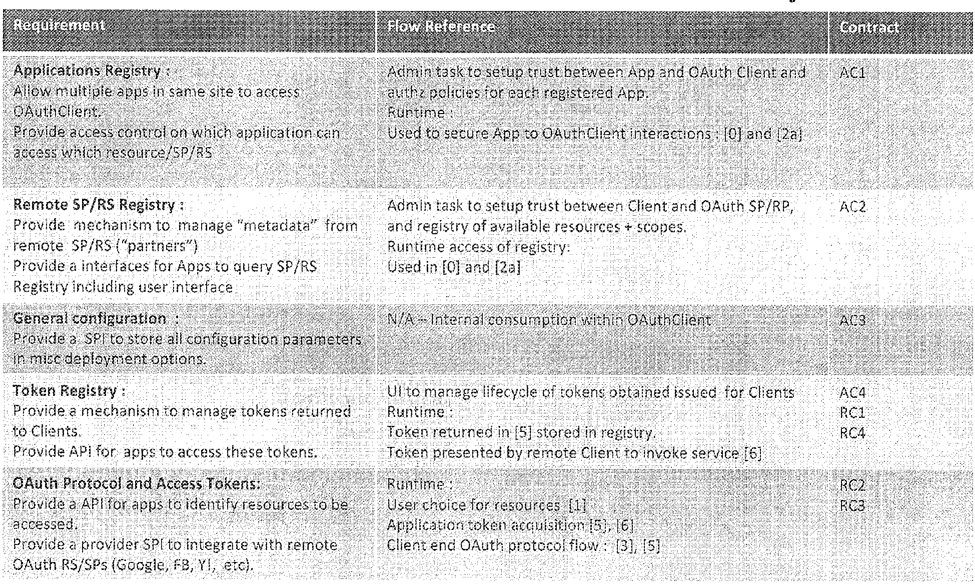

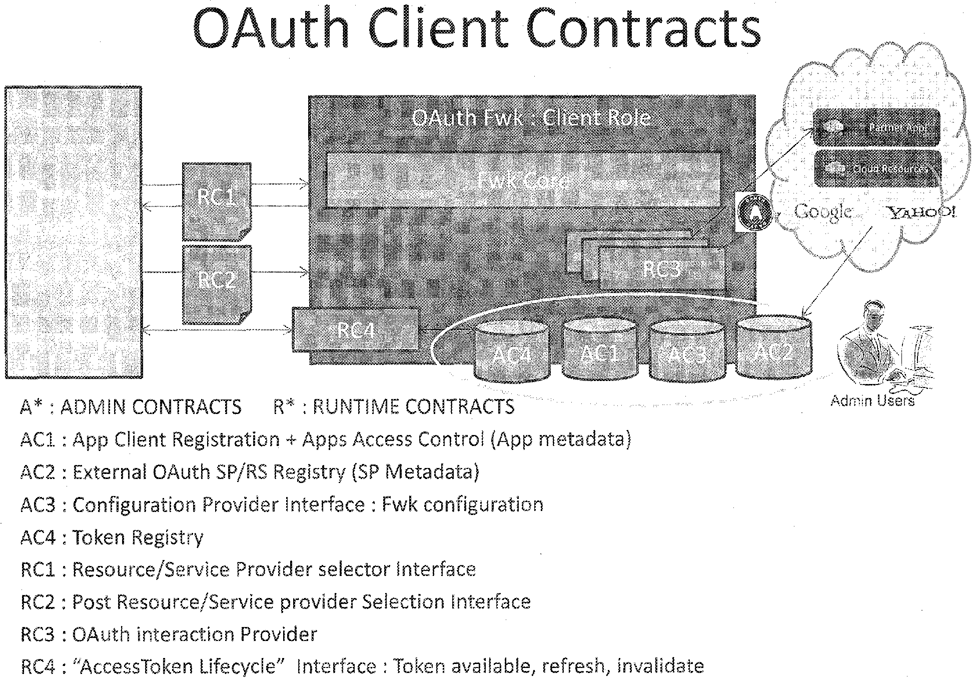

### OAuth - Client Contracts

- [AC1] OAuth Applications and Client Registry
   - Oauth Protocol Client configuration (secrets, endpoints)
   - Applications registration, access control on which app and user can access what SP/RSs.
- [AC2] OAuth SP/RS Registry
   - Oauth RS and SP metadata - endpoints, scopes, resourcrs available
- [AC3] Configuration Provider Interface
   - This Interface allows the fwk to leverage an existing configuration store for its own configuration data. The intent here is to provide seamless configuration/administration with the environment in which the fwk is deployed.
- [AC4] Token registry: persisted access and refresh tokens for future use.
- [RC1] Resource/Service Provider selector Interface [C1]
   - This contract allows the web site (local App) to query the fwk for available resource/service providers and scope+resources available.
- [RC2] Post Resource/Service provider Selection Interface: [C2]
   - This contract allows redirection to the fwk to initiate the OAuth Client flow. This includes all parameters needed by the fwk to initiate the OAuth client flow.
- [RC3] OAuth interaction Provider
   - This contract is a SPI - providers of this SPI include implementations for vanilla OAuth, specific OAuth implementations (+ other authz protocols in the future). This contract is primarily to enable system integrators, customers and future development to cleanly add new providers without major changes to the core framework. This contract provides sub-contracts:
   - Execute appropriate OAuth protocol with SP
   - Retrieve "Access Token"
   - API to secure resource request.
   - Lifecycle of Access token - refresh token, persist token, invalidation
- [RC4] "AccessToken Lifecycle" Interface [C6]
   - The main contract is a SPI that communicates the final "Access Token" to the local App/Web Site
   - APIs to refresh tokens and to invalidate tokens.

### Client : Fwk Security Model

- Ensure only authorized apps and users are allowed to initiate OAuth protocol
   - Subjects : App Identity + Authenticated User
   - Resources : RS/SP id + Scope + Resource
- Ensure only authorized users can manage Access Token lifecycle (refresh, invalidation)
- Only Authorized users can configure the Fwk
   - Restricted access to : keystores, secrets, misc config

### OAuth Client Role : Flow

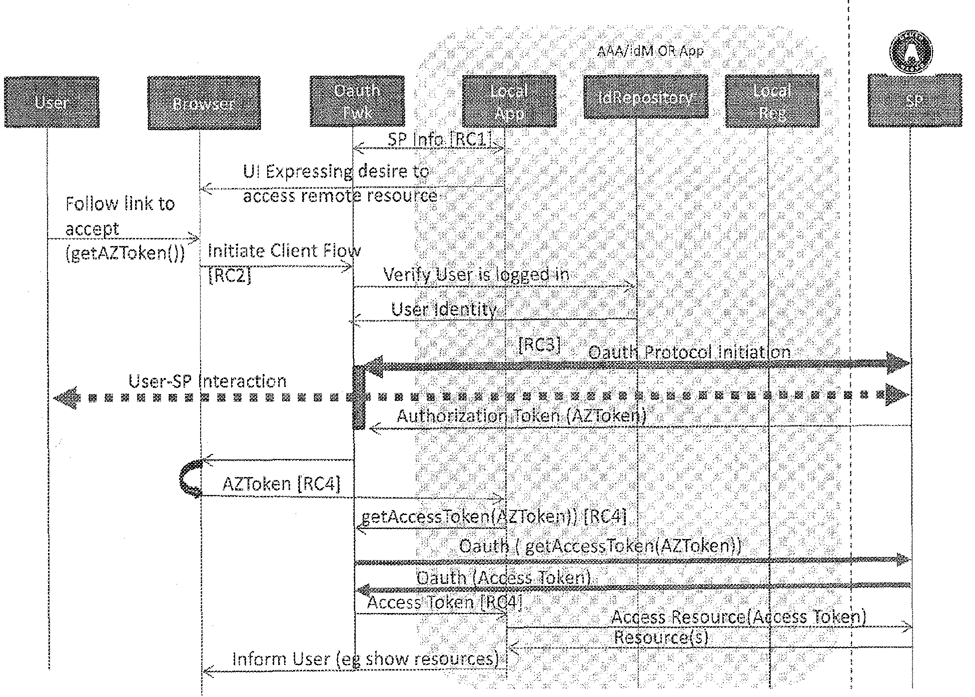

### OAuth SP/RS Role : Summary

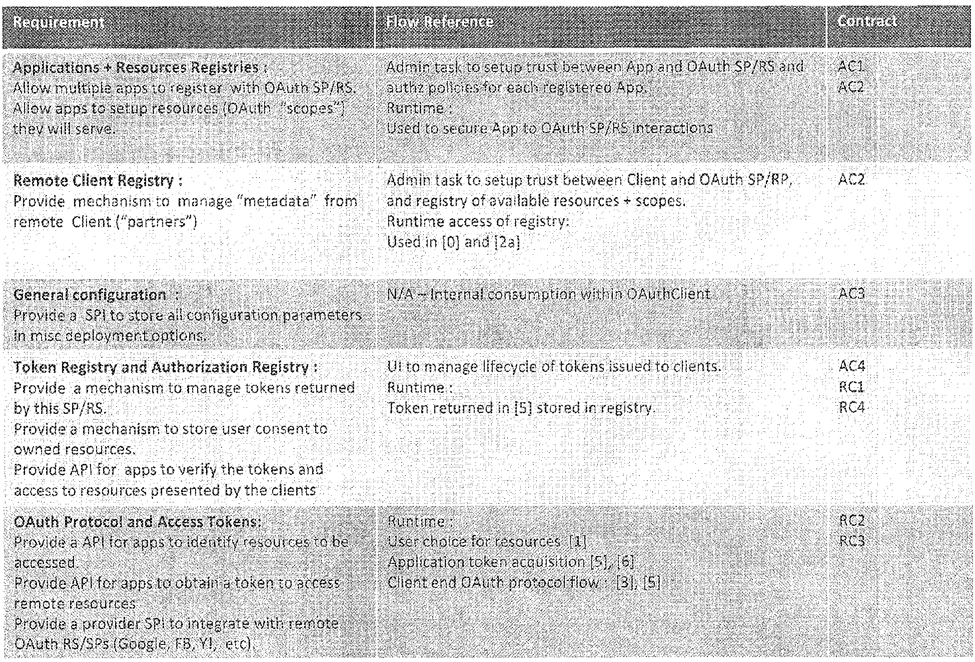

### OAuth - SP Contracts

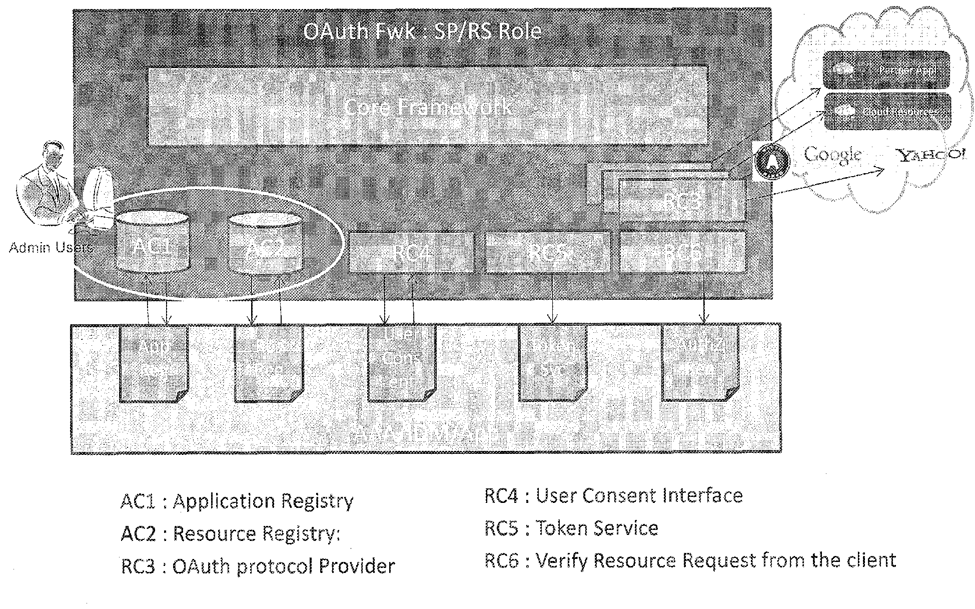

### OAuth - SP Contracts

- Application Registry :[AC1]
   - This contract stores remote application (client) credentials and metadata. This contract MAY additional provide a web UI for remote applications to self register.
- Resource Registry: [AC2]
   - This optional contract provides a registry representing OAuth protected resource types and resources. The contract is used by the optional "user consent" UI provided by RPfC (See [RC4]).
- OAuth protocol Provider [RC3]
   - This contract is a SPI - providers of this SPI include implementations for vanilla OAuth, specific OAuth implementations, other protocols. This contract is primarily to enable system integrators, customers and future development to cleanly add new providers without major changes to the core framework.
- User Consent Interface [RC4]
   - The main contract is a SPI . The configured provider is invoked in the user consent /authorization step of OAuth protocol. A default implementation of the SPI MAY be provided. The interface could also use a "redirect" to a preconfigured URL. Identity of the client and resource related parameters are passed to this interface. In return a list of selected resources is expected. Note that before the user is actually asked consent the user is authenticated.
- Token Service [RC5]
   - This is a core contract invoked in the middle of OAuth protocol flow right after a successful user consent. The subcontracts are:
      - Issue Access Token representing the resource consent
      - Issue the corresponding refresh token
      - Token query for a user
      - Token revocation by the user
- Verify Resource Request from the client [RC6]
   - This Is a optional interface provided by RPfC-to verify a resource request from the client. When turned on, this function can either behave as a programmatic API call or a proxy (e.g. a servlet filter or a gateway). It provides the following :
      - Verify access token (validity, proof of possession, signatures, etc)
      - Verify resource access is allowed using the access token.

### OAuth SP Role : Flow

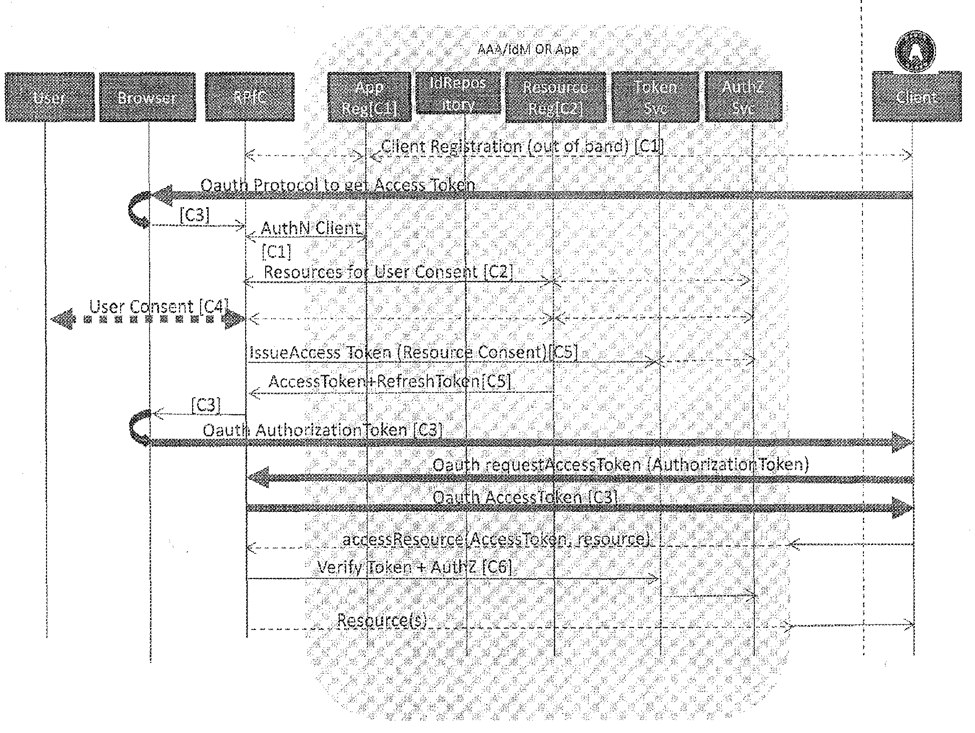

### SP/RS : Fwk Security Model

- Ensure Clear mapping of "Resource Owners" and scope+resources
   - Subject: Authenticated User
   - Resources : Resource server+ Scope + Resource
- Ensure only Resource Owners can provide consent to requested resources
- Ensure only authorized users can manage Access Token lifecycle (refresh, invalidation)
- Only Authorized users can configure the Fwk
   - Restricted access to : keystores, secrets, misc config

### OAuth Enablement Framework Deliverables

- Embeddable and Proxy form factors
- Part of RPfC or add-on
- Integration points
   - Authentication (OAM)
   - Platform API (OPSS)
   - Policy Services (OES, OAM)
   - Token Services (OSTS)

### Thoughts on Enterprise Use Castes

- MyHealth Portal : manage+track access to personal med info
- CRM-OD obtaining Sales forecast doc from Google Docs
- Intuit : Long lived "sessions" without the overhead of traditional sessions.
- OAuth for RESTful services (Web Center, Cloud Provisioning)
- Batch processing/offline processing use cases
- SAML with OAuth.
- Key OAuth characteristics:
   - Sort of "Password" with "well defined scope"
   - Adjustable lifetime (lease can be refreshed, revoked)
   - User consent (potentially can be automated for Server "identities"
   - Revocable

### Demo : MyHeathCare Portal

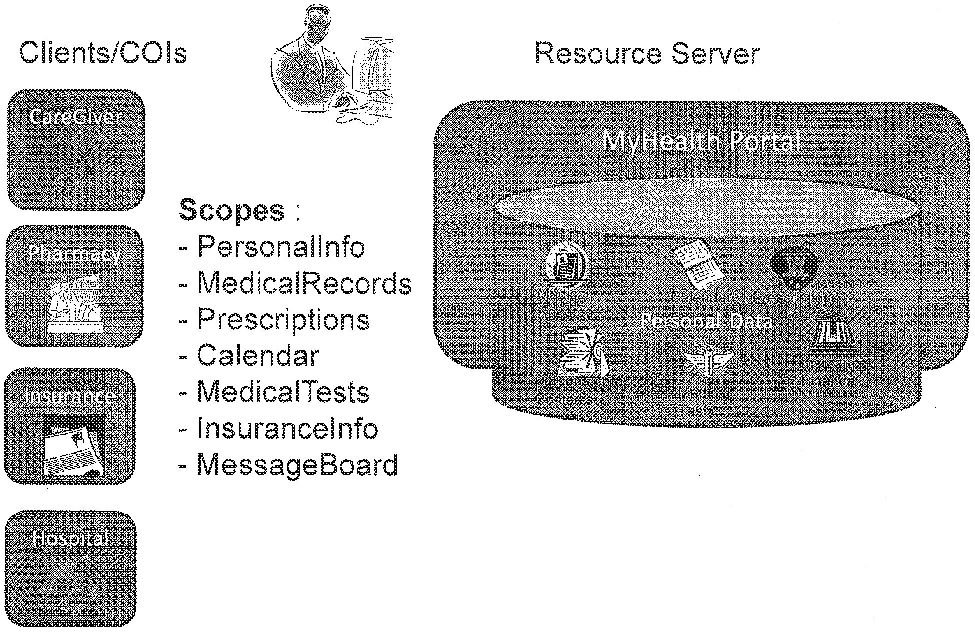

### Health Care Portal Website

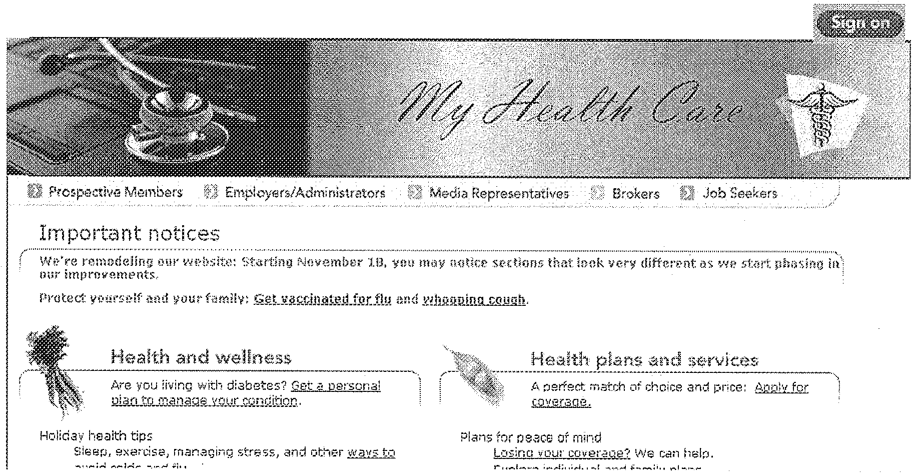

- Prior "business" relationship established - 2 way between clients and Portal.
- 3 flows:
   . "Resource Server" first scenario - user selects trusted clients from Portal
   . "Consumer/Client" first scenario - user discovers Portal as he/she visits the consumer/client websites
   . 2 - Iegged OAuth

### 3-Iegged - user consent

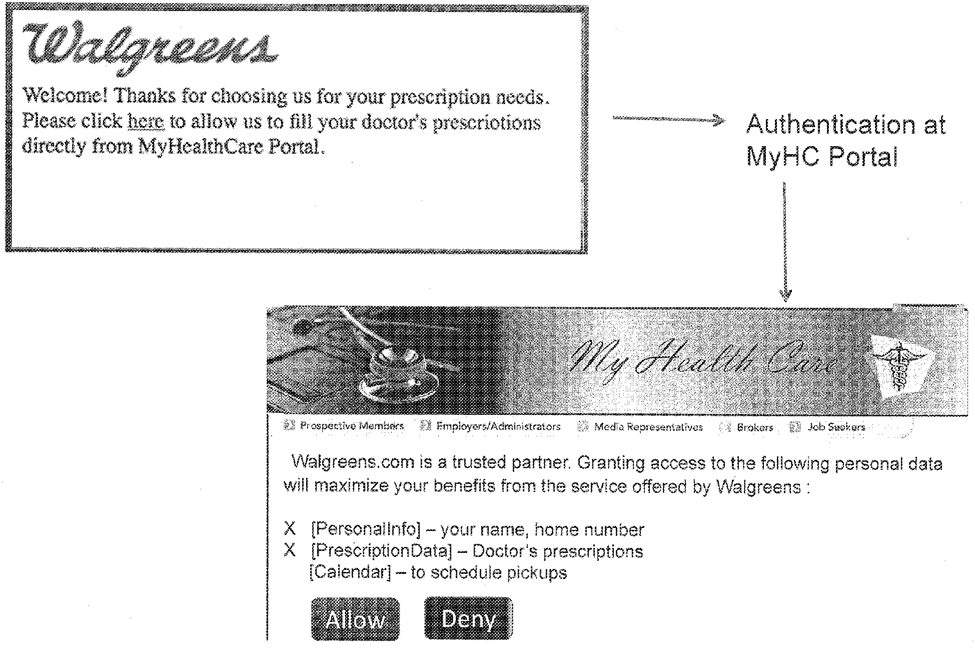

### OAuth Token Lifecycle Management

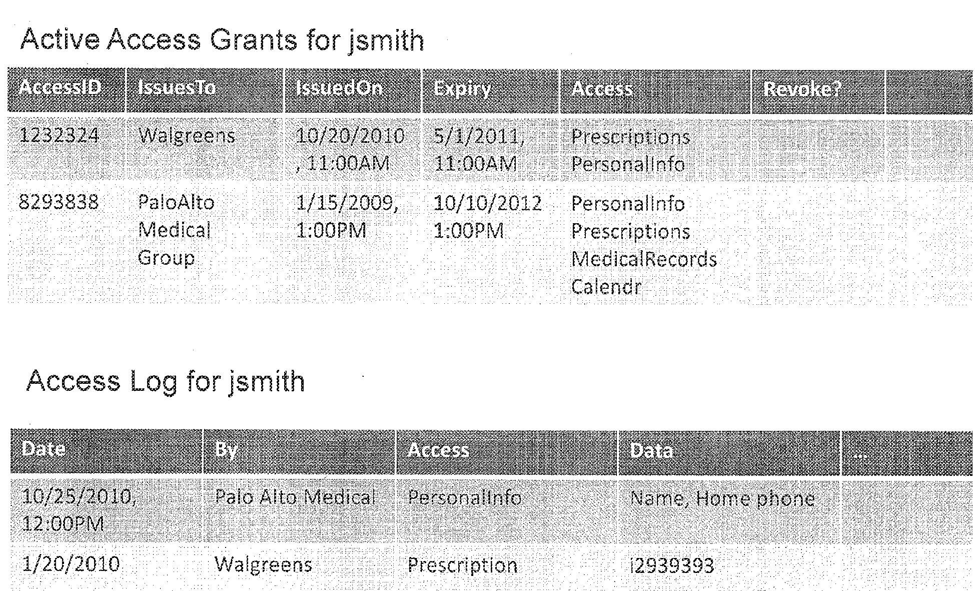

### PART 7: High Level Information

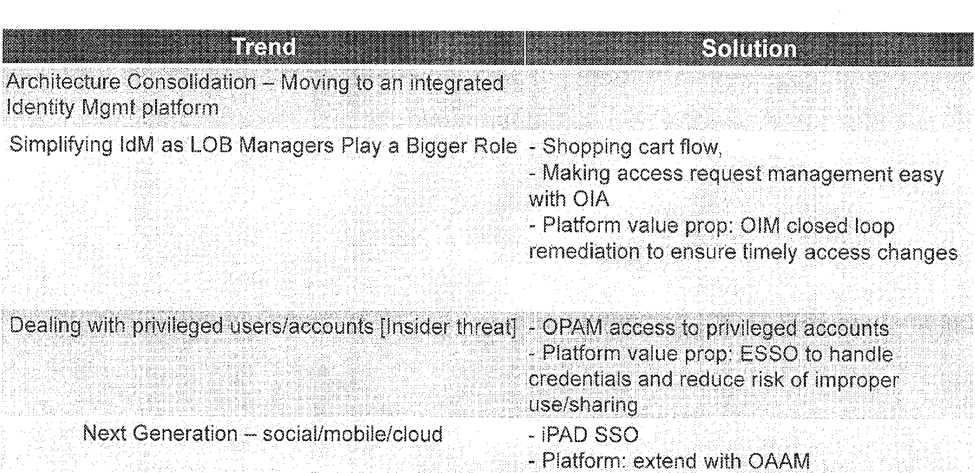

### Architect Consolidation

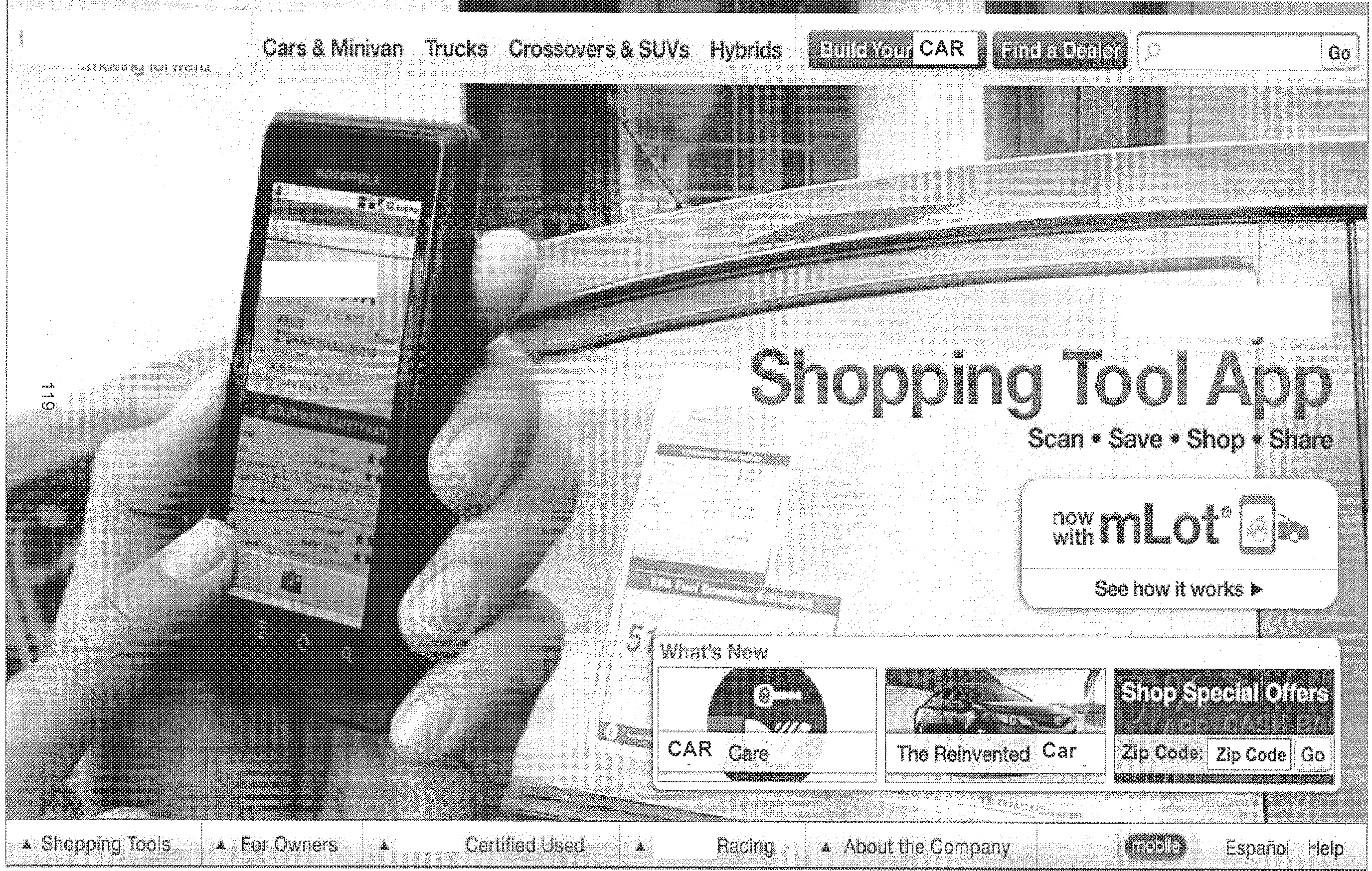

### Identify Management - Self-service

### Key Messages

- Demonstrate how a business user can get himself access to roles and entitlements relevant to his job function without any assistance from IT
- A business user can search for relevant roles and entitlements based on Job function, title, Organization that the user belongs to etc.
- User can group them into a shopping cart and submit a request for access
- Manager can review the approval request, evaluate the requested roles and entitlements and approve or deny request
- User is then provisioned appropriate resources

### OIM Shopping Cart

- A business user Searches for the keyword "Director" in the Catalog
- User sees a list of Entitlements and Accounts along with a Recommendation Score (1-5 Stars) that indicates whether the access is recommended for the user - this information is generated based on the user's organization and the sub-organization
- User refines the search to narrow down the results based on "Job Function" and receives a refined List
- User adds a Role and two Entitlements to the Shopping Cart
- User submits the cart and gets a Request Summary with a Request ID for tracking purposes
- The Request summary shows that the request is pending approval from the User's manager
- Demonstrate the approval workflow from this point on

### Managed Privileged Accounts

### Key Messages

- Tracking privileged accounts is a difficult challenge in an Organization
- Password management, access control and auditing of access to Privileged accounts

### OPAM and ESSO

- A Solaris administrator needs to apply a patch on a specific server as root user
- The administrator uses OPAM to search for servers he is entitlement to administer based on access policies. Upon finding the server, the administrator retrieves the password through a checkout process.
- User is allowed to check out the password upon providing justification
- User connects to the server via Putty. ESSO Shared Account Manager (SAM) verifies that the user is allowed to access the system and provisions the password into the Putty login session
- The password is automatically populated and the user is logged in.
- Upon completing the patching, user checks-in the password back via OPAM.
- OPAM generates a detailed audit log

### Next Generation - social/mobile/cloud

### iPAD SSO

- Platform: extend with OAAM

### iPAD (OIC)

- A user browses to Reference Portal
   - The user tries to access data that requires an internet identity or local account
   - The application offers a log in with a local account or an internet identity such as Facebook
   - Choose Facebook, and is redirected to Facebook
   - Facebook asks if the user wants to authorize the portal
   - Facebook asks the user to authenticate, and returns the user to the Portal once authenticated
   - The Portal asks the user if he/she wishes to create a local account; the user creates a password
   - The Portal displays the requested data
- The user tries to access data that requires a local account
   - The application requires the user to use a local account
   - The user provides the username and password created earlier
   - The Portal displays the requested data

### APPENDIX

Fig. 1 is a simplified block diagram illustrating components of a system environment 100 that may be used in accordance with an embodiment of the present invention. As shown, system environment 100 includes one or more client computing devices 102, 104, 106, 108, which are configured to operate a client application such as a web browser, proprietary client (e.g., Oracle Forms), or the like. In various embodiments, client computing devices 102, 104, 106, and 108 may interact with a server 112.

Client computing devices 102, 104, 106, 108 may be general purpose personal computers (including, by way of example, personal computers and/or laptop computers running various versions of Microsoft Windows and/or Apple Macintosh operating systems), cell phones or PDAs (running software such as Microsoft Windows Mobile and being Internet, e-mail, SMS, Blackberry, or other communication protocol enabled), and/or workstation computers running any of a variety of commercially-available UNIX or UNIX-like operating systems (including without limitation the variety of GNU/Linux operating systems). Alternatively, client computing devices 102, 104, 106, and 108 may be any other electronic device, such as a thin-client computer, Internet-enabled gaming system, and/or personal messaging device, capable of communicating over a network (e.g., network 110 described below). Although exemplary system environment 100 is shown with four client computing devices, any number of client computing devices may be supported. Other devices such as devices with sensors, etc. may interact with server 112.

System environment 100 may include a network 110. Network 110 may be any type of network familiar to those skilled in the art that can support data communications using any of a variety of commercially-available protocols, including without limitation TCP/IP, SNA, IPX, AppleTalk, and the like. Merely by way of example, network 110 can be a local area network (LAN), such as an Ethernet network, a Token-Ring network and/or the like; a wide-area network; a virtual network, including without limitation a virtual private network (VPN); the Internet; an intranet; an extranet; a public switched telephone network (PSTN); an infra-red network; a wireless network (e.g., a network operating under any of the IEEE 802.11 suite of protocols, the Bluetooth protocol known in the art, and/or any other wireless protocol); and/or any combination of these and/or other networks.

System environment 100 also includes one or more server computers 112 which may be general purpose computers, specialized server computers (including, by way of example, PC servers, UNIX servers, mid-range servers, mainframe computers, rack-mounted servers, etc.), server farms, server clusters, or any other appropriate arrangement and/or combination. In various embodiments, server 112 may be adapted to run one or more services or software applications described in the foregoing disclosure. For example, server 112 may correspond to a server for performing relying party and open authorization processing according to an embodiment of the present invention.

Server 112 may run an operating system including any of those discussed above, as well as any commercially available server operating system. Server 112 may also run any of a variety of additional server applications and/or mid-tier applications, including HTTP servers, FTP servers, CGI servers, Java servers, database servers, and the like. Exemplary database servers include without limitation those commercially available from Oracle, Microsoft, Sybase, IBM and the like.

System environment 100 may also include one or more databases 114, 116. Databases 114, 116 may reside in a variety of locations. By way of example, one or more of databases 114, 116 may reside on a non-transitory storage medium local to (and/or resident in) server 112. Alternatively, databases 114, 116 may be remote from server 112, and in communication with server 112 via a network-based or dedicated connection. In one set of embodiments, databases 114, 116 may reside in a storage-area network (SAN) familiar to those skilled in the art. Similarly, any necessary files for performing the functions attributed to server 112 may be stored locally on server 112 and/or remotely, as appropriate. In one set of embodiments, databases 114, 116 may include relational databases, such as databases provided by Oracle, that are adapted to store, update, and retrieve data in response to SQL-formatted commands.

Fig. 2 is a simplified block diagram of a computer system 200 that may be used in accordance with embodiments of the present invention. For example server 102 may be implemented using a system such as system 200. Computer system 200 is shown comprising hardware elements that may be electrically coupled via a bus 224. The hardware elements may include one or more central processing units (CPUs) 202, one or more input devices 204 (e.g., a mouse, a keyboard, etc.), and one or more output devices 206 (e.g., a display device, a printer, etc.). Computer system 200 may also include one or more storage devices 208. By way of example, the storage device(s) 208 may include devices such as disk drives, optical storage devices, and solid-state storage devices such as a random access memory (RAM) and/or a read-only memory (ROM), which can be programmable, flash-updateable and/or the like.

Computer system 200 may additionally include a computer-readable storage media reader 212, a communications subsystem 214 (e.g., a modem, a network card (wireless or wired), an infra-red communication device, etc.), and working memory 218, which may include RAM and ROM devices as described above. In some embodiments, computer system 200 may also include a processing acceleration unit 216, which can include a digital signal processor (DSP), a special-purpose processor, and/or the like.

Computer-readable storage media reader 212 can further be connected to a computer-readable storage medium 210, together (and, optionally, in combination with storage device(s) 208) comprehensively representing remote, local, fixed, and/or removable storage devices plus storage media for temporarily and/or more permanently containing computer-readable information. Communications system 214 may permit data to be exchanged with network 1610 and/or any other computer described above with respect to system environment 1600.

Computer system 200 may also comprise software elements, shown as being currently located within working memory 218, including an operating system 220 and/or other code 222, such as an application program (which may be a client application, Web browser, mid-tier application, RDBMS, etc.). In an exemplary embodiment, working memory 218 may include executable code and associated data structures used for relying party and open authorization-related processing as described above. It should be appreciated that alternative embodiments of computer system 200 may have numerous variations from that described above. For example, customized hardware might also be used and/or particular elements might be implemented in hardware, software (including portable software, such as applets), or both. Further, connection to other computing devices such as network input/output devices may be employed.

Storage media and computer readable media for containing code, or portions of code, can include any appropriate media known or used in the art, including storage media and communication media, such as but not limited to volatile and non-volatile (non-transitory), removable and non-removable media implemented in any method or technology for storage and/or transmission of information such as computer readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, data signals, data transmissions, or any other medium which can be used to store or transmit the desired information and which can be accessed by a computer.

Although specific embodiments of the invention have been described, various modifications, alterations, alternative constructions, and equivalents are also encompassed within the scope of the invention. Embodiments of the present invention are not restricted to operation within certain specific data processing environments, but are free to operate within a plurality of data processing environments. Additionally, although embodiments of the present invention have been described using a particular series of transactions and steps, it should be apparent to those skilled in the art that the scope of the present invention is not limited to the described series of transactions and steps.

Further, while embodiments of the present invention have been described using a particular combination of hardware and software, it should be recognized that other combinations of hardware and software are also within the scope of the present invention. Embodiments of the present invention may be implemented only in hardware, or only in software, or using combinations thereof.

The specification and drawings are, accordingly, to be regarded in an illustrative rather than a restrictive sense. It will, however, be evident that additions, subtractions, deletions, and other modifications and changes may be made thereunto.

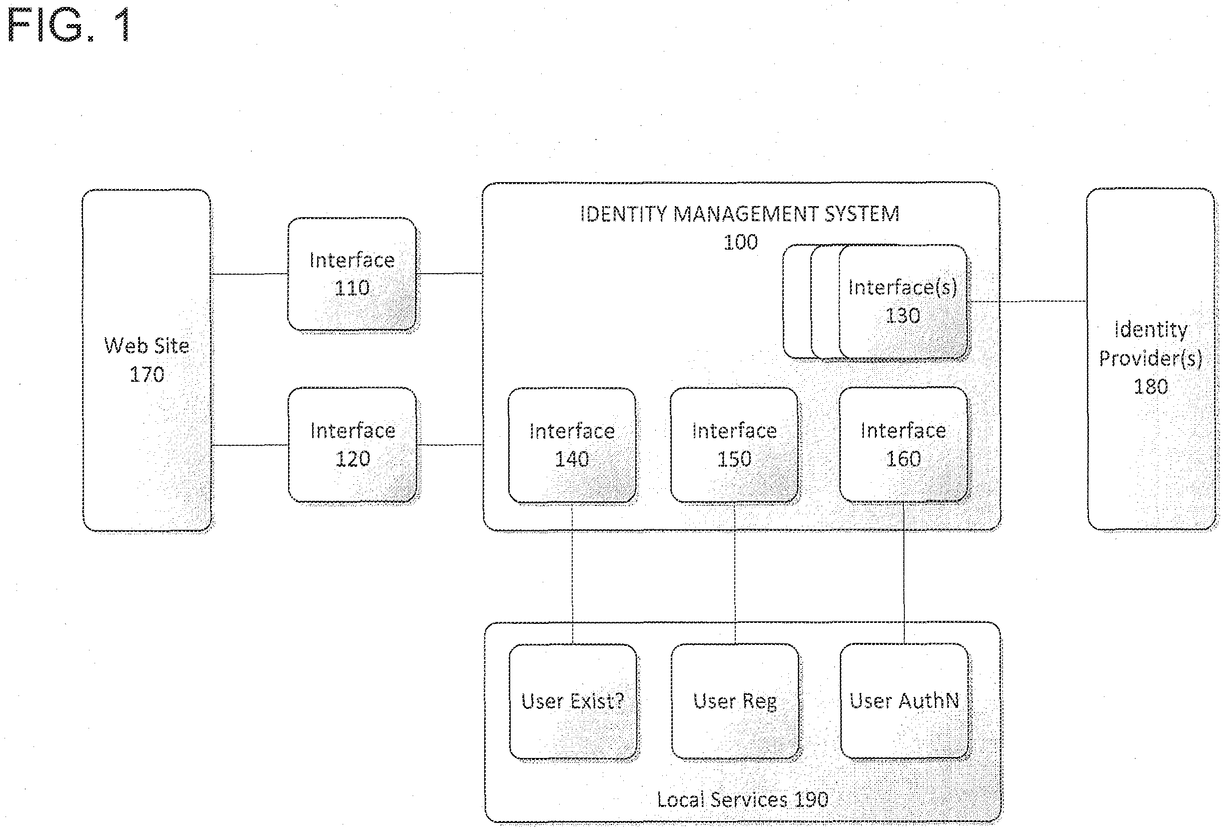

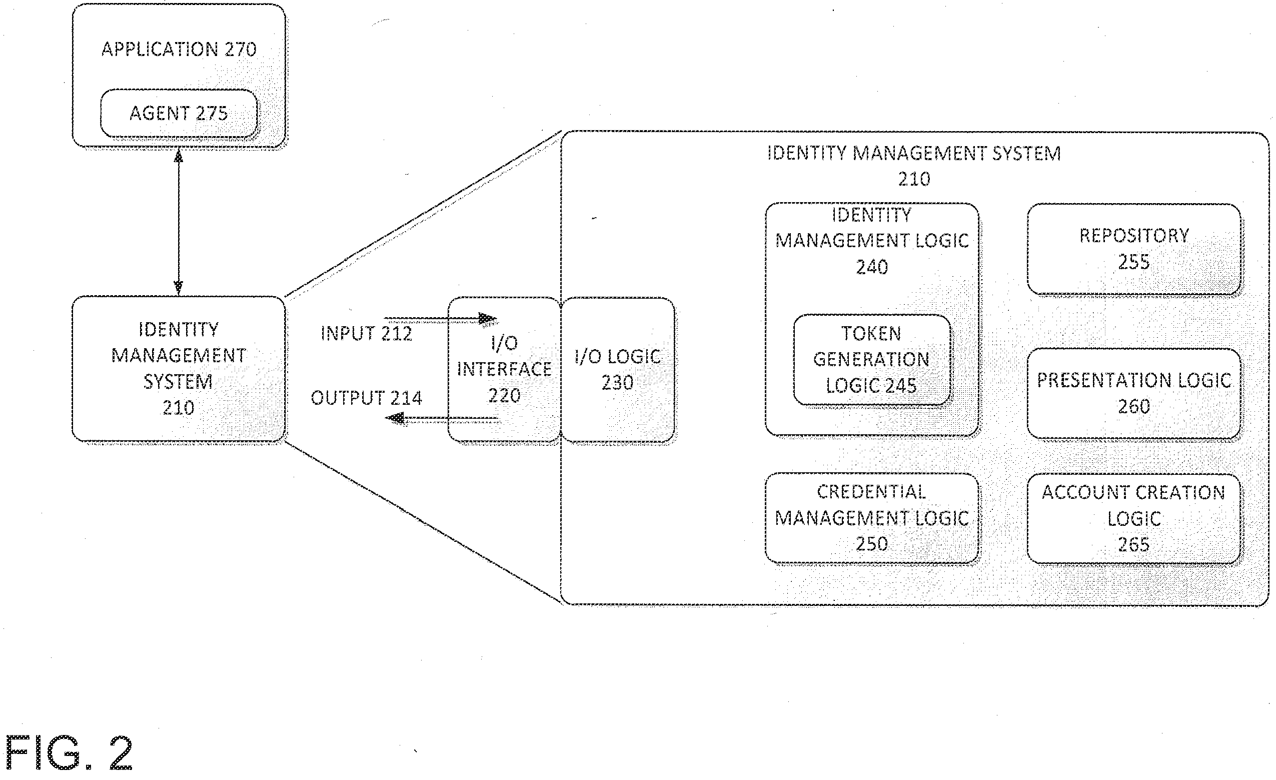

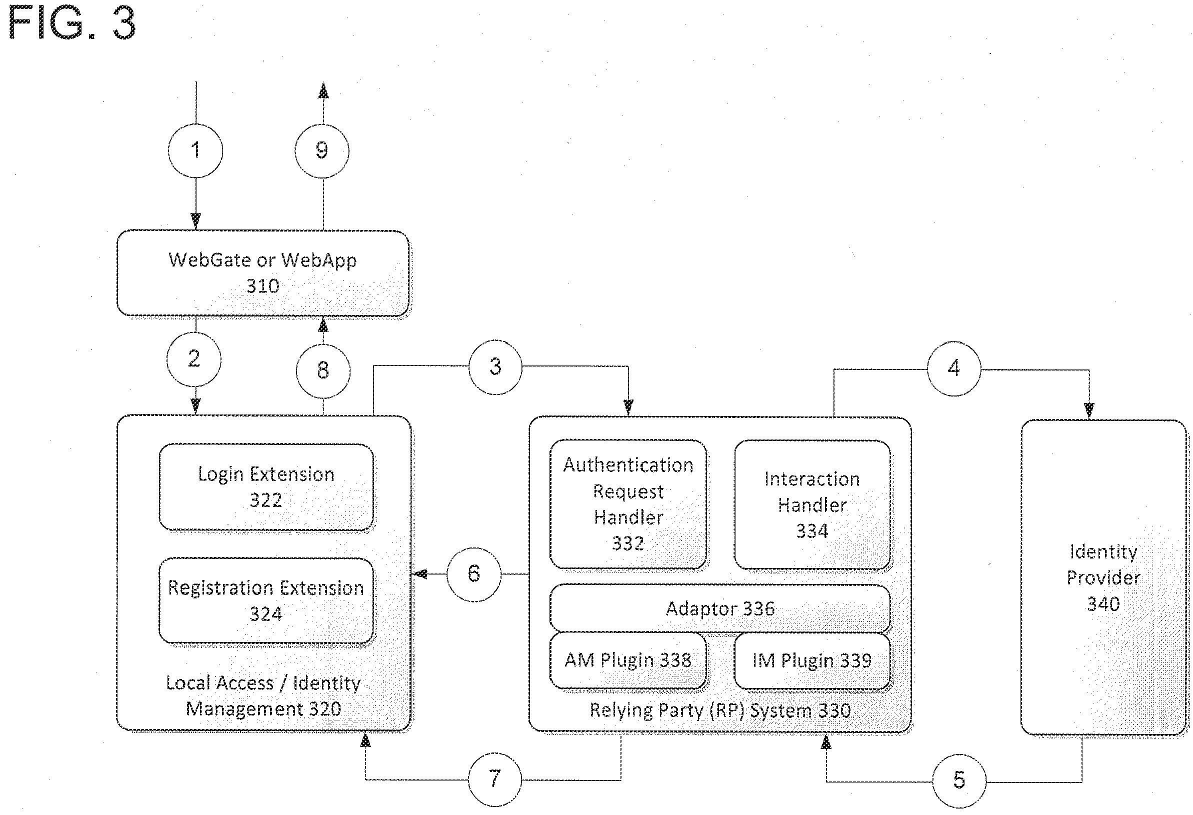

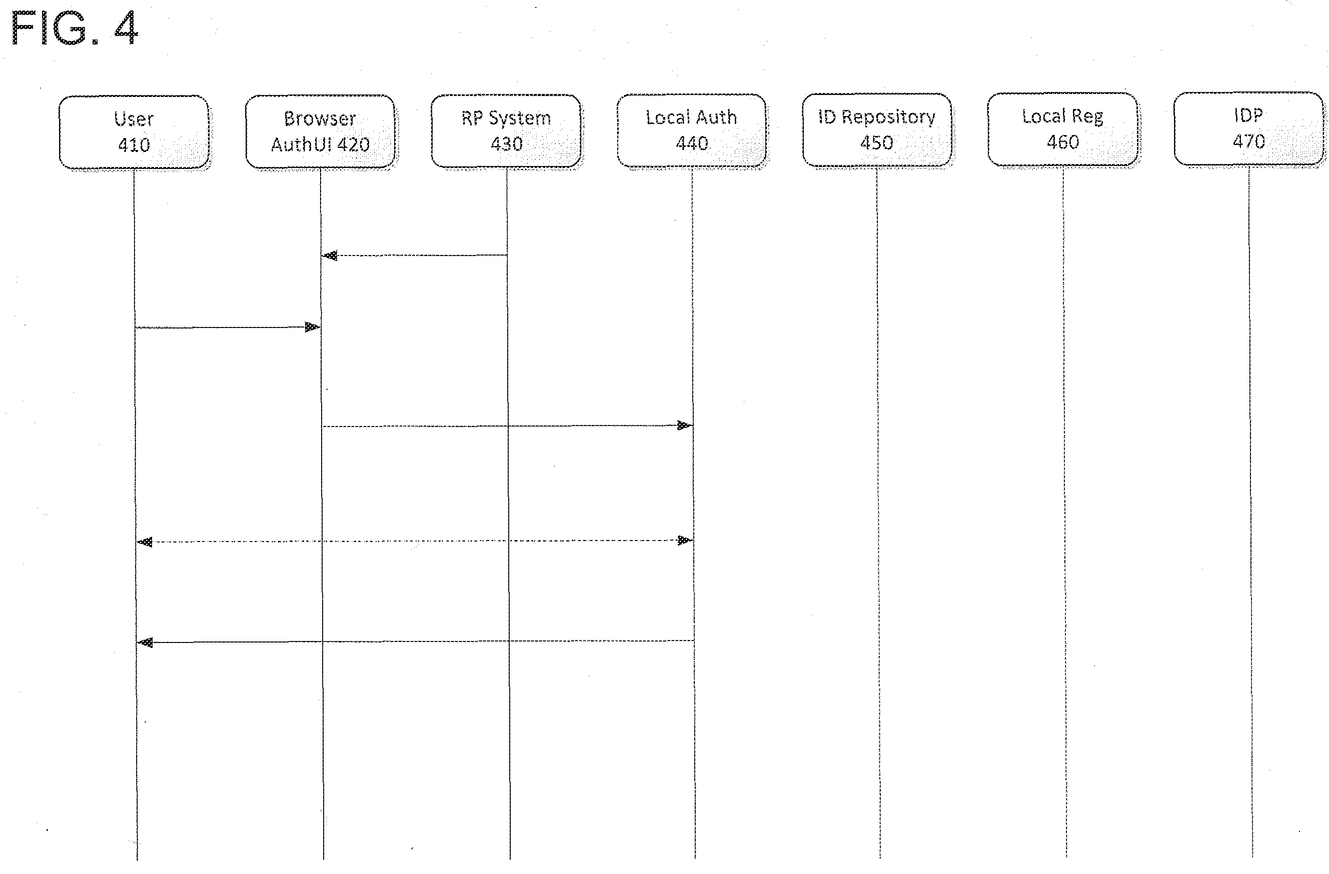

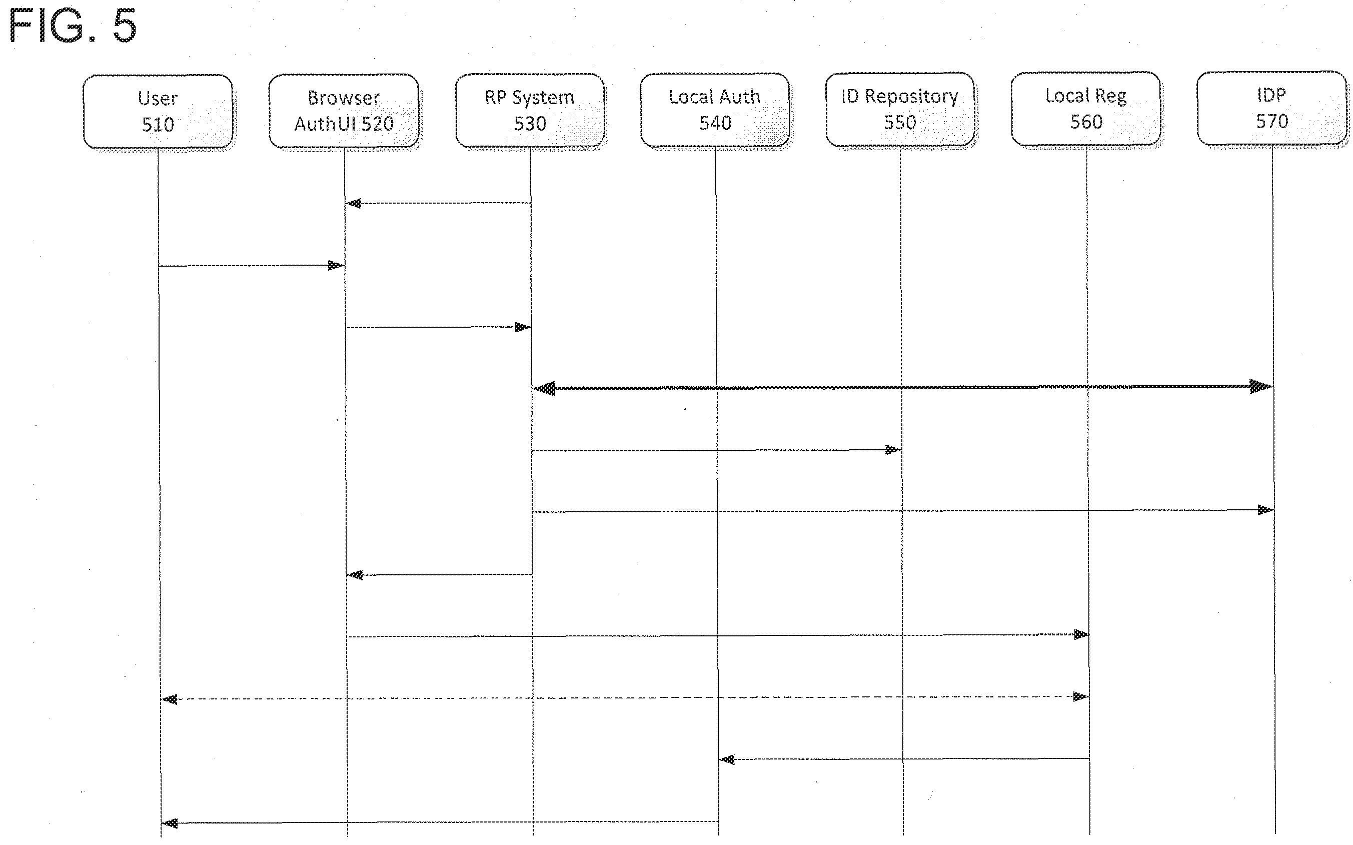

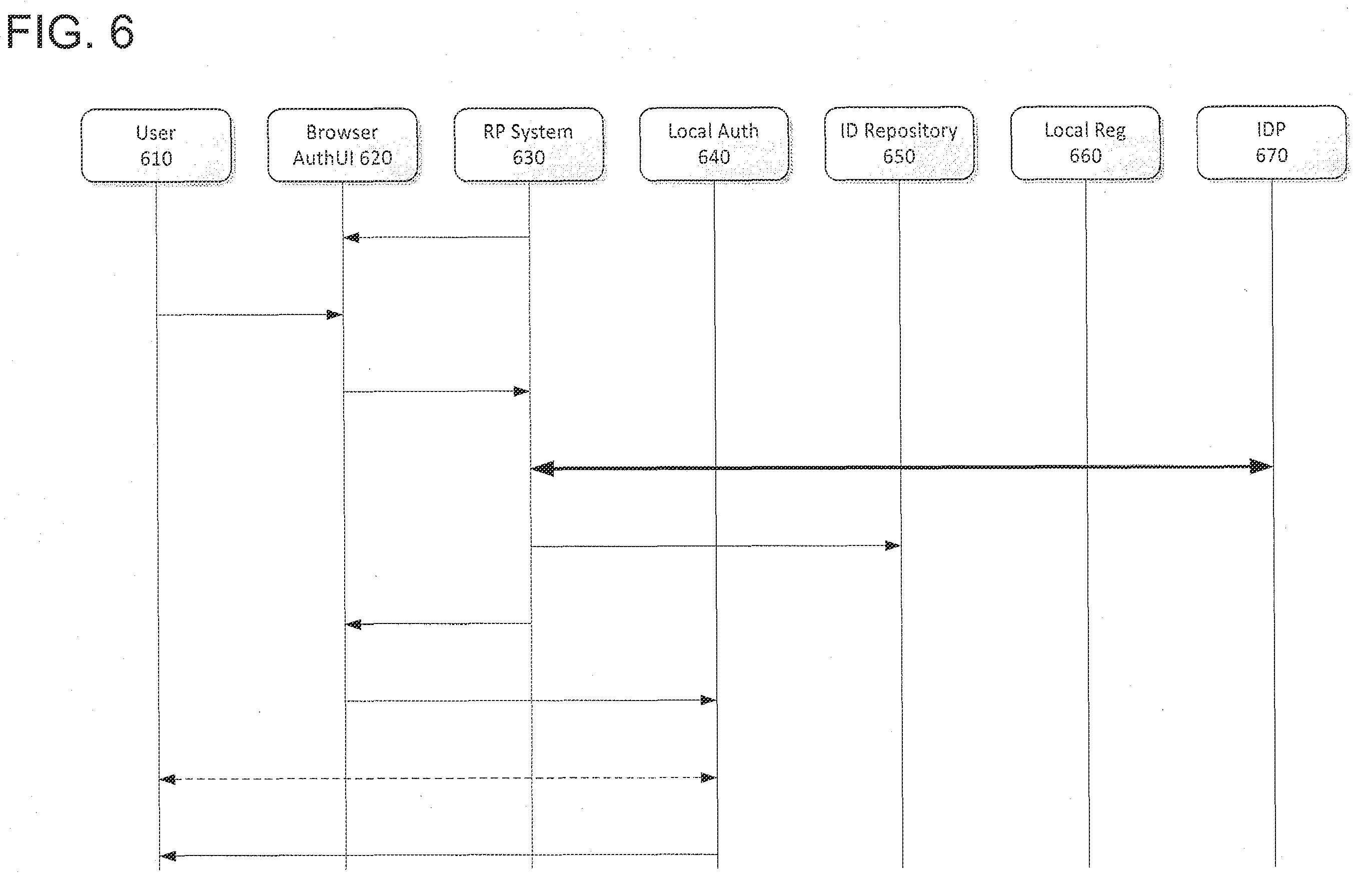

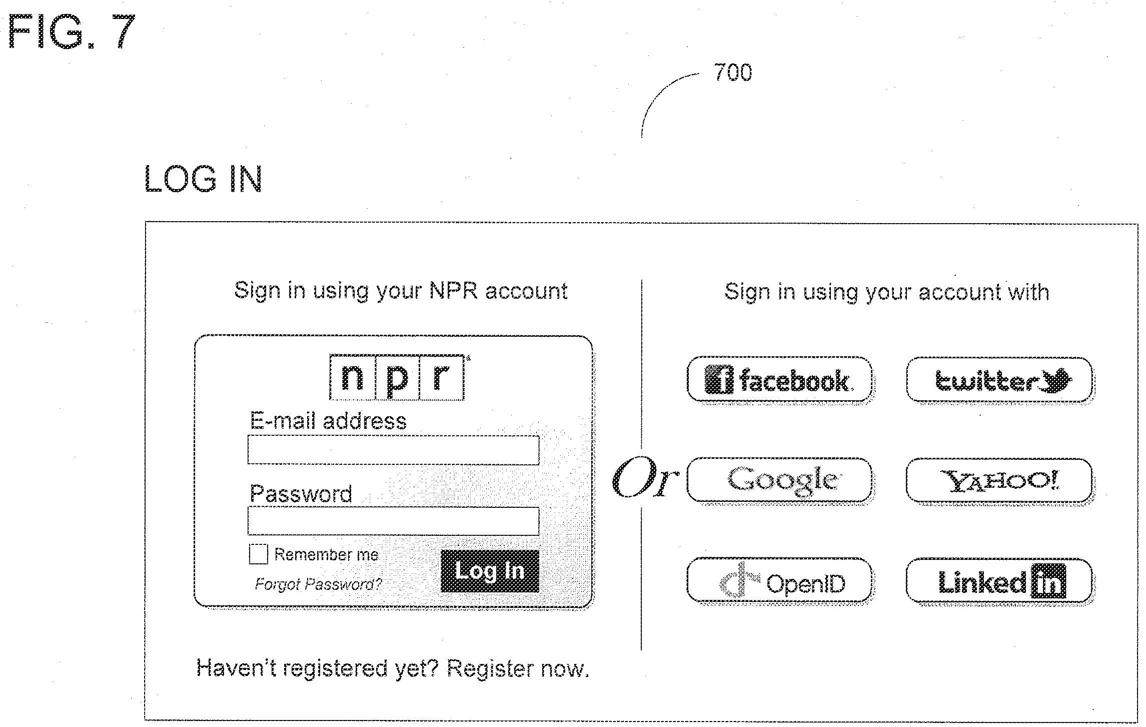

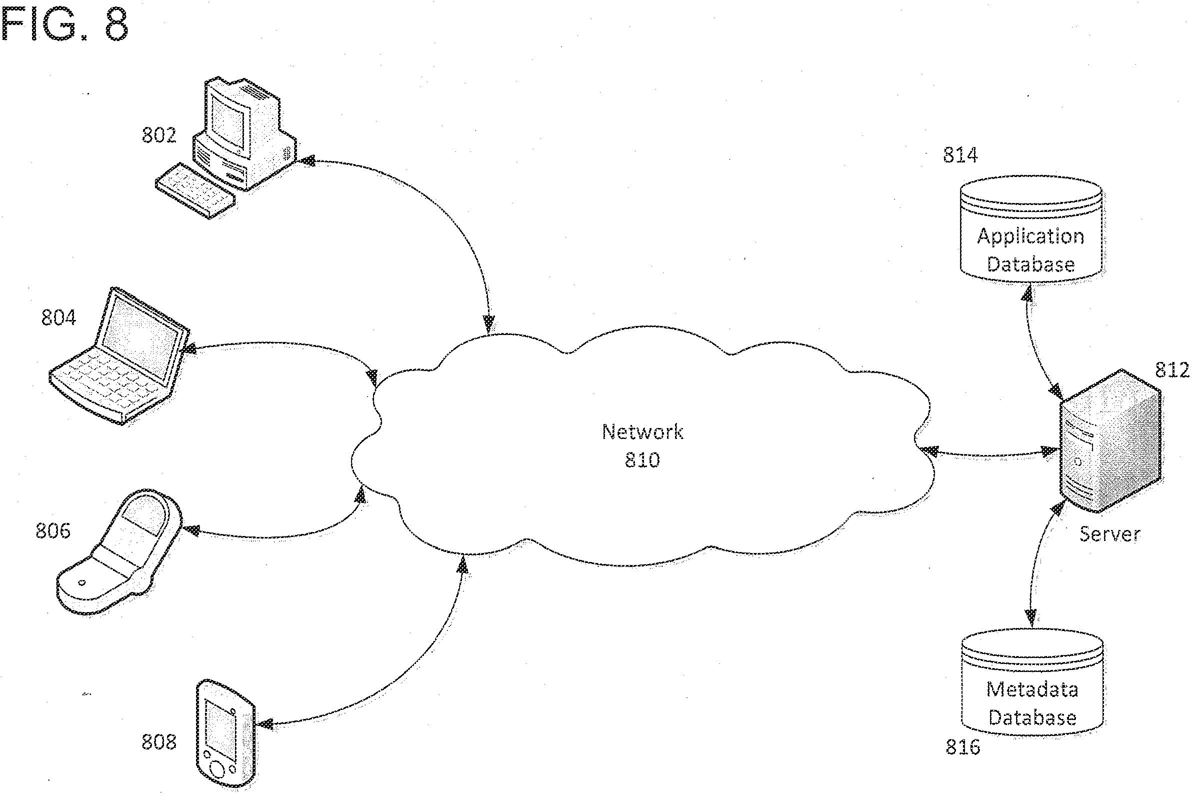

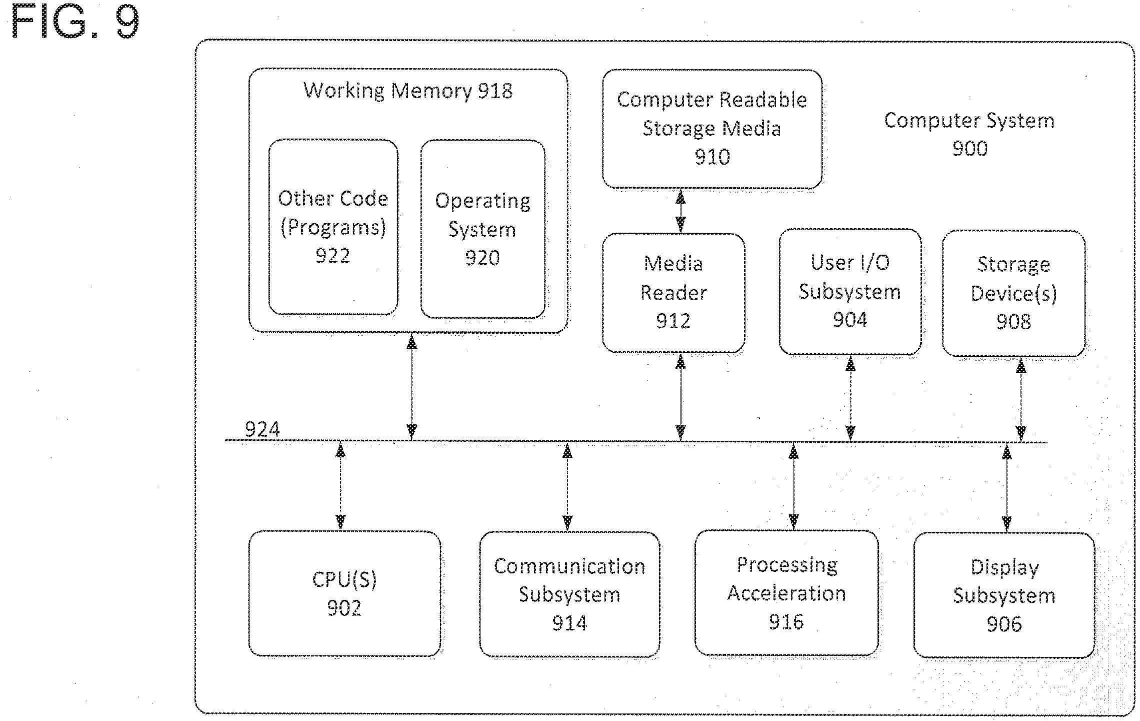

## Claims

1. A method comprising:
receiving, at an OAuth authorization server, from a first resource server, a first set of metadata indicating a first set of scopes that are recognized by the first resource server, each scope being indicative of a different set of operations that can be performed relative to a different set of resources stored on the first resource server;
in response to receiving the first set of metadata, storing, at the OAuth authorization server, mappings between scopes in the first set of scopes and subsets of resources maintained by the first resource server;
storing, at the OAuth authorization server, a mapping between a first access token and a first scope from the first set of scopes;
receiving, at the OAuth authorization server, from the first resource server, a request to validate the first access token;
in response to receiving the request to validate the first access token, the OAuth authorization server validating the first access token based on the mapping between the first access token and the first scope; and
in response to validating the first access token, the OAuth authorization server indicating, to the first resource server, that a client application that presented the first access token to the first resource server is authorized to perform operations relative to a set of resources that are maintained by the first resource server and specified by the first scope.

2. The method of claim 1, further comprising:
receiving, at the OAuth authorization server, a particular request specifying the first scope;
in response to receiving the request specifying the first scope, the OAuth authorization server asking an owner of resources contained within the first scope for consent to grant the client application access consistent with the first scope;
in response to receiving the consent from the owner, the OAuth authorization server (a) creating the first access token, (b) storing the mapping between the first access token and the first scope, and (c) sending the first access token to the client application.

3. The method of claim 1, further comprising:
in response to receiving the first set of metadata, storing, at the OAuth authorization server, a mapping between the first scope, a first subset of resources stored by the first resource server, and a first set of operations that a holder of a token mapped to the first scope is permitted to perform relative to resources in the first subset of resources.

4. The method of claim 1, wherein validating the first access token comprises the OAuth authorization server invoking programmatic code provided by a customer who does not provide the OAuth authorization server; wherein the programmatic code implements an interface provided to the customer by a provider of the OAuth authorization server; wherein the programmatic code validates the first access token.

5. The method of claim 1, further comprising:
receiving, at the OAuth authorization server, a particular request specifying the first scope;
in response to receiving the request specifying the first scope, the OAuth authorization server asking an owner of resources contained within the first scope for consent to grant the client application access consistent with the first scope;
in response to receiving the consent from the owner, the OAuth authorization server invoking programmatic code provided by a customer who does not provide the OAuth authorization server; wherein the programmatic code implements an interface provided to the customer by a provider of the OAuth authorization server; wherein the programmatic code creates the first access token.

6. The method of claim 1, further comprising:
receiving, at the OAuth authorization server, from a second resource server that is separate from the first resource server, a second set of metadata indicating a second set of scopes that are recognized by the second resource server, the second set of scopes differing from the first set of scopes;
in response to receiving the second set of metadata, storing, at the OAuth authorization server, mappings between scopes in the second set of scopes and subsets of resources maintained by the second resource server;
storing, at the OAuth authorization server, a mapping between a second access token and a second scope from the second set of scopes;
receiving, at the OAuth authorization server, from the second resource server, a request to validate the second access token;
in response to receiving the request to validate the second access token, the OAuth authorization server validating the second access token based on the mapping between the second access token and the second scope; and
in response to validating the second access token, the OAuth authorization server indicating, to the second resource server, that a client application that presented the second access token to the second resource server is authorized to perform operations relative to a set of resources that are maintained by the second resource server and specified by the second scope.

7. A computer-readable memory comprising instructions which, when executed by one or more processors, cause the one or more processors to perform:
receiving, at an OAuth authorization server, from a first resource server, a first set of metadata indicating a first set of scopes that are recognized by the first resource server, each scope being indicative of a different set of operations that can be performed relative to a different set of resources stored on the first resource server;
in response to receiving the first set of metadata, storing, at the OAuth authorization server, mappings between scopes in the first set of scopes and subsets of resources maintained by the first resource server;
storing, at the OAuth authorization server, a mapping between a first access token and a first scope from the first set of scopes;
receiving, at the OAuth authorization server, from the first resource server, a request to validate the first access token;
in response to receiving the request to validate the first access token, the OAuth authorization server validating the first access token based on the mapping between the first access token and the first scope; and
in response to validating the first access token, the OAuth authorization server indicating, to the first resource server, that a client application that presented the first access token to the first resource server is authorized to perform operations relative to a set of resources that are maintained by the first resource server and specified by the first scope.

8. The computer-readable memory of claim 7, wherein the instructions, when executed by the one or more processors, further cause the one or more processors to perform a method according to any of claims 2 to 6.

9. An OAuth authorization server comprising:
one or more hardware processors that are configured to receive, from a first resource server, a first set of metadata indicating a first set of scopes that are recognized by the first resource server, each scope being indicative of a different set of operations that can be performed relative to a different set of resources stored on the first resource server;
one or more hardware processors that are configured to store, in response to receiving the first set of metadata, mappings between scopes in the first set of scopes and subsets of resources maintained by the first resource server;
one or more hardware processors that are configured to store a mapping between a first access token and a first scope from the first set of scopes;
one or more hardware processors that are configured to receive, from the first resource server, a request to validate the first access token;
one or more hardware processors that are configured to validate the first access token based on the mapping between the first access token and the first scope in response to receiving the request to validate the first access token; and
one or more hardware processors that are configured to indicate, to the first resource server, in response to validating the first access token, that a client application that presented the first access token to the first resource server is authorized to perform operations relative to a set of resources that are maintained by the first resource server and specified by the first scope.

10. The OAuth authorization server of claim 9, further comprising:
one or more hardware processors configured to receive a particular request specifying the first scope;
one or more hardware processors configured to ask an owner of resources contained within the first scope for consent to grant the client application access consistent with the first scope in response to receiving the request specifying the first scope;
one or more hardware processors configured to (a) create the first access token, (b) store the mapping between the first access token and the first scope, and (c) send the first access token to the client application in response to receiving the consent from the owner.

11. The OAuth authorization server of claim 9, further comprising:
one or more hardware processors configured to store, in response to receiving the first set of metadata, a mapping between the first scope, a first subset of resources stored by the first resource server, and a first set of operations that a holder of a token mapped to the first scope is permitted to perform relative to resources in the first subset of resources.

12. The OAuth authorization server of claim 9, wherein one or more hardware processors are configured to validate the first access token at least in part by invoking programmatic code provided by a customer who does not provide the OAuth authorization server; wherein the programmatic code implements an interface provided to the customer by a provider of the OAuth authorization server; wherein the programmatic code is configured to validate the first access token.

13. The OAuth authorization server of claim 9, further comprising:
one or more hardware processors configured to receive, at the OAuth authorization server, a particular request specifying the first scope;
one or more hardware processors configured to ask an owner of resources contained within the first scope for consent to grant the client application access consistent with the first scope in response to receiving the request specifying the first scope;
one or more hardware processors configured to invoke programmatic code provided by a customer who does not provide the OAuth authorization server in response to receiving the consent from the owner; wherein the programmatic code implements an interface provided to the customer by a provider of the OAuth authorization server; wherein the programmatic code is configured to create the first access token.

14. The OAuth authorization server of claim 9, further comprising:
one or more hardware processors configured to receive, from a second resource server that is separate from the first resource server, a second set of metadata indicating a second set of scopes that are recognized by the second resource server, the second set of scopes differing from the first set of scopes;
one or more hardware processors configured to store, in response to receiving the second set of metadata, mappings between scopes in the second set of scopes and subsets of resources maintained by the second resource server;
one or more hardware processors configured to store a mapping between a second access token and a second scope from the second set of scopes;
one or more hardware processors configured to receive, from the second resource server, a request to validate the second access token;
one or more hardware processors configured to validate the second access token based on the mapping between the second access token and the second scope in response to receiving the request to validate the second access token; and
one or more hardware processors configured to indicate, to the second resource server, in response to validating the second access token, that a client application that presented the second access token to the second resource server is authorized to perform operations relative to a set of resources that are maintained by the second resource server and specified by the second scope.

## Patentansprüche

1. Verfahren, umfassend:
Empfangen, an einem OAuth-Autorisierungsserver, von einem ersten Ressourcenserver eines ersten Satzes von Metadaten, die einen ersten Satz von Bereichen anzeigen, die vom ersten Ressourcenserver erkannt werden, wobei jeder Bereich auf einen verschiedenen Satz von Operationen hindeutet, die betreffs einem verschiedenen Satz von Ressourcen ausgeführt werden können, die auf dem ersten Ressourcenserver gespeichert sind;
als Antwort auf den Empfang des ersten Satzes von Metadaten, Speichern, am OAuth-Autorisierungsserver, von Mappings zwischen Bereichen im ersten Satz von Bereichen und Untergruppen von Ressourcen, die vom ersten Ressourcenserver betreut werden;
Speichern, am OAuth-Autorisierungsserver, eins Mappings zwischen einem ersten Zugriffstoken und einem ersten Bereich aus dem ersten Satz von Bereichen;
Empfangen, am OAuth-Autorisierungsserver, vom ersten Ressourcenserver, einer Anforderung zum Validieren des ersten Zugriffstokens;
als Antwort auf den Empfang der Anforderung zum Validieren des ersten Zugriffstokens, validiert der OAuth-Autorisierungsserver das erste Zugriffstoken auf dem Mapping zwischen dem ersten Zugriffstoken und dem ersten Bereich basierend; und
als Antwort auf das Validieren des ersten Zugriffstokens, zeigt der OAuth-Autorisierungsserver, dem ersten Ressourcenserver, an, dass eine Client-Anwendung, die das erste Zugriffstoken dem ersten Ressourcenserver präsentierte, autorisiert ist, Operationen betreffs einem Satz von Ressourcen auszuführen, die vom ersten Ressourcenserver betreut werden und vom ersten Bereich spezifiziert sind.

2. Verfahren nach Anspruch 1, ferner umfassend:
Empfangen, am OAuth-Autorisierungsserver, einer speziellen Anforderung, die den ersten Bereich spezifiziert;
als Antwort auf den Empfang der den ersten Bereich spezifizierenden Anforderung, bittet der OAuth-Autorisierungsserver einen Eigentümer von Ressourcen, die innerhalb des ersten Bereichs enthalten sind, um Genehmigung der Client-Anwendung Zugriff zu gewähren, der in Einklang mit dem ersten Bereich ist;
als Antwort auf den Empfang der Genehmigung vom Eigentümer, erstellt der OAuth-Autorisierungsserver (a) das erste Zugriffstoken, speichert (b) das Mapping zwischen dem ersten Zugriffstoken und dem ersten Bereich, und sendet (c) das erste Zugriffstoken zur Client-Anwendung.

3. Verfahren nach Anspruch 1, ferner umfassend:
als Antwort auf den Empfang des ersten Satzes von Metadaten, Speichern, am OAuth-Autorisierungsserver, eines Mappings zwischen dem ersten Bereich, einer ersten Untergruppe von Ressourcen, die vom ersten Ressourcenserver gespeichert wurde und einem ersten Satz von Operationen, die ein Halter eines zum ersten Bereich gemappten Tokens betreffs Ressourcen in der ersten Untergruppe von Ressourcen ausführen darf.

4. Verfahren nach Anspruch 1, wobei das Validieren des ersten Zugriffstokens umfasst, dass der OAuth-Autorisierungsserver programmatischen Code aufruft, der von einem Kunden bereitgestellt wird, der den OAuth-Autorisierungsserver nicht bereitstellt wobei der programmatische Code eine Schnittstelle implementiert, die dem Kunden von einem Provider des OAuth-Autorisierungsservers bereitgestellt wurde; wobei der programmatische Code das erste Zugriffstoken validiert.

5. Verfahren nach Anspruch 1, ferner umfassend:
Empfangen, am OAuth-Autorisierungsserver, einer speziellen Anforderung, die den ersten Bereich spezifiziert;
als Antwort auf den Empfang der den ersten Bereich spezifizierenden Anforderung, bittet der OAuth-Autorisierungsserver einen Eigentümer von Ressourcen, die innerhalb des ersten Bereichs enthalten sind, um Genehmigung der Client-Anwendung Zugriff in Einklang mit dem ersten Bereich zu gewähren; als Antwort auf den Empfang der Genehmigung vom Eigentümer, ruft der OAuth-Autorisierungsserver einen programmatischen Code auf, der von einem Kunden bereitgestellt wurde, der den OAuth-Autorisierungsserver nicht bereitstellt; wobei der programmatische Code eine Schnittstelle implementiert, die dem Kunden von einem Provider des OAuth-Autorisierungsservers bereitgestellt wurde; wobei der programmatische Code das erste Zugriffstoken erstellt.

6. Verfahren nach Anspruch 1, ferner umfassend:
Empfangen, am OAuth-Autorisierungsserver, von einem zweiten Ressourcenserver, der getrennt vom ersten Ressourcenserver ist, eines zweiten Satzes von Metadaten, die einen zweiten Satz von Bereichen anzeigen, die vom zweiten Ressourcenserver erkannt werden, wobei sich der zweite Satz von Bereichen vom ersten Satz von Bereichen unterscheidet;
als Antwort auf den Empfang des zweiten Satzes von Metadaten, Speichern, am OAuth-Autorisierungsserver, von Mappings zwischen Bereichen im zweiten Satz von Bereichen und Untergruppen von Ressourcen, die vom zweiten Ressourcenserver betreut werden;
Speichern, am OAuth-Autorisierungsserver, eines Mappings zwischen einem zweiten Zugriffstoken und einem zweiten Bereich aus dem zweiten Satz von Bereichen;
Empfangen, am OAuth-Autorisierungsserver, vom zweiten Ressourcenserver, einer Anforderung zum Validieren des zweiten Zugriffstokens;
als Antwort auf den Empfang der Anforderung zum Validieren des zweiten Zugriffstokens, validiert der OAuth-Autorisierungsserver das zweite Zugriffstoken auf dem Mapping zwischen dem zweiten Zugriffstoken und dem zweiten Bereich basierend; und
als Antwort auf das Validieren des zweiten Zugriffstokens, zeigt der OAuth-Autorisierungsserver, dem zweiten Ressourcenserver, an, dass eine Client-Anwendung, die das zweite Zugriffstoken dem zweiten Ressourcenserver präsentierte, autorisiert ist, Operationen betreffs einem Satz von Ressourcen auszuführen, die vom zweiten Ressourcenserver betreut werden und vom zweiten Bereich spezifiziert sind.

7. Computerlesbarer Speicher, der Befehle umfasst, die, wenn von einem oder mehreren Prozessoren ausgeführt, bewirken, dass der eine oder mehrere Prozessoren durchführt:
Empfangen, an einem OAuth-Autorisierungsserver, von einem ersten Ressourcenserver eines ersten Satzes von Metadaten, die einen ersten Satz von Bereichen anzeigen, die vom ersten Ressourcenserver erkannt werden, wobei jeder Bereich auf einen verschiedenen Satz von Operationen hindeutet, die betreffs einem verschiedenen Satz von Ressourcen durchgeführt werden können, die auf dem ersten Ressourcenserver gespeichert sind;
als Antwort auf den Empfang des ersten Satzes von Metadaten, Speichern, am OAuth-Autorisierungsserver, von Mappings zwischen Bereichen im ersten Satz von Bereichen und Untergruppen von Ressourcen, die vom ersten Ressourcenserver betreut werden;
Speichern, am OAuth-Autorisierungsserver, eines Mappings zwischen einem ersten Zugriffstoken und einem ersten Bereich aus dem ersten Satz von Bereichen;
Empfangen, am OAuth-Autorisierungsserver, vom ersten Ressourcenserver, einer Anforderung zum Validieren des ersten Zugriffstokens;
als Antwort auf den Empfang der Anforderung zum Validieren des ersten Zugriffstokens, validiert der OAuth-Autorisierungsserver das erste Zugriffstoken auf dem Mapping zwischen dem ersten Zugriffstoken und dem ersten Bereich basierend; und
als Antwort auf das Validieren des ersten Zugriffstokens, zeigt der OAuth-Autorisierungsserver, dem ersten Ressourcenserver, an, dass eine Client-Anwendung, die das erste Zugriffstoken dem ersten Ressourcenserver präsentierte, autorisiert ist, Operationen betreffs einem Satz von Ressourcen auszuführen, die vom ersten Ressourcenserver betreut werden und vom ersten Bereich spezifiziert sind.

8. Computerlesbarer Speicher gemäß Anspruch 7, wobei die Befehle, wenn durch den einen oder mehrere Prozessoren ausgeführt, ferner bewirken, dass der eine oder mehrere der Prozessoren ein Verfahren gemäß einem der Ansprüche 2 bis 6 durchführen.

9. OAuth-Autorisierungsserver, umfassend:
einen oder mehrere Hardware-Prozessoren, die konfiguriert sind, von einem ersten Ressourcenserver, einen ersten Satz von Metadaten zu empfangen, die einen ersten Satz von Bereichen anzeigen, die vom ersten Ressourcenserver erkannt werden, wobei jeder Bereich auf einen verschiedenen Satz von Operationen hindeutet, die betreffs einem verschiedenen Satz von Ressourcen durchgeführt werden können, die auf dem ersten Ressourcenserver gespeichert sind;
einen oder mehrere Hardware-Prozessoren, die konfiguriert sind, als Antwort auf den ersten Satz von Metadaten, Mappings zwischen Bereichen im ersten Satz von Bereichen und Untergruppen von Ressourcen zu speichern, die vom ersten Ressourcenserver betreut werden;
einen oder mehrere Hardware-Prozessoren, die konfiguriert sind, ein Mapping zwischen einem ersten Zugriffstoken und einem ersten Bereich vom ersten Satz von Bereichen zu speichern;
einen oder mehrere Hardware-Prozessoren, die konfiguriert sind, vom ersten Ressourcenserver, eine Anforderung zum Validieren des ersten Zugriffstokens zu empfangen;
einen oder mehrere Hardware-Prozessoren, die konfiguriert sind, den ersten Zugriffstoken, auf dem Mapping zwischen dem ersten Zugriffstoken und dem ersten Bereich basierend, als Antwort auf den Empfang der Anforderung zum Validieren des ersten Zugriffstokens, zu validieren; und
einen oder mehrere Hardware-Prozessoren, die konfiguriert sind, dem ersten Ressourcenserver, als Antwort auf das Validieren des ersten Zugriffstokens, anzuzeigen, dass eine Client-Anwendung, die dem ersten Ressourcenserver den ersten Zugriffstoken präsentierte, autorisiert ist, Operationen betreffs einem Satz von Ressourcen durchzuführen, die vom ersten Ressourcenserver betreut werden und vom ersten Bereich spezifiziert sind.

10. OAuth-Autorisierungsserver gemäß Anspruch 9, ferner umfassend:
einen oder mehrere Hardware-Prozessoren, die konfiguriert sind, eine spezielle, den ersten Bereich spezifizierende, Anforderung zu empfangen;
einen oder mehrere Hardware-Prozessoren, die konfiguriert sind, einen Eigentümer von Ressourcen, die innerhalb des ersten Bereichs für Genehmigung enthalten sind, zu bitten, der Client-Anwendung Zugriff in Einklang mit dem ersten Bereich als Antwort auf den Empfang der Anforderung zu gewähren, die den ersten Bereich spezifiziert; eine oder mehrere Hardware-Prozessoren, die konfiguriert sind, (a) das erste Zugriffstoken zu erstellen, (b) das Mapping zwischen dem ersten Zugriffstaken und dem ersten Bereich zu speichern und (c) das erste Zugriffstoken, als Antwort auf den Empfang der Genehmigung vom Eigentümer, an die Client-Anwendung zu senden.

11. OAuth-Autorisierungsserver gemäß Anspruch 9, ferner umfassend:
einen oder mehrere Hardware-Prozessoren zum Speichern, als Antwort auf den Empfang des ersten Satzes von Metadaten, eines Mappings zwischen dem ersten Bereich, einer ersten Untergruppe von Ressourcen, die vom ersten Ressourcenserver gespeichert wurde und einem ersten Satz von Operationen, die ein Halter eines zum ersten Bereich gemappten Tokens betreffs Ressourcen in der ersten Untergruppe von Ressourcen ausführen darf.

12. OAuth-Autorisierungsserver gemäß Anspruch 9, wobei einer oder mehrere Hardware-Prozessoren konfiguriert sind, das erste Zugriffstoken wenigstens teilweise durch Aufrufgen von programmatischen Code zu validieren, der von einem Kunden bereitgestellt wird, der den OAuth-Autorisierungsserver nicht bereitstellt; wobei der programmatische Code eine Schnittstelle implementiert, die dem Kunden von einem Provider des OAuth-Autorisierungsservers bereitgestellt wird; wobei der programmatische Code ikonfiguriert ist, das erste Zugriffstoken zu validieren.

13. OAuth-Autorisierungsserver gemäß Anspruch 9, ferner umfassend:
einen oder mehrere Hardware-Prozessoren, die konfiguriert sind, am OAuth-Autorisierungsserver, eine spezielle den ersten Bereich spezifizierende Anforderung zu empfangen;
einen oder mehrere Hardware-Prozessoren, die konfiguriert sind, einen Eigentümer von Ressourcen, die innerhalb des ersten Bereichs für Genehmigung enthalten sind, zu bitten, einer Client-Anwendung Zugriff, der in Einklang mit dem ersten Bereich ist, als Antwort auf den Empfang der Anforderung zu gewähren, die den ersten Bereich spezifiziert;
einen oder mehrere Hardware-Prozessoren, die konfiguriert sind, programmatischen Code aufzurufen, der von einem Kunden bereitgestellt wird, der, als Antwort auf den Empfang der Genehmigung vom Eigentümer, den OAuth-Autorisierungsserver nicht bereitstellt; wobei der programmatische Code eine Schnittstelle implementiert, die dem Kunden von einem Provider des OAuth-Autorisierungsservers bereitgestellt wird; wobei der programmatische Code konfiguriert ist, das erste Zugriffstoken zu erstellen.

14. OAuth-Autorisierungsserver gemäß Anspruch 9, ferner umfassend:
einen oder mehrere Hardware-Prozessoren, die konfiguriert sind, von einem zweiten Ressourcenserver, der getrennt vom ersten Ressourcenserver ist, einen zweiten Satz von Metadaten zu empfangen, die einen zweiten Satz von Bereichen anzeigen, die vom zweiten Ressourcenserver erkannt werden, wobei sich der zweite Satz von Bereichen vom ersten Satz von Bereichen unterscheidet;
einen oder mehrere Hardware-Prozessoren, die konfiguriert sind, als Antwort auf den zweiten Satz von Metadaten, Mappings zwischen Bereichen im zweiten Satz von Bereichen und Untergruppen von Ressourcen zu speichern, die vom zweiten Ressourcenserver betreut werden;
einen oder mehrere Hardware-Prozessoren, die konfiguriert sind, ein Mapping zwischen einem zweiten Zugriffstoken und einem zweiten Bereich vom zweiten Satz von Bereichen zu speichern;
einen oder mehrere Hardware-Prozessoren, die konfiguriert sind, vom zweiten Ressourcenserver, eine Anforderung zum Validieren des zweiten Zugriffstokens zu empfangen;
einen oder mehrere Hardware-Prozessoren, die konfiguriert sind, den zweiten Zugriffstoken, auf dem Mapping zwischen dem zweiten Zugriffstoken und dem zweiten Bereich basierend, als Antwort auf den Empfang der Anforderung zum Validieren des zweiten Zugriffstokens, zu validieren; und
einen oder mehrere Hardware-Prozessoren, die konfiguriert sind, dem zweiten Ressourcenserver, als Antwort auf das Validieren des zweiten Zugriffstokens, anzuzeigen, dass eine Client-Anwendung, die dem zweiten Ressourcenserver den zweiten Zugriffstoken präsentierte, autorisiert ist, Operationen betreffs einem Satz von Ressourcen durchzuführen, die vom zweiten Ressourcenserver betreut werden und vom zweiten Bereich spezifiziert sind.

## Revendications

1. Procédé comprenant les étapes consistant à :
recevoir, auprès d'un serveur d'autorisation OAuth, à partir d'un premier serveur de ressources, un premier ensemble de métadonnées indiquant un premier ensemble de scopes (*paramètres définissant la portée des droits de la demande d'autorisation*) qui sont reconnus par le premier serveur de ressources, chaque scope étant indicateur d'un différent ensemble d'opérations qui peuvent être effectuées relativement à un différent ensemble de ressources stockées dans le premier serveur de ressources ;
en réponse à la réception du premier ensemble de métadonnées, stocker, auprès du serveur d'autorisation OAuth, des correspondances entre les scopes dans le premier ensemble de scopes et des sous-ensembles de ressources que maintient le premier serveur de ressources ;
stocker, auprès du serveur d'autorisation OAuth, une correspondance entre un premier jeton d'accès et un premier scope issu du premier ensemble de scopes,
recevoir, auprès du serveur d'autorisation OAuth, à partir du premier serveur de ressources, une requête de validation du premier jeton d'accès ;
en réponse à la réception de la requête de validation du premier jeton d'accès, le serveur d'autorisation OAuth valide le premier jeton d'accès sur la base de la correspondance entre le premier jeton d'accès et le premier scope ; et
en réponse à la validation du premier jeton d'accès, le serveur d'autorisation OAuth indique, au premier serveur de ressources, qu'une application client qui a présenté le premier jeton d'accès au premier serveur de ressources est autorisée à exécuter des opérations relativement à un ensemble de ressources que maintient le premier serveur de ressources et que le premier scope a spécifié.

2. Procédé de la revendication 1, comprenant en outre les étapes consistant à:
recevoir, auprès du serveur d'autorisation OAuth, une requête particulière spécifiant le premier scope ;
en réponse à la réception de la requête spécifiant le premier scope, le serveur d'autorisation OAuth demande à un titulaire de ressources contenu dans le premier scope la permission d'autoriser à l'application client un accès en concordance avec le premier scope ;
en réponse à la réception de l'autorisation du titulaire, le serveur d'autorisation OAuth (a) crée le premier jeton d'accès, (b) stocke la correspondance entre le premier jeton d'accès et le premier scope, et (c) envoie le premier jeton d'accès à l'application client.

3. Procédé de la revendication 1, comprenant en outre les étapes suivantes :
en réponse à la réception du premier ensemble de métadonnées, stocker, auprès d'un serveur d'autorisation OAuth, une correspondance entre le premier scope, un premier sous-ensemble de ressources stocké par le premier serveur de ressources, et un premier ensemble d'opérations qu'un titulaire d'un jeton mis en correspondance avec le premier scope est autorisée à exécuter relativement aux ressources contenues dans le premier sous-ensemble de ressources.

4. Procédé de la revendication 1, dans lequel la validation du premier jeton d'accès comprend l'invocation par le serveur d'autorisation OAuth d'un code programmatique fourni par un client qui ne fournit pas le serveur d'autorisation OAuth ; dans lequel le code programmatique implémente une interface fournie au client par un prestataire du serveur d'autorisation OAuth ; dans lequel le code programmatique valide le premier jeton d'accès.

5. Procédé de la revendication 1, comprenant en outre les étapes consistant à:
recevoir, auprès d'un serveur d'autorisation OAuth, une requête particulière spécifiant le premier scope ;
en réponse à la réception de la requête spécifiant le premier scope, le serveur d'autorisation OAuth demande à un titulaire de ressources contenu dans le premier scope l'autorisation de donner à l'application client un accès en concordance avec le premier scope ;
en réponse à la réception de l'autorisation du titulaire, le serveur d'autorisation OAuth invoque un code programmatique fourni par un client qui ne fournit pas le serveur d'autorisation OAuth ; dans lequel le code programmatique implémente une interface fournie au client par un prestataire du serveur d'autorisation OAuth ; dans lequel le code programmatique crée le premier jeton d'accès.

6. Procédé de la revendication 1, comprenant en outre les étapes consistant à:
recevoir, auprès d'un serveur d'autorisation OAuth, à partir d'un second serveur de ressources qui est séparé du premier serveur de ressources, un second ensemble de métadonnées indiquant un second ensemble de scopes qui sont reconnus par le second serveur de ressources, le second ensemble de scopes étant différent du premier ensemble de scopes ;
en réponse à la réception du second ensemble de métadonnées, stocker, auprès du serveur d'autorisation OAuth, des correspondances entre les scopes dans le second ensemble de scopes et des sous-ensembles de ressources que maintient le second serveur de ressources ;
stocker, auprès du serveur d'autorisation OAuth, une correspondance entre un second jeton d'accès et un second scope issu du second ensemble de scopes ;
recevoir, auprès du serveur d'autorisation OAuth, à partir du second serveur de ressources, une requête de validation du second jeton d'accès ;
en réponse à la réception de la requête de validation du second jeton d'accès, le serveur d'autorisation OAuth valide le second jeton d'accès sur la base de la correspondance entre le second jeton d'accès et le second scope ; et
en réponse à la validation du second jeton d'accès, le serveur d'autorisation OAuth indique, au second serveur de ressources, qu'une application client qui a présenté le second jeton d'accès au second serveur de ressources est autorisée à exécuter des opérations relativement à un ensemble de ressources que maintient le second serveur de ressources et que le second scope a spécifié.

7. Mémoire lisible par ordinateur comprenant des instructions qui, lorsqu'elles sont exécutées par un ou plusieurs processeurs, incite ledit un processeur ou plusieurs à exécuter :
la réception, auprès d'un serveur d'autorisation OAuth, à partir d'un premier serveur de ressources, d'un premier ensemble de métadonnées indiquant un premier ensemble de scopes qui sont reconnus par le premier serveur de ressources, chaque scope étant indicateur d'un différent ensemble d'opérations qui peuvent être exécutées relativement à un différent ensemble de ressources stockées dans le premier serveur de ressources ;
en réponse à la réception du premier ensemble de métadonnées, le stockage, auprès d'un serveur d'autorisation OAuth, des correspondances entre les scopes dans le premier ensemble de scopes et des sous-ensembles de ressources que maintient le premier serveur de ressources.
le stockage, auprès du serveur d'autorisation OAuth, d'une correspondance entre un premier jeton d'accès et un premier scope provenant du premier ensemble de scopes ;
la réception, auprès d'un serveur d'autorisation OAuth, à partir du premier serveur de ressources, d'une requête de validation du premier jeton d'accès ;
en réponse à la réception de la requête de validation du premier jeton d'accès, la validation par le serveur d'autorisation OAuth du premier jeton d'accès sur la base de la correspondance entre le premier jeton d'accès et le premier scope ; et
en réponse à la validation du premier jeton d'accès, l'indication par le serveur d'autorisation OAuth, au premier serveur de ressources, qu'une application client qui a présenté le premier jeton d'accès au premier serveur de ressources est autorisée à exécuter des opérations relativement à un ensemble de ressources que maintient le premier serveur de ressources et que le premier scope a spécifié.

8. Mémoire lisible par ordinateur selon la revendication 7, dans laquelle les instructions, lorsqu'elles sont exécutées par ledit un processeur ou plusieurs, induit en outre ledit un processeur ou plusieurs à exécuter un procédé selon l'une quelconque des revendications 2 à 6.

9. Serveur d'autorisation OAuth comprenant :
un ou plusieurs processeurs câblés qui sont configurés pour recevoir, à partir d'un premier serveur de ressources, un premier ensemble de métadonnées indiquant un premier ensemble de scopes qui sont reconnus par le premier serveur de ressources, chaque scope étant indicateur d'un différent ensemble d'opérations qui peuvent être exécutées relativement à un différent ensemble de ressources stockées sur le premier serveur de ressources ;
un ou plusieurs processeurs câblés qui sont configurés pour stocker, en réponse à la réception du premier ensemble de métadonnées, des correspondances entre les scopes dans le premier ensemble de scopes et des sous-ensembles de ressources que maintient le premier serveur de ressources ;
un ou plusieurs processeurs câblés qui sont configurés pour stocker une correspondance entre un premier jeton d'accès et un premier scope issu du premier ensemble de scopes ;
un ou plusieurs processeurs câblés qui sont configurés pour recevoir, à partir du premier serveur de ressources, une requête de validation du premier jeton d'accès ;
un ou plusieurs processeurs câblés qui sont configurés pour valider le premier jeton d'accès sur la base de la correspondance entre le premier jeton d'accès et le premier scope en réponse à la réception de la requête de validation du premier jeton d'accès ; et
un ou plusieurs processeurs câblés qui sont configurés pour indiquer, au premier serveur de ressources, en réponse à la validation du premier jeton d'accès, qu'une application client qui a présenté le premier jeton d'accès au premier serveur de ressources est autorisée à exécuter des opérations relativement à un ensemble de ressources que maintient le premier serveur de ressources et que le premier scope a spécifié.

10. Serveur d'autorisation OAuth de la revendication 9, comprenant en outre :
un ou plusieurs processeurs câblés configurés pour recevoir une requête particulière spécifiant le premier scope ;
un ou plusieurs processeurs configurés pour demander à un titulaire de ressources contenu dans le premier scope la permission de donner à l'application client un accès en concordance avec le premier scope en réponse à la réception de la requête spécifiant le premier scope ;
un ou plusieurs processeurs câblés configurés pour (a) créer le premier jeton d'accès, (b) stocker la correspondance entre le premier jeton d'accès et le premier scope, et (c) envoyer le premier jeton d'accès à l'application client en réponse à la réception de l'autorisation du titulaire.

11. Serveur d'autorisation d'accès OAuth de la revendication 9, comprenant en outre :
un ou plusieurs processeurs câblés configurés pour stocker, en réponse à la réception du premier ensemble de métadonnées, une correspondance entre le premier scope, un premier ensemble de ressources stockées par le premier serveur de ressources, et un premier ensemble d'opérations qu'un titulaire d'un jeton mis en correspondance avec le premier scope est autorisé à exécuter relativement aux ressources contenues dans le premier sous-ensemble de ressources.

12. Serveur d'autorisation OAuth de la revendication 9, dans lequel un ou plusieurs processeurs câblés sont configurés pour valider au moins en partie le premier jeton d'accès en invoquant un code programmatique fourni par un client qui ne fournit pas le serveur d'autorisation OAuth ; dans lequel le code programmatique implémente une interface fournie au client par un prestataire du serveur d'autorisation OAuth ; dans lequel le code programmatique est configuré pour valider le premier jeton d'accès.

13. Serveur d'autorisation OAuth de la revendication 9, comprenant en outre :
un ou plusieurs processeurs câblés configurés pour recevoir, auprès d'un serveur d'autorisation OAuth, une requête particulière spécifiant le premier scope ;
un ou plusieurs processeurs câblés configurés pour demander à un titulaire de ressources contenu dans le premier scope l'autorisation de donner à l'application client un accès en concordance avec le premier scope en réponse à la réception de la requête spécifiant le premier scope ;
un ou plusieurs processeurs câblés configurés pour invoquer le code programmatique fourni par un client qui ne fournit pas le serveur d'autorisation OAuth en réponse à la réception de l'autorisation du titulaire ; dans lequel le code programmatique implémente une interface fournie au client par un prestataire du serveur d'autorisation OAuth ; dans lequel le code programmatique est configuré pour créer le premier jeton d'accès.

14. Serveur d'autorisation OAuth de la revendication 9, comprenant :
un ou plusieurs processeurs câblés configurés pour recevoir, à partir d'un second serveur de ressources qui est séparé du premier serveurs de ressources, un second ensemble de métadonnées indiquant un second ensemble de scopes qui sont reconnus par le second serveur de ressources, le second ensemble de scopes étant différent du premier ensemble de scopes ;
un ou plusieurs processeurs câblés configurés pour stocker, en réponse à la réception du second ensemble de métadonnées, des correspondances entre les scopes dans le second ensemble de scopes et des sous-ensembles de ressources que maintient le second serveur de ressources ;
un ou plusieurs processeurs câblés configurés pour stocker une correspondance entre un second jeton d'accès et un second scope du second ensemble de scopes ;
un ou plusieurs processeurs câblés configurés pour recevoir, à partir du second serveur de ressources, une requête de validation du second jeton d'accès ;
un ou plusieurs processeurs configurés pour valider le second jeton d'accès sur la base d'une correspondance entre le second jeton d'accès et le second scope en réponse à la réception d'une requête de validation du second jeton d'accès ; et
un ou plusieurs processeurs câblés configurés pour indiquer, au second serveur de ressources, en réponse à la validation du second jeton d'accès, qu'une application client qui a présenté le second jeton d'accès au second serveur de ressources est autorisée à exécuter des opérations relativement à un ensemble de ressources que maintient le second serveur de ressources et que le second scope a spécifié.
